(19) Europäisches Patentamt
European Patent Office
Office européen des brevets

(11) **EP 2 389 609 B1**

(12) **EUROPÄISCHE PATENTSCHRIFT**

(45) Veröffentlichungstag und Bekanntmachung des Hinweises auf die Patenterteilung:
**26.12.2012 Patentblatt 2012/52**

(21) Anmeldenummer: **09795329.3**

(22) Anmeldetag: **09.12.2009**

(51) Int Cl.:
*G02C 7/06* (2006.01)    *G02C 7/02* (2006.01)

(86) Internationale Anmeldenummer:
**PCT/EP2009/008812**

(87) Internationale Veröffentlichungsnummer:
**WO 2010/083860 (29.07.2010 Gazette 2010/30)**

(54) **AUTOMATISCHE GLEITSICHTGLASDESIGNMODIFIKATION**

AUTOMATIC MODIFICATION OF A PROGRESSIVE LENS DESIGN

MODIFICATION AUTOMATIQUE DU DESIGN D'UN VERRE OPHTALMIQUE PROGRESSIF

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **20.01.2009 DE 102009005214**

(43) Veröffentlichungstag der Anmeldung:
**30.11.2011 Patentblatt 2011/48**

(73) Patentinhaber: **Rodenstock GmbH**
**80687 München (DE)**

(72) Erfinder:
• **ALTHEIMER, Helmut**
**87650 Baisweil-Lauchdorf (DE)**
• **BECKEN, Wolfgang**
**81541 München (DE)**
• **ESSER, Gregor**
**81735 München (DE)**
• **UTTENWEILER, Dietmar**
**82057 Icking (DE)**
• **WELK, Andrea**
**81547 München (DE)**

(74) Vertreter: **Müller-Boré & Partner**
**Patentanwälte**
**Grafinger Straße 2**
**81671 München (DE)**

(56) Entgegenhaltungen:
EP-A1- 0 880 046        WO-A1-2004/086125
WO-A1-2007/004070       WO-A1-2008/089995
WO-A1-2008/089996       US-A1- 2006 050 236

**Beschreibung**

Die Erfindung betrifft ein Verfahren zum Berechnen eines progressiven Brillenglasdesigns, ein Verfahren zum Herstellen eines progressiven Brillenglases, entsprechende Vorrichtungen zum Berechnen eines progressiven Brillenglasdesigns und zum Herstellen eines progressiven Brillenglases, entsprechende Computerprogrammerzeugnisse und Speichermedien sowie eine Verwendung eines Brillenglases.

Die Berechnung und Optimierung von Gleitsichtbrillengläsern in der jeweiligen Gebrauchsstellung bzw. Gebrauchssituation hat mittlerweile einen hohen technischen und optischen Standard erreicht. So können nach dem Stand der Technik Gleitsichtbrillengläser unter Berücksichtigung der individuellen Verordnung (sph, Zyl, Achse, Add, Prisma, Basis) und der individuellen Lage bzw. Anordnung der Gläser vor dem Auge des Brillenträgers (z.B. Hornhautscheitelabstand (HSA), Fassungsscheibenwinkel (FSW), Vorneigung bzw. pantoskopischer Winkel) und Berücksichtigung von physiologischen Parametern (z.B. Pupillendistanz) online nach Bestelleingang als Unikat optimiert und berechnet werden. Der Kunde kann jedoch in der Regel nur aus wenigen (meistens 2) Brillenglasdesigns, welche sich insbesondere lediglich durch die Progressionslänge unterscheiden, auswählen.

Nach dem Stand der Technik werden ferner für jedes neu zu entwickelnde Design und speziell auch für jede Progressionszonenlänge eigene Sollvorgaben (Designs) erarbeitet und hinterlegt. So werden neben den Universalgleitsichtgläsern auch für diverse Spezialgleitsichtgläser Designs entwickelt, die sich häufig im wesentlichen nur bezüglich der Hauptssehaufgaben und damit bezüglich der Hauptblickrichtungen im Fern- und im Nahbereich unterscheiden. In der WO 2001/057584 wird deswegen vorgeschlagen, das Design für unterschiedliche Anwendungen (Autofahrer, Pilot, Uhrmacher, etc.) direkt vorzugeben. Doch auch mit diesem sehr aufwendigen Vorgehen bezüglich der Designverarbeitung, bezüglich der Logistik der vielen unterschiedlichen Designs beim Hersteller und auch bezüglich der notwendigen Produktschulungen beim Augenoptiker kann vielfach auf die individuellen Benutzersituationen mit diesen Standarddesigns nicht zufriedenstellend reagiert werden.

Eine Aufgabe der Erfindung ist es, ein schnelles, effizientes und flexibles Verfahren zum Berechnen eines Brillenglasdesigns sowie ein Verfahren zur Herstellung eines Brillenglases nach dem berechneten Brillenglasdesign bereitzustellen. Es ist ferner eine Aufgabe der Erfindung, eine entsprechende Vorrichtung zum Herstellen eines Brillenglases sowie entsprechende Computerprogrammerzeugnisse und Speichermedien bereitzustellen. Ferner ist es Aufgabe der Erfindung, ein Verfahren zum Berechnen eines Brillenglasdesigns vorzuschlagen, wobei das Brillenglasdesign besser an die (individuellen) Präferenzen, Anwendungsschwerpunkte, Fassungsdaten sowie andere (individuelle) designspezifische Daten bzw. Rahmenbedingungen und/oder andere (individuelle) Daten des Brillenträgers angepaßt wird.

Diese Aufgaben werden durch ein Verfahren zum Erzeugen bzw. Berechnen eines progressiven Brillenglasdesigns mit den Merkmalen gemäß Anspruch 1, eine Vorrichtung zum Erzeugen bzw. Berechnen eines progressiven Brillenglasdesigns mit den Merkmalen gemäß Anspruch 14, ein Computerprogrammerzeugnis mit den Merkmalen gemäß Anspruch 15, ein Speichermedium mit den Merkmalen gemäß Anspruch 16, ein Verfahren zum Herstellen eines progressiven Brillenglases mit den Merkmalen gemäß Anspruch 17, eine Vorrichtung zum Herstellen eines progressiven Brillenglases mit den Merkmalen gemäß Anspruch 21, ein Computerprogrammerzeugnis mit den Merkmalen gemäß Anspruch 22, ein Speichermedium mit den Merkmalen gemäß Anspruch 23 sowie eine Verwendung eines Brillenglases mit den Merkmalen, gemäß Anspruch 24 gelöst. Bevorzugte Ausführungsformen sind Gegenstand der Unteransprüche.

Gemäß der Erfindung wird ein computerimplementiertes Verfahren zum Erzeugen bzw. Berechnen eines progressiven Brillenglasdesigns, insbesondere eines individuellen progressiven Brillenglasdesigns, mittels einer Transformation eines Startdesigns bereitgestellt, wobei das Verfahren folgende Schritte umfaßt:

- Festlegen eines Startdesigns, umfassend:

  - Vorgaben für den Verlauf einer Hauptlinie *HL*;und
  - Vorgabe zumindest einer Basis-Sollisoastigmatismuslinie $l_G$ mit einem konstanten Basis-Sollastigmatismus $A_G$ = *const* , wobei die Basis-Sollisoastigmatismuslinie $l_G$ durch zumindest einen ersten vorgegebenen Steuerpunkt $\vec{r}_1 = (u_1, y_1)$ verläuft;

- Transformieren des Startdesigns, umfassend die Schritte:

  - Verschieben des ersten Steuerpunkts $\vec{r}_1 (u_1, y_1) \rightarrow \vec{r}_1(u'_1, y'_1)$ entlang einer vorgegebenen bzw. vorgebbaren Kurve, wobei die Verschiebung des ersten Steuerpunkts $\vec{r}_1 = (u_1, y_1)$ unter Berücksichtigung von design- und/oder brillenglasträgerspezifischen Daten erfolgt;
  - Abändern $l_G \rightarrow l'_G$ des Verlaufs der Basis-Sollisoastigmatismuslinie $l_G$ derart, daß diese durch den verschobenen ersten Steuerpunkt $\vec{r}_1 (u'_1, y'_1)$ verläuft, und
  - Erzeugen bzw. Berechnen einer Sollastigmatismusverteilung $A(u, y)$, welche die abgeänderte Basis-Sollisoastigmatismuslinie $l'_G$ aufweist,

wobei:

$x$ die horizontale Koordinate;
$y$ die vertikale Koordinate;
$u$ den horizontalen Abstand eines Punktes $(x, y)$ von der Hauptlinie; und $A(u, y)$ die Sollastigmatismusverteilung des transformierten Startdesigns bezeichnen.

Die Optimierung von progressiven Brillengläsern erfolgt in der Regel durch Minimierung einer Zielfunktion, in welcher Ziel- bzw. Sollwerte für zumindest eine optische Größe (z.B. Astigmatismus und/oder Brechkraft) oder Ziel-bzw. Sollwerte für zumindest einen Abbildungsfehler (z.B. astigmatischer Fehler bzw. astigmatische Abweichung und/oder Refraktionsfehler) des progressiven Brillenglases eingehen. Der Refraktionsfehler stellt die Differenz des Brechwerts des Brillenglases von dem Brechwert, welcher mittels Refraktionsbestimmung ermittelt wird, dar. Die astigmatische Abweichung bzw. der astigmatische Fehler stellt die Differenz des Astigmatismus des Brillenglases von dem Astigmatismus, welcher mittels Refraktionsbestimmung ermittelt wird, dar. Vorzugsweise handelt es sich dabei um Werte in Gebrauchsstellung des Brillenglases, d.h. unter Berücksichtigung des Systems Brillenglas-Auge.

Die in die Zielfunktion eingehenden Ziel- bzw. Sollwerte der zumindest einen optischen Eigenschaft (insbesondere des Astigmatismus) oder des zumindest einen Abbildungsfehlers (insbesondere der astigmatischen Abweichung) charakterisieren das Design eines Brillenglases. Unter Sollastigmatismuswerten $A$ im Sinne dieser Anmeldung werden daher insbesondere die Sollwerte der astigmatischen Abweichung $Ast_{soll}$ oder die Sollwerte für den Astigmatismus des Brillenglases (Flächenastigmatismus oder Astigmatismus in Gebrauchsstellung) verstanden.

Eine designbasierte Optimierung eines progressiven Brillenglases kann zum Beispiel durch Minimierung einer Zielfunktion der Form:

$$F(\bar{x}) = \sum_{i=1}^{m} \left[ g_{i,\Delta R}(\Delta R_i - \Delta R_{i,Soll})^2 + g_{i,Ast}(Ast_i - Ast_{i,Soll})^2 + \ldots \right]$$

erfolgen.

In der obigen Formel bezeichnen:

$\Delta R_{i,Soll}$   den Sollwert des lokalen Refraktionsfehlers an der $i$-ten Bewertungsstelle;

$\Delta R_i$   den tatsächlichen lokalen Refraktionsfehler an der $i$-ten Bewertungsstelle;

$Ast_{i,Soll}$   den Sollwert der lokalen astigmatischen Abweichung bzw. des lokalen astigmatischen Fehlers an der $i$-ten Bewertungsstelle;

$Ast_i$   die tatsächliche lokale astigmatische Abweichung bzw. der tatsächliche lokale astigmatische Fehler an der $i$-ten Bewertungsstelle;

$g_{i,\Delta R}$   die lokale Gewichtung des Refraktionsfehlers an der $i$-ten Bewertungsstelle;

$g_{i,Ast}$   die lokale Gewichtung der astigmatischen Abweichung bzw. des astigmatischen Fehlers an der $i$-ten Bewertungsstelle.

Die räumliche Verteilung der Abbildungsfehler $\Delta R_i$ und $\Delta R_{i,soll}$ bzw. $Ast_i$ und $Ast_{i,Soll}$ können in der Form $\Delta R(x, y)$, $\Delta R_{soll}(x, y)$ bzw. $Ast(x, y)$ und $Ast_{soll}(x, y)$ angegeben werden.

Hierbei bezieht sich das Koordinatensystem beispielsweise auf ein Koordinatensystem in der zu optimierenden (objektseitigen oder augenseitigen) Fläche des Brillenglases, wobei der Ursprung des Koordinatensystems beispielsweise mit dem geometrischen Mittelpunkt des (rohrunden) Brillenglases oder mit dem Zentrier- oder Anpaßpunkt des Brillenglases zusammenfällt. Die vertikale ("$y$") und horizontale ("$x$") Achse liegen in der tangentialen Ebene zu der jeweiligen (augenseitigen oder objektseitigen) Fläche des Brillenglases in dem geometrischen Mittelpunkt bzw. dem Zentrier- bzw. Anpaßpunkt. Die vertikale Richtung bezieht sich vorzugsweise auf die vertikale Richtung in Gebrauchsstellung des Brillenglases, wobei das Brillenglas beispielsweise in einer durchschnittlichen Gebrauchsstellung (wie z.B. in DIN 58 208 Teil 2 definiert) oder in einer individuellen Gebrauchsstellung angeordnet ist. Vorzugsweise ist das Brillenglas in einer individuellen Gebrauchsstellung angeordnet. Es ist selbstverständlich möglich, die räumliche Verteilung der Abbildungsfehler in anderen geeigneten Koordinatensystemen anzugeben.

Insbesondere ist es bevorzugt, die Optimierungswerte im Koordinatensystem der zu optimierenden Fläche bezüglich der Hauptlinie (wobei auf der Hauptlinie $u = 0$ gilt) und nicht bezüglich der $y$ - Achse ($x = 0$) anzugeben, d.h. in der Form $\Delta R(u, y)$, $\Delta R_{soll}(u,y)$, $Ast(u, y)$ und $Ast_{soll}(u, y)$. Werden die Sollwerte bzw. die Optimierungssollwerte in Bezug auf die Hauptlinie vorgegeben, ist es bei einer Änderung der zu berücksichtigenden Gebrauchsstellung des Brillenglases, und insbesondere bei einer Änderung der Pupillendistanz, des Hornhautscheitelabstands, der Vorneigung, des Objektabstandsmodells, etc. ausreichend, lediglich einen Abgleich der Hauptlinie an die veränderte Hauptblicklinie durchzuführen. Die Sollwerte bzw. die Optimierungssollwerte werden dann automatisch angepaßt.

Die räumliche Verteilung der Sollwerte der Abbildungsfehler (insbesondere der astigmatischen Abweichung $Ast_{i,soll}$ bzw. $Ast_{soll}(x,y)$ bzw. $Ast_{soll}(u, y)$) über das Brillenglas, welche in die Optimierung des Brillenglases als Zielwerte eingehen, und gegebenenfalls deren lokale Gewichtungen ($g_{i,Ast}$, $g_{i,\Delta R}$) charakterisieren das Design eines progressiven Brillenglases. Anders ausgedrückt umfaßt das Design eines Brillenglases in der Regel die Verteilung der Sollwerte für eine oder mehrere Abbildungsfehler (insbesondere der astigmatischen Abweichung $Ast_{i,Soll}$ bzw. $Ast_{soll}(x,y)$ bzw. $Ast_{soll}(u, y)$), welche in die Optimierung des Brillenglases als Zielwerte eingehen.

Dabei spielt insbesondere die Hauptlinie sowie die räumliche Verteilung der Sollwerte $Ast_{i,Soll}$ bzw. $Ast_{soll}(x,y)$ bzw. $Ast_{soll}(u, y)$ der astigmatischen Abweichung über das Brillenglas eine zentrale Rolle bei der Designfestlegung und Optimierung von progressiven Brillengläsern. So erfolgen die Einteilung des Gleitsichtglasdesigns und die Beurteilung der Sehfeldgrößen zweckmäßigerweise anhand der Astigmatismusverteilung. Ferner kann ein Brillenglasdesign ebenfalls die Verteilung der Sollwerte für Refraktionsfehler, Vergrößerungs-, Verzerrungs- oder anderer Abbildungsfehler umfassen. Dabei kann es sich um Flächenwerte oder vorzugsweise um Gebrauchswerte, d.h. Werte in Gebrauchsstellung des Brillenglases, handeln.

Darüber hinaus kann das Brillenglasdesign ein geeignetes Objektabstandsmodell umfassen. Das Objektabstandsmodell kann beispielsweise eine Objektabstandsfunktion, welche als die reziproke Objektentfernung entlang der Hauptlinie definiert ist, umfassen. Ein standardisiertes Objektabstandsmodel ist z.B. in DIN 58 208 Teil 2 (vgl. Bild 6) angegeben. Das Objektabstandsmodel kann jedoch von diesem standardisierten Objektabstandsmodel abweichen.

Unter einer Hauptlinie wird eine im wesentlichen gerade oder gewunden verlaufende Linie verstanden, entlang welcher die gewünschte Zunahme des Brechwerts des Brillenglases vom Fern- zum Nahteil erreicht wird. Die Hauptlinie verläuft im wesentlichen mittig zu dem Brillenglas von oben nach unten, d.h. entlang einer im wesentlichen vertikalen Richtung. Die Hauptlinie stellt somit eine Konstruktionslinie im Koordinatensystem der zu optimierenden (objektseitigen oder augenseitigen) Fläche zur Beschreibung der Sollwerte dar. Der Verlauf der Hauptlinie des Brillenglases wird so gewählt, daß sie zumindest in etwa der Hauptblicklinie folgt. Ein Verfahren zum Anpassen der Hauptlinie an die Hauptblicklinie wird z.B. in EP 1 277 079 beschrieben.

Unter einer Hauptblicklinie wird die Folge der Durchstoßpunkte der Hauptstrahlen durch die jeweilige Brillenglasfläche beim Blick auf eine Linie verstanden, welche in der senkrechten Ebene liegt, die den Abstand der beiden Augendrehpunkte halbiert (sog. Zyklopenaugenebene). Bei der Brillenglasfläche kann es sich um die objekt- oder die augenseitige Fläche handeln. Die Lage der Linie in der Zyklopenaugenebene wird durch das gewählte Objektabstandmodell bestimmt.

Ein progressives Brillenglasdesign umfaßt in der Regel einen Fern-, einen Nah- und einen Zwischen- bzw. Progressionsbereich. Die Abgrenzung der inneren Bereiche mit guten Abbildungseigenschaften zu den peripheren Bereichen, in denen höhere Fehler zugelassen werden, erfolgt üblicherweise mit einer festgelegten Sollisoastigmatismuslinie. In der Brillenoptik wird hierfür meist die Isoastigmatismuslinie, entlang welcher der Betrag des Astigmatismus gleich 0,5 dpt ist, verwendet. Vorzugsweise wird diese Linie zur Konstruktion des Astigmatismusmodells für die Sollvorgaben, wie nachfolgend im Detail beschrieben wird, herangezogen.

Um progressive Brillengläser (Gleitsichtgläser) mit unterschiedlichen Designs (d.h. mit unterschiedlichen Sollvorgaben für die optischen Eigenschaften des Brillenglases oder für die Abbildungsfehler, insbesondere mit unterschiedlichen Sollvorgaben für den Astigmatismus oder für die astigmatische Abweichung) zu erzeugen, müssen die entsprechenden unterschiedlichen Design- bzw. Sollvorgaben erzeugt bzw. berechnet werden und nachfolgend die Optimierungen durchgeführt werden. Ein Erzeugen bzw. Berechnen eines Brillenglasdesigns im Sinne dieser Anmeldung umfaßt folglich die Berechnung bzw. Erzeugung der Sollvorgaben bzw. Sollwerte für die einzelnen Abbildungsfehler, welche dem Brillenglasdesign zuzuordnen sind, insbesondere der Sollvorgaben für die astigmatische Abweichung bzw. SollAstigmatismus.

Entgegen der üblichen Vorgehensweise werden gemäß der Erfindung die neuen Sollvorgaben aus bereits hinterlegten, älteren Sollvorgaben abgeleitet. Mit dem erfindungsgemäßen Verfahren können so aus einem bestehenden Gleitsichtglasdesign (nachfolgend als Start- oder Grunddesign bezeichnet) mit vorher bekannten Sollvorgaben direkt progressive Brillenglasdesigns (kurz Gleitsichtglasdesigns) mit unterschiedlichen Breiten des Fern- und/oder des Nahbereichs und/oder niedrigen oder hohen Astigmatismusgradienten erzeugt werden. Da alle Designmodifikationen aus demselben Startdesign abgeleitet werden, erfolgt der Übergang stufenlos. Es können somit beliebig viele Designvariationen erzeugt werden, um immer optimal auf die Bedürfnisse des Brillenträgers eingehen zu können.

Die Designmodifikation erfolgt durch geeignete Variation der Optimierungssollvorgaben des Startdesigns, insbesondere des Verlauf einer Basis-Sollisoastigmatismuslinie.

Dazu wird zunächst ein Startdesign festgelegt, welches

- eine Vorgabe einer Hauptlinie bzw. Vorgaben für den Verlauf einer Hauptlinie; und

- eine Vorgabe zumindest einer Basis-Sollisoastigmatismuslinie $I_G$ mit einem konstanten Basis-Sollastigmatismus $A_G = const$ ,

aufweist.

Um den Verlauf der Basis-Sollisoastigmatismuslinie $I_G$ besser steuern zu können, wird auf der Basis-Sollisoastigmatismuslinie $I_G$ zumindest ein erster Steuerpunkt $\vec{r}_1 = (u_1, y_1)$ festgelegt bzw. vorgegeben.

Insbesondere wird zur Konstruktion der Astigmatismusvorgaben bzw. zur Berechnung der Sollastigmatismusverteilung über das Brillenglas zumindest eine Basis-Sollisoastigmatismuslinie (bzw. deren Verlauf), vorzugsweise je einer Basis-Sollisoastigmatismuslinie auf der nasalen und temporalen Seite des Brillenglases vorgegeben. Der Betrag $A_G$ der Basis-Sollisoastigmatismuslinie kann frei gewählt werden, vorteilhaft sind Beträge zwischen 0,25 dpt und 1,0 dpt und insbesondere 0,5 dpt.

Ferner kann das Startdesign Vorgaben für den Brechwertverlauf entlang der Hauptlinie sowie Vorgaben für die Sollastigmatismuswerte entlang der Hauptlinie $HL$ umfassen. Weitere Parameter des Startdesigns, wie:

- der maximal zulässige Sollastigmatismus in der Peripherie des Brillenglases; und/oder
- die maximale Sollisoastigmatismusline; und/oder
- die Abstände der maximalen Sollisoastigmatismusline von der Basis-Sollisoastigmatismuslinie im Fern- und Nahteil in einer vorgegebenen oder vorgebbaren Richtung

können ebenfalls vorgegeben werden.

Anhand der obigen Vorgaben kann die räumliche Verteilung der dem Startdesign zugeordneten Sollastigmatismuswerte mittels einer geeigneten Interpolation bestimmt werden.

Alternativ kann das Startdesign oder die Startvorgaben die räumliche Verteilung der Sollastigmatismuswerte über zumindest einen Teil des zu optimierenden Bereichs des Brillenglases umfassen. Somit sind auch der Verlauf der Hauptlinie $HL$, der Sollastigmatismuswerte entlang der Hauptlinie, der Verlauf der Basis-Sollisoastigmatismuslinie und gegebenenfalls andere Parameter, welche dem Startdesign zugeordnet sind, eindeutig bestimmt.

Ebenfalls kann das Startdesign eine Startfläche, welche z.B. durch ihre Pfeilhöhen definiert ist, umfassen. Mit der Vorgabe der Startfläche sind auch der Verlauf der Hauptlinie $HL$ sowie der Basis-Sollisoastigmatismuslinie $I_G$ eindeutig vorgegeben.

Ferner können die maximal zulässigen Designänderungen im Voraus, in Abhängigkeit von dem Startdesign vorgegeben bzw. festgelegt werden.

Die Hauptlinie und die räumliche Verteilung der Sollastigmatismuswerte können in einem geeigneten kartesischen Koordinatensystem mit einer horizontalen Achse x und einer vertikalen Achse y, wie z.B. dem oben beschriebenen Koordinatensystem, angegeben und berechnet werden, d.h. z.B. in einem Koordinatensystem in der zu optimierenden Fläche des Brillenglases, vorzugsweise in der augenseitigen Fläche des Brillenglases, wobei der Ursprung des Koordinatensystems beispielsweise mit dem geometrischen Mittelpunkt des (rohrunden) Brillenglases oder mit dem Zentrier-oder Anpaßpunkt des Brillenglases zusammenfällt. Die vertikale ("$y$") und die horizontale ("$x$") Achse liegen in der tangentialen Ebene zu der jeweiligen zu optimierenden (augenseitigen oder objektseitigen, vorzugsweise augenseitigen) Fläche des Brillenglases an dem geometrischen Mittelpunkt bzw. dem Zentrier- bzw. Anpaßpunkt. Die vertikale Richtung bezieht sich vorzugsweise auf die vertikale Richtung in Gebrauchsstellung des Brillenglases, wobei das Brillenglas beispielsweise in einer durchschnittlichen Gebrauchsstellung (wie z.B. in DIN 58 208 Teil 2 definiert) oder in einer individuellen Gebrauchsstellung angeordnet ist. Vorzugsweise ist das Brillenglas in einer individuellen Gebrauchsstellung angeordnet. In diesem Koordinatensystem {x, y} kann die horizontale Koordinate $x_{HL}$ eines Punktes auf der Hauptlinie $(x_{HL}, y)$ durch eine Funktion der Form $f_u(y)$ beschrieben werden, d.h., $x_{HL} = f_u(y)$.

Es hat sich jedoch als vorteilhaft erwiesen eine Koordinatentransformation $\{x, y\} \rightarrow \{u, y\}$ durchzuführen, wobei $x = u + f_u(y)$ und $u$ den horizontalen Abstand eines Punktes $(u, y)$ von der Hauptlinie bezeichnet. Alle Berechnungen werden nachfolgend in dem Koordinatensystem {u, y} durchgeführt. In dem Koordinatensystem {u, y} haben alle Punkte auf der Hauptlinie Koordinaten $(u = 0, y)$ und alle Punkte auf der Basis-Sollisoastigmatismuslinie Koordinaten $(U_G(y), y)$

Es ist jedoch selbstverständlich möglich, alle Berechnungen in dem Koordinatensystem {x,y} oder in anderen geeigneten Koordinatensystemen durchzuführen.

Die Hauptlinie $HL$ und die Basis-Sollisoastigmatismuslinie $I_G$ können mathematisch mittels einer geeigneten parametrischen Darstellung vorgegeben werden. Beispielsweise kann der Verlauf der Hauptlinie $HL$ durch eine eindimensionale, vorzugsweise stetige Funktion der Form $f_u(y)$ beschrieben werden. Anders ausgedrückt gilt für die Punkte auf der Hauptlinie $HL$: $(x_{HL} = f_u(y), y)$. Mit der Vorgabe der Funktion $f_u(y)$ ist die Hauptlinie definiert. Vorzugsweise wird bei der Transformation des Startdesigns der Verlauf der Hauptlinie nicht geändert.

Der Verlauf der Basis-Sollisoastigmatismuslinie $I_G$ kann ebenfalls mittels einer eindimensionalen Funktion der Form $u_G(y)$ beschrieben werden. Anders ausgedrückt gilt für die Punkte auf der Basis-Sollisoastigmatismuslinie $I_G$: $(x_{I_G}(y) = u_G(y), y)$. Mit der Vorgabe der Funktion $u_G(y)$ ist die Basis-Sollisoastigmatismuslinie $I_G$ definiert. Die Funktion $u_G$

(y) ist vorzugsweise eine stetige Funktion. Ferner bevorzugt ist die erste Ableitung der Funktion $u_G(y)$ ebenfalls eine zumindest einmal stetig differenzierbare Funktion.

Die Basis-Sollisoastigmatismuslinie kann durch eine Reihe von geeigneten, eindimensionalen, vorzugsweise zumindest einmal stetig differenzierbaren Funktionen $u_G(y)$ beschrieben werden. Es hat sich überraschenderweise herausgestellt, daß die Funktion $u_G(y)$ bereits mittels wenigen, variierbaren Parametern geeignet beschrieben werden kann, was die Berechnung und die Transformation des Startdesigns erheblich vereinfacht und beschleunigt.

Insbesondere kann die Basis-Sollisoastigmatismuslinie in unterschiedlichen Bereichen durch die Vorgabe von zwei vertikalen Koordinate $y_F$ und $y_N$ unterteilt werden, zum Beispiel in einem Fern-, einem Progressions- und einem Nahbereich. In den einzelnen Bereichen kann die Basis-Sollisoastigmatismuslinie durch unterschiedliche Funktionen $u_G(y)$ beschrieben werden. Vorzugsweise schließen sich die einzelnen Bereiche nahtlos aneinander.

Im Progressionsbereich (d.h. bei $y_N \leq y \leq y_F$) der Verlauf der Basis-Sollisoastigmatismuslinie direkt vorgegeben oder zum Beispiel entweder nach dem Satz von Minkwitz bei vorgegebenem Brechwertverlauf entlang der Hauptlinie oder aus einer vorgegebenen Startfläche, welche z.B. in dem Start-Design umfaßt ist, berechnet werden. Ebenfalls kann - wie nachfolgend beschrieben - der Verlauf der Basis-Sollisoastigmatismuslinie aus dem aktuellen Objektabstandsverlauf und dem Akkomodationsmodell berechnet werden.

Zur Berechnung der Koordinate $u_{05}$ der 0,5 dpt Basis-Sollisoastigmatismuslinie an einer bestimmten $y$ - Koordinate kann in der Umgebung der Hauptlinie ein linearer Ansatz verwendet werden:

$$A(u) = A_0 + \frac{dA}{du} u + \ldots,$$

wobei $A(u)$ den Sollastigmatismuswert in einem Abstand $(u)$ von der Hauptlinie in einem horizontalen Schnitt bei der vorgegebenen $y$ - Koordinate bezeichnet.

Der lineare Ansatz gilt näherungsweise für kleinere Abstände von der Hauptlinie. Ist die Steigung bzw. die Zunahme des Brechwerts entlang der Hauptlinie relativ groß (eine Bedingung, welche im Progressionsbereich fast immer gilt), kann der Abstand $u_{05}$ mit hoher Genauigkeit berechnet werden.

In der obigen Gleichung ist die Steigung bzw. Ableitung des Astigmatismus $\frac{dA}{du}$ die Unbekannte, welche bestimmt werden muss. Der seitliche Anstieg des Astigmatismus bzw. die Steigung des Astigmatismus $\frac{dA}{du}$ kann nach dem Satz von Minkwitz durch den Brechwertanstieg entlang der Hauptlinie bestimmt werden. Somit können auch die horizontalen Abstände der Punkte der Grenzlinie von der Hauptlinie bzw. die $u$ -Koordinaten der Basis-Sollisoastigmatismuslinie bestimmt werden. Es gilt:

$$\frac{dA}{du} = 2 \frac{dD}{dy},$$

wobei:

$\frac{dA}{du}$ die Steigung des Soll astigmatismus in horizontaler Richtung mit dem Abstand von der Hauptlinie; und

$\frac{dD}{dy}$ den Gradient des Brechwerts in vertikaler Richtung

bezeichnen.

Der Abstand $u_{05}$ der 0,5 dpt Basis-Sollisoastigmatismuslinie von der Hauptlinie im Progressionsbereich kann dann wie folgt berechnet werden:

$$u_{05} = \frac{0,5dpt}{\dfrac{dA}{du}} = \frac{0,5dpt}{\dfrac{2dD}{dy}}.$$

Gemäß eines Aspekts der Erfindung wird vorgeschlagen, den Verlauf der Basis-Sollisoastigmatismuslinie im Progressionsbereich nicht anhand des vorgegebenen Brechwertverlaufs entlang der Hauptlinie, sondern aus dem aktuellen Objektabstandsverlauf und dem Akkomodationsmodell zu berechnen (nachfolgend kurz als Asti-Modell bezeichnet). Insbesondere wird vorgeschlagen, den seitlichen Anstieg des Astigmatismus nach der folgenden Formel zu berechnen:

$$\frac{dA}{du} = 2\frac{dD}{dy} = 2\frac{d(-A1 - Akk)}{dy},$$

wobei:

$$A1 = \frac{1}{a_1}$$ den reziproken Objektabstand, wobei $a_1$ der Objektabstand an der Hauptlinie bezeichnet; und

*Akk* den Akkomodationserfolg des Auges an der Scheitelpunktkugel bezeichnen.

Der reziproke Objektabstand A1($y$), welcher die Designcharakteristik des Brillenglases mitbestimmt, kann für das Brillenglas als zumindest stetige Funktion vorgeben werden. Eine beispielhafte Objektabstandsfunktion A1($y$) ist folgende:

- im Fernbereich gilt A1($y$) = 1/(Sollentfernung Ferne);
- im Nahbereich gilt A1($y$) =1/Lesentfernung;
- der vertikale Übergang bzw. der vertikale Verlauf der Funktion A1($y$) entlang der Hauptlinie kann z.B. mittels einer Doppelasymptotenfunktion oder als Splinefunktion beschrieben werden.

Die Entfernungen im Objektraum (also vor dem Brillenglas) werden üblicherweise gemäß der Vorzeichenreglung in der technischen Optik negativ angegeben. Für Standardgleitsichtgläser, deren Fernbereich zum Sehen ins Unendliche ausgelegt ist, gilt im Fembezugspunkt $A1(y = y_{BF}) = 0$ dpt und im Nahbezugspunkt

$$A1(y = y_{BN}) = -2,5dpt = -\frac{1}{0,4m}$$ für Additionen $\leq$ 2,5 dpt und Al(y=y_{BN})=-*Add* für Additionen > 2,5 dpt.

Bei Nah- und Raumgläsern kann *Al($y_{BF}$)* der berücksichtigten Raumentfernung angepasst werden.

*Akk* bezeichnet den Akkomodationserfolg des Auges an der Scheitelpunktkugel bzw. die notwendige Akkommodation des Auges um die gewünschte Korrektion zu erhalten. Allgemein gilt für die Abbildung entlang eines Hauptstrahles durch die Punkte der Hauptlinie:

$$S'(y) = A1(y) + D(y) + Akk(y) \text{ mit } Akk \text{ als Funktion von } y$$

oder

$$S'(y) = A1(y) + D(y) + Akk(A1(y)) \text{ mit } Akk \text{ als Funktion von } A1$$

(d.h. der Gesamtbrechwert ist gleich ($D$ + *Akk*)).

In den obigen Formeln bezeichnen:

*S'* die Vergenz der augenseitigen Wellenfront (entspr. der Fehlsichtigkeit des Kunden);
*A*1 die objektseitige Vergenz;
*D* den Brechwert des Brillenglases; und
*Akk* den Akkommodationserfolg des Auges an der Scheitelpunktkugel.

Eine beispielhafte Vorgehensweise bei der Hauptlinienkonstruktion ist:

- Vorgabe des reziproken Objektabstands $A1(y)$ entlang der Hauptlinie (z.B. mittels Doppelasymptotenfunktion, durch eine Überlagerung einer Splinefunktion, etc.)
- setzten $S'(y)$ gleich der Fernrefraktion des Brillenträgers, d.h. $S'(y) = S'_F$ = Fernrefraktion des Brillenträgers.
- Festlegen des Akkomodationsmodels, z.B. $Akk(A1(y))$ als ein lineares Modell in A1.
- Bestimmen der Akkomodation über die zwei Wertepaare:

  o Fernakkommodation $Akk_0 = Akk(A1 = 0) = 0$ (d.h. keine Akkommodation für Objekte im Unendlichen); und
  o Nahakkommodation $Akk_N = Akk(A1_{BN})$, welche aus den Bestelldaten wie folgt berechnet wird:

$$Akk_N = S'_F - A1_N - S'_N,$$

  wobei $S'N = S'_F + Z$ und $Z$ =Addition.

Dabei ist es lediglich erforderlich den Funktionsverlauf für $A1(y)$ festzulegen. Alle anderen Größen ergeben sich automatisch durch Rechnung.

Die nach dem Satz von Minkwitz und nach dem Asti-Modell berechneten Basis-Sollisoastigmatismuslinien $u_{Minkwitz}$ und $u_{Asti-Modell}$ fallen im Progressionsbereich des Startdesigns im wesentlichen zusammen. Im Übergangsbereich können die nach dem Satz von Minkwitz und nach dem Asti-Modell berechneten Basis-Sollisoastigmatismuslinien $u_{Minkwitz}$ und $u_{Asti-Modell}$ etwas von einander abweichen. Im den (stabilisierten) Fern- und Nahbereichen können die nach dem Satz von Minkwitz und nach dem Asti-Modell berechneten Basis-Sollisoastigmatismuslinien ($u_{Minkwitz}$ und $U_{Asti-Modell}$) deutlich voneinander abweichen.

Ebenfalls ist es möglich, den Verlauf der Basis-Sollisoastigmatismuslinie des Startdesigns durch eine Kombination des nach dem Satz von Minkwitz ermittelten Verlaufs (kurz Minkwitz-Modell) und des aus dem aktuellen Objektabstandsverlauf und dem Akkomodationsmodell ermittelten Verlaufs (kurz Asti-Modell) zu berechnen. Somit kann einer Veränderung der Objektabstandsfunktion des Stardesigns bei der Designvariation besser Rechnung getragen werden. Insbesondere kann somit sichergestellt werden, daß bei der Vorgabe der Basis-Sollisoastigmatismuslinie nicht gegen die physikalischen Gesetzmäßigkeiten verstoßen wird. Ferner ist es möglich, die Sollastigmatismusvorgaben zu stabilisieren.

Der Abstand $u_{05}$ der Basis-Sollisoastigmatismuslinie von der Hauptlinie kann beispielsweise nach der Formel:

$$u_{05} = u_{Asti-Modell} + g(u_{Minkwitz} - u_{Asti-Modell})$$

ermittelt werden, wobei:

$u_{Asti-Modell}$ der aus dem aktuellen Objektabstandsverlauf und dem Akkomodationsmodell ermittelte Abstand der Basis-Sollisoastigmatismuslinie von der Hauptlinie;
$u_{Minkwitz}$ der nach dem Satz von Minkwitz ermittelte Abstand der Basis-Sollisoastigmatismuslinie von der Hauptlinie; und g eine Gewichtung der beiden Modelle

bezeichnen.

Die Steuerung erfolgt über den Faktor $g$, wobei die Bedingung $0 \leq g \leq 1$ gilt.

Bei $g = 1$ gilt $u_{05} = u_{Minkwitz-Modell}$ (Verlauf nach Minkwitz). Bei $g = 0$ gilt $u_{05} = u_{Asti-Modell}$ (Verlauf nach Astigmatismusmodell).

Der Faktor $g$ kann aus den Extremwerten der horizontalen Steigung des Astigmatismus bzw. Sollastigmatismus entlang der Hauptlinie bestimmt werden. Dabei werden jeweils die kleinste Ableitung bzw. Steigung

$A'_{min} = (\frac{dA}{du})_{min}$ und die größte $A'_{max} = (\frac{dA}{du})_{max}$ Ableitung bzw. Steigung des Sollastigmatismus in $u$-

Richtung entlang der Hauptlinie gesucht bzw. berechnet. An der Stelle, wo die Steigung des Astigmatismus im Horizontalschnitt maximal ist ($A' = A'_{max}$) wird $g = 1$ gesetzt. An der Stelle, wo die Steigung des Astigmatismus im Horizontalschnitt minimal ist ($A' = A'_{min}$) wird $g = 0$ gesetzt.

Der Faktor $g$ variiert dann z.B. linear zwischen den Werten 0 und 1 als Funktion von $A'$:

$$g(A'(y)) = \frac{A'(y) - A'_{min}}{A'_{max} - A'_{min}},$$

wobei:

$A' = \dfrac{dA}{du}$ die Steigung des Astigmatismus in horizontaler Richtung an der Stelle ($u = 0$, $y$) $y = const$,

$A'_{max} = (\dfrac{dA}{du})_{max}$ die größte Ableitung bzw. Steigung des Sollastigmatismus in horizontaler Richtung im Bereich der Hauptlinie; und

$A'_{min} = (\dfrac{dA}{du})_{min}$ die kleinste Ableitung bzw. Steigung des Sollastigmatismus in horizontaler Richtung im Bereich der Hauptlinie

bezeichnen.

Die Steigung $A' = \dfrac{dA}{du}$ kann z.B. nach dem Satz von Minkwitz oder nach dem Asti-Modell berechnet werden:

$$A' = \frac{dA}{du} = 2\frac{d(-A1 - Akk)}{dy}.$$

Wenn bei der Designänderung der reziproke Objektabstand $A1(y)$ des Startdesigns nicht geändert wird, kann die oben beschriebene Kombination der beiden Modelle entfallen.

Die Berechnung des Verlaufs der 0,5 Basis-Sollisoastigmatismuslinie nach dem oben vorgeschlagenen Verfahren, nämlich aus dem aktuellen Objektabstandsverlauf und dem Akkomodationsmodell oder mittels einer Kombination des nach dem Satz von Minkwitz ermittelten Verlaufs und des aus dem aktuellen Objektabstandsverlauf und dem Akkomodationsmodell ermittelten Verlaufs ist unabhängig von der weiteren Transformation der 0,5 Isoastigmatismuslinie bzw. unabhängig von der weiteren Transformation der Sollastigmatismuswerte. Ein Aspekt der Erfindung betrifft daher ein computerimplementiertes Verfahren zum Erzeugen bzw. Berechnen eines progressiven Brillenglasdesigns, umfassend eine Verteilung des Sollastigmatismus $A(u, y)$ in zumindest einem Bereich eines progressiven Brillenglases, wobei das Verfahren die Schritte umfasst:

- Vorgabe eines Objektabstandsmodells und eines Akkomodationsmodells;
- Berechnen des Verlaufs einer Basis-Sollisoastigmatismuslinie $l_G$ mit einem konstanten Basis-Sollastigmatismus $A_G = const$ anhand des vorgegebenen Objektabstandmodells und des Akkomodationsmodells;
- Erzeugen bzw. Berechnen einer Sollastigmatismusverteilung $A(u, y)$, welche die Basis-Sollisoastigmatismuslinie $l_G$ aufweist,

wobei:

x die horizontale Koordinate;
y die vertikale Koordinate;
u den horizontalen Abstand eines Punktes (x, y) von einer vorgegebenen Hauptlinie; bezeichnen.

Ferner betrifft ein Aspekt der Erfindung eine entsprechende Vorrichtung sowie ein Computerprogrammerzeugnis, welche derart konfiguriert sind, das oben beschriebene Verfahren zum Erzeugen bzw. Berechnen eines progressiven Brillenglasdesigns durchzuführen.

Im Fern- und/oder Nahbereich kann die Weiterführung bzw. der Verlauf der Basis-Sollisoastigmatismuslinie unabhängig vorgegeben bzw. (in bestimmten vorgegebenen Grenzen) frei und stufenlos abgeändert werden und damit die Designfestlegung getroffen werden.

Die Basis-Sollisoastigmatismuslinie im Nahteil bzw. -bereich kann zum Beispiel durch die Funktion:

$$u_G(y) = a_n + \frac{b_n}{y} + \frac{c_n}{y^2} + \frac{d_n}{y^3}$$

mit den Parametern bzw. Koeffizienten $a_n$, $b_n$, $c_n$, $d_n$ beschrieben bzw. vorgegeben werden.

Im Fernteil kann die Basis-Sollisoastigmatismuslinie beispielsweise durch ein Polynom der Ordnung $n$ :

$$u_G(y) = a_f + b_f y + c_f y^n$$

mit den Parametern bzw. Koeffizienten $a_f$, $b_f$, $c_f$ beschrieben bzw. vorgegeben werden (nachfolgend auch kurz Polynom-Darstellung genannt). Eine Funktion dieser Art ist insbesondere zur Beschreibung eines harten Designs geeignet.

Alternativ kann im Fernteil die Basis-Sollisoastigmatismuslinie durch die Funktion:

$$u_G(y) = a + b(\operatorname{atan}(\frac{y-c}{d}) + \frac{\pi}{2})$$

mit den Parametern bzw. Koeffizienten $a,b,c,d$ beschrieben bzw. vorgegeben werden (nachfolgend auch kurz Arctangens-Darstellung genannt). Eine solche Funktion ist insbesondere zur Beschreibung eines weichen Designs geeignet.

Die Basis-Sollisoastigmatismuslinie kann selbstverständlich durch andere geeignete parametrischen Darstellungen beschrieben bzw. vorgegeben werden.

In einem zweiten Schritt wird das Startdesign transformiert. Die Transformation des Startdesigns umfaßt ein Verschieben des ersten Steuerpunkts entlang einer vorgegebenen bzw. vorgebbaren Kurve:

$$\vec{r}_1(u_1, y_1) \rightarrow \vec{r}\,'_1(u'_1, y'_1),$$

wobei $\vec{r}\,'_1(u'_1, y'_1)$ den verschobenen ersten Steuerpunkt bezeichnet. Die vorgegebene bzw. vorgebbare Kurve $u \rightarrow y$, $K : u \rightarrow k(u)$, entlang welcher der erste Steuerpunkt verschoben wird, kann eine beliebige Kurve sein.

Es ist auch möglich, dass die Basis-Sollisoastigmatismuslinie durch weitere Steuerpunkte verläuft. Die weiteren Steuerpunkte können entlang entsprechenden vorgegebenen bzw. vorgebbaren Kurven verschoben werden, wobei die Berechnung der abgeänderten Basis-Sollisoastigmatismuslinie derart erfolgt, dass diese durch die verschobenen Steuerpunkte verläuft. Die Orientierung der Kurven entlang welcher der jeweilige Steuerpunkt verschoben werden kann, kann beliebig sein.

Der Verlauf der Basis-Sollisoastigmatismuslinie $I_G$ wird anschließend derart ab geändert, daß diese durch den verschobenen ersten Steuerpunkt verläuft. Dabei wird nur der Verlauf der Basis-Sollisoastigmatismuslinie $I_G$ verändert, nicht jedoch der konstante *Betrag* $A_G$ des Sollastigmatismus entlang der Basis-Sollisoastigmatismuslinie.

Beispielsweise erfolgt die Veränderung des Verlaufs der Basis-Sollisoastigmatismuslinie gemäß einer vorgegebenen Transformation $I(u_G(y)) = u'_G(y)$, wobei:

$$A(u_G(y), y) = A(u'_G(y), y) = A_G = const,$$

$u_G(y)$ eine eindimensionale Funktion, welche den Verlauf der Basis-Sollisoastigmatismuslinie $I_G$ vorgibt, bezeichnet;

und

$u'_G$ (y) eine eindimensionale Funktion, welche den Verlauf der abgeänderten Basis-Sollisoastigmatismuslinie $I'_G$ vorgibt, bezeichnet.

Der erste Steuerpunkt und gegebenenfalls die weiteren Steuerpunkte (und somit des Verlaufs der Basis-Soll-Isoastigmatismuslinie) können direkt bzw. manuell oder automatisch anhand von vorgegebenen design- bzw. brillenträgerspezifischen Vorgaben bzw. Randbedingungen verschoben werden, um eine optimale Anpassung der Sehbereiche (z.B. Fern- und/oder Nahbereich) an die individuellen Erfordernisse des Brillenträgers bzw. des Brillenglasdesigns zu erzielen. Die maximale zulässige Verschiebung des jeweiligen Steuerpunktes nach außen (d.h. in Richtung zur Hauptlinie) und/oder nach innen (d.h. in die Richtung zur Peripherie des Brillenglases bzw. des Brillenglasrandes) kann vorgegeben werden. Der Brillenträger, dessen Daten bei der Verschiebung des ersten und gegebenenfalls der weiteren Steuerpunkte berücksichtigt werden, kann ein durchschnittlicher Brillenträger oder ein bestimmter Brillenträger bzw. ein bestimmter Kunde sein.

Die design- und/oder brillenglasträgerspezifischen Daten bzw. Randbedingungen, welche bei der Verschiebung des zumindest einen Steuerpunkts $\vec{r}_1 = (u_1, y_1)$ berücksichtigt werden, können insbesondere Daten bezüglich

- der Gewichtung des Fern- und Nahbereichs und/oder
- der Anwendungsschwerpunkte des Brillenglases; und/oder
- Fassungs- und Zentrierdaten

umfassen.

Insbesondere können die design- und/oder brillenglasträgerspezifischen Daten bzw. Randbedingungen Daten bezüglich Kundenpräferenzen, Gewichtungen der einzelnen Präferenzen und anderer Parameter umfassen.

Die design- und/oder brillenglasträgerspezifischen Daten bzw. Randbedingungen, welche bei der Bestimmung der Position des zumindest einen Steuerpunktes bzw. bei der Berechnung des Verlaufs der abgeänderten Basis-Sollisoastigmatismuslinie berücksichtigt werden, können ferner ein oder mehrere der folgenden Daten bzw. Datensätze umfassen:

- Refraktionsdaten bzw. Wirkungsparameter, insbesondere Sphäre, Zylinder, Achslage, Addition; und/oder
- Daten bezüglich der Hauptnutzung des Brillenglases, für das das Brillenglasdesign erstellt bzw. konzipiert wird (z.B. Autofahren, Computerarbeitsplatz, Lesen, Handwerken, etc); und/oder
- Durchschnittliche oder individuelle Parameter des Brillenträgers und/oder der Gebrauchsstellung des Brillenglases bzw. der Brille vor den Augen des Brillenträgers. Die durchschnittlichen oder individuellen Parameter des Brillenträgers und/oder der Gebrauchsstellung des Brillenglases umfassen insbesondere die Pupillendistanz, den Hornhautscheitelabstand (HSA), Vorneigung (VN), Fassungsscheibenwinkel (FSW), etc.; und/oder

- Daten bezüglich der durchschnittlichen oder der individuellen Objektabstände, insbesondere Arbeitsabstand beim Lesen (Naharbeit), Arbeitsabstand in der Ferne; und/oder
- Daten bezüglich der Hauptblickrichtung Ferne und Nähe; und/oder
- individuelle Daten bezüglich des bisher getragenen Brillenglases, insbesondere, ob das bisherige Brillenglas ein Einstärken-, Bifokal- oder Gleitsichtbrillenglas ist, Daten bezüglich des Designs (Hart/Weich), der Progressionslänge, des Typs (Individuell, Konventionell), des Materials (Kunststoff/Silikat), des Brechungsindexes, der Lage der Bezugspunkte, der Addition des Vorgängerglases, und/oder der Veränderung der Refraktionsdaten im Vergleich zu den Refraktionsdaten des Vorgängerglas, und/oder
- Daten bezüglich der individuellen Verbesserungswünsche gegenüber der bisher getragenen Brille, insbesondere größerer Fernbereich, größerer Zwischenbereich, größerer Nahbereich, geringere Blicksenkung beim Lesen oder geringere Schaukelbewegung; und/oder
- Daten bezüglich der durchschnittlichen oder individuellen Umwelteinflüsse (Umgebungshelligkeit etc.); und/oder
- Daten bezüglich eventuell vorhandener individueller, außergewöhnlicher Kopf- und Körperhaltungen; und/oder
- individuelle physiologische Parameter, insbesondere des Auges bzw. der Augen des Brillenträges, insbesondere Sehschärfe mit Korrektion, Stereogrenzwinkel; und/oder
- individuelle Daten bezüglich der Objektabstände bei der Refraktionsbestimmung: Ferne und Nähe.

Die design- und/oder brillenglasträgerspezifischen Daten bzw. Randbedingungen können ferner weitere Parameter umfassen.

Nachdem der Verlauf der abgeänderten Basis-Sollisoastigmatismuslinie $I'_G$ festgelegt ist, wird in einem nächsten Schritt eine Sollastigmatismusverteilung $A(u, y)$, welche die abgeänderte Basis-Sollisoastigmatismuslinie $I'_G$ aufweist, berechnet bzw. erzeugt. Das Erzeugen bzw. Berechnen einer Sollastigmatismusverteilung, welche die abgeän-

derte Basis-Sollisoastigmatismuslinie $l'_G$ aufweist, kann eine Interpolation der Sollastigmatismuswerte zwischen der Hauptlinie und der abgeänderten Basis-Sollisoastigmatismuslinie $l'_G$ umfassen. Die Abänderung der Basis-Sollisoastigmatismuslinie sowie das Berechnen bzw. Erzeugen einer Sollastigmatismusverteilung, welche die abgeänderte Basis-Sollisoastigmatismuslinie $l'_G$ aufweist, werden nachfolgend im Detail beschrieben.

Die so berechnete Sollastigmatismusverteilung kann weiter transformiert werden. So ist z.B. möglich, die berechnete Sollastigmatismusverteilung mittels einer weiteren Stauchung oder Streckung in vertikaler Richtung, mittels einer Multiplikation mit einem Skalierungsfaktor, etc. weiter zu transformieren.

Mit dem erfindungsgemäßen Verfahren kann somit ein Brillenglasdesigner beliebige Gleitsichtglasdesigns bzw. beliebige Verteilungen des Sollastigmatismus schnell und effizient erzeugen bzw. verändern, Insbesondere ist es mit dem erfindungsgemäßen Verfahren möglich, bei einem bestehenden Gleitsichtglasdesign (Start- bzw. Grunddesign) die Designcharakteristik schnell und effizient abzuändern und an die Kundenbedürfnisse anzupassen. Ferner ist es möglich, durch eine relativ einfache und schnell durchzuführende Berechnung aus nur einem vorgegebenen Startdesign, Varianten bzw. Designs mit größeren oder kleineren Sehbereichen (z.B. mit großem oder kleinem Fernteil, breitem oder engem Nahteil), mit niedrigen oder hohen Astigmatismusgradienten zu erzeugen. Ein wesentlicher Vorteil ist folglich die Vermeidung des oben beschriebenen Mehraufwands zur Erstellung geeigneter Sollvorgaben, insbesondere für individuelle progressive Brillengläser. Ein weiterer Vorteil ist die Möglichkeit, die Sehbereiche im Rahmen vorgegebener Grenzen beliebig und stufenlos einzustellen, ohne daß die Designcharakteristik und die guten Abbildungseigenschaften des Startdesigns verloren gehen. Somit können beliebig viele Designvariationen erzeugt werden, um immer optimal auf die Bedürfnisse der Kunden einzugehen.

Das erfindungsgemäße Verfahren ist insbesondere zum Generieren von individuellen, für unterschiedliche Anwendungsgebiete angepaßten Designs, wie z.B.:

- Gleitsichtgläser mit großem, breitem Fernteil für Kraftfahrer;
- Sport-Gleitsichtgläser mit großem Fernteil, reduzierter Addition und kleinen Gradienten (Gläser für dynamische Tätigkeiten);
- Gläser mit breitem Nahteil und Arbeitsschwerpunkt bei Abstand 40cm.
- diverse Bildschirmarbeitsplatzgläser und Nah- und Raumgläser,

sowie zum Herstellen von individuellen Brillengläsern nach dem generierten Design, besonders geeignet.

Gemäß einer Ausführungsform ist die Kurve, entlang welcher der zumindest eine Steuerpunkt $\vec{r}_1 = (u_1, y_1)$ verschoben wird, eine Gerade, so daß

$$\vec{r}'_1 = \vec{r}_1 + t\vec{v}_{a,i}$$

gilt, wobei

$\vec{v}_a$    den Richtungsvektor nach außen der Geraden, entlang welcher sich der Steuerpunkt bewegt bzw. bewegen kann;

$\vec{v}_i$    den Richtungsvektor nach innen der Geraden, entlang welcher sich der Steuerpunkt bewegt bzw. bewegen kann; und

$t$    die Verschiebung entlang der Geraden mit dem Richtungsvektor $\vec{v}_{a,i}$

bezeichnen.

Die Orientierung der Geraden, entlang welcher der zumindest eine Steuerpunkt verschoben werden kann, kann beliebig sein. In einem Beispiel fällt die Gerade, entlang welcher sich der jeweilige Steuerpunkt bewegt bzw. sich bewegen kann, mit den Kurvennormalen der Basis-Sollisoastigmatismuslinie in dem vorgegebenen Steuerpunkte $\vec{r}_1 = (u_1, y_1)$ zusammen.

Hierbei kann die Verschiebung $t$ und somit die Sehfeldgrößen begrenzt werden, wobei $t_a$ die maximal zulässige Abweichung nach außen und $t_i$ die maximal zulässige Abweichung nach innen bezeichnet. Eine maximale Sehfeldgröße, z.B. im Nahteil bzw. -bereich, bedeutet dann, daß der Steuerpunkte $\vec{r}_1$ ganz nach außen (d.h. Richtung Peripherie) entlang der Geraden $\vec{v}_a$ verschoben wird ($\vec{r}'_1 = \vec{r}_1 + t\vec{v}_a$). Eine minimale Sehfeldgröße, z.B. im Nahteil bzw. -bereich, bedeutet entsprechend, daß der Steuerpunkt $\vec{r}_1$ ganz nach innen (d.h. Richtung Hauptlinie) entlang der Geraden $\vec{v}_i$ verschoben wird ($\vec{r}'_1 = \vec{r}_1 + t\vec{v}_i$).

Der Parameter $t$ kann zum Beispiel mittels der Formel:

$$t = mt_{a,i} = (\frac{g_{F,N}}{50} - 1)t_{a,i},$$

berechnet werden, wobei

$0 \leq g_{F,N} \leq 100$ gilt,
für $50 < g_{F,N} \leq 100$ $\vec{r}'_1 = \vec{r}_1 + mt_a\vec{v}_a$ gilt; und
für $0 \leq g_{F,N} < 50$ $\vec{r}'_1 = \vec{r}_1 + mt_i\vec{v}'_i$ gilt,

und wobei

$g_F$     Gewichtung des Fernbereichs in Prozent;
$g_N$     Gewichtung des Nahbereichs in Prozent,
$t_a$     maximale zulässige Verschiebung nach außen;
$t_i$     maximale zulässige Verschiebung nach innen

bezeichnen.

Für eine Gewichtung des Fern- bzw. Nahbereichs von 50 % ($g_{F,N} = 50$) ist $m = 0$, d.h. es erfolgt keine Abänderung des Grunddesigns. Wenn die jeweilige Gewichtung in dem Intervall von (50%,100%] liegt ($50 < g_{F,N} \leq 100$) gilt $0 < m \leq 1$ und $\vec{r}'_1 = \vec{r}_1 + mt_a \vec{v}_a$, d.h. es erfolgt eine Verbreitung des jeweiligen Sehbereichs. Wenn die jeweilige Gewichtung des Fern- bzw. Nahbereichs in dem Intervall [0%, 50%) liegt ($0 \leq g_{F,N} < 50$) gilt $-1 \leq f < 0$ und $\vec{r}'_1 = \vec{r}_1 + mt_i\vec{v}_i$, d.h. es erfolgt eine Verkleinerung des jeweiligen Sehbereichs.

Die Gewichtung $g_{F,N} = 100$ bedeutet, daß der Steuerpunkt $\vec{r}_1$ maximal nach außen entlang der Geraden $\vec{r}'_1 = \vec{r}_1 + t\vec{v}_a$ verschoben wird, d.h. daß $t = t_a$ gesetzt wird. In diesem Fall gilt $\vec{r}'_1 = \vec{r}_1 + t_a\vec{v}_a$. Gewichtung $g_{F,N} = 0$ bedeutet entsprechend, daß der Steuerpunkt $\vec{r}_1$ ganz nach innen entlang der Geraden $\vec{r}'_1 = \vec{r}_1 + t\vec{v}_i$ verschoben wird, d.h. daß $t = t_i$ gesetzt wird. In diesem Fall gilt $\vec{r}'_1 = \vec{r}_1 + t_i\vec{v}_i$.

Ist die Gewichtung $g_{F,N}$ vorgegeben, dann kann der zugehörige Geradenparameter $t$ mit dem Faktor:

$$f = \frac{g_{F,N}}{50} - 1$$

bestimmt werden.

Bei $g_{F,N} = 50$ ist $f = 0$ und es erfolgt keine Abänderung des Start- bzw. Grunddesigns.

Gewichtungen $g_F \neq 50$ und/oder $g_N \neq 50$ verändern die Sehfeldgrößen und somit auch das Start- bzw. Grunddesign.

Das Verfahren zum Erzeugen bzw. Berechnen eines progressiven Brillenglasdesigns kann ferner eine Anpassung $A_{max} \rightarrow A'_{max}$ des maximalen Sollastigmatismuswerts $A_{max}$ in Abhängigkeit von der Gewichtung des Fern- und/ oder des Nahbereichs umfassen.

Eine Gewichtung des Fern- und/oder des Nahbereichs, welche von 50% abweicht ($g_{F,N} \neq 50$ und/oder $g_{F,N} \neq 50$) verändert die Größe des jeweiligen Sehbereichs und somit auch die Größe des peripheren Bereichs auf dem Brillenglas, in welchem die Abbildungsfehler höhere Werte annehmen können bzw. annehmen dürfen. Vorzugsweise erfolgt daher eine Anpassung des maximal zulässigen Sollastigmatismus $A_{max}$ der Sollastigmatismusverteilung $A(u, y)$, welche nach einer Verschiebung des zumindest einen ersten Steuerpunkts ermittelt bzw. berechnet wird. Wird z.B. der Fernbereich verbreitet und/oder der Nahbereich verbreitet, dann wird in der Regel $A_{max}$ erhöht (Sandkastenmodell für den Astigmatismus). Umgekehrt wird der Fernbereich verringert und/oder der Nahbereich verkleinert, wird $A_{max}$ verringert.

Die Anpassung des maximalen Sollastigmatismuswerts $A_{max}$ in Abhängigkeit von der Gewichtung des Fern- und/oder des Nahteils kann zum Beispiel nach der folgenden Formel erfolgen:

$$A'_{max} = n(g_F, g_N)A_{max},$$

wobei

$$n(g_F, g_N) = 1 + \frac{p_{Ast\,max}}{100} \frac{(g_F + g_N - 100)}{100}$$ ein Skalierungsfaktor ist;

$g_F$ die Gewichtung des Fernbereichs in Prozent ist, wobei $0 \le g_F \le 100$ gilt;

$g_N$ die Gewichtung des Nahbereichs in Prozent ist, wobei $0 \le g_N \le 100$ gilt;

$P_{Ast\,max}$ die maximal zulässige Anpassung in Prozent ist, wobei $0 \le p_{Ast\,max} \le 50$ gilt.

Beispielsweise ist $p_{Ast\,max} = 15$.

Eine Anpassung des maximal zulässigen Astigmatismus einer Sollastigmatismusverteilung A(u, y) in Abhängigkeit von der Gewichtung des Fern- und/oder des Nahteils kann ebenfalls unabhängig von dem Verfahren mittels welcher die Sollastigmatismusverteilung $A(u, y)$ ermittelt wurde, erfolgen. So kann beispielsweise der maximal zulässige Astigmatismus einer Sollastigmatismusverteilung, welche mittels einer Streckung oder Stauchung in vertikaler Richtung aus einem Start- bzw. Grunddesign erhalten worden ist, ebenfalls mit dem oben beschriebenen Verfahren angepaßt werden.

Ein weiterer Aspekt der Erfindung betrifft daher ein computerimplementiertes Verfahren zum Erzeugen bzw. Berechnen eines progressiven Brillenglasdesigns umfassend die Schritte:

- Vorgabe einer Start-Sollastigmatismusverteilung $A(u, y)$;
- Anpassung $A_{max} \rightarrow A'_{max}$ des maximalen Sollastigmatismuswerts $A_{max}$ der Start-Sollastigmatismusverteilung in Abhängigkeit von einer vorgegebenen oder vorgebbaren Gewichtung des Fern- und/oder des Nahbereichs.

Die Gewichtung des Fernbereichs $g_F$ und die Gewichtung des Nahbereichs $g_N$ können in Abhängigkeit von den Kundenpräferenzen und/oder Fassungsdaten festgelegt werden.

Die Gewichtungen des Fern- und des Nahbereichs $g_F$ und $g_N$ können von dem Design-Entwerfer geeignet festgelegt werden oder aus erfaßten Kundendaten bzw. Kundenpräferenzen zu der Wichtigkeit des Fernbereichs bzw. Wichtigkeit des Nahbereichs für das Sehen automatisch abgeleitet werden. Ein Verfahren zum Berechnen der Gewichtungen des Fern- und/oder des Nahbereichs aus den erfaßten Kundendaten bzw. Kundenpräferenzen ist z.B. in WO 2008/08995 beschrieben.

Ebenfalls können die Gewichtungen $g_F$ und $g_N$ aus den Fassungsdaten abgeleitet werden. So kann z.B. bei einer langen Scheibe der periphere Fernbereich höher gewichtet werden, um störende seitliche Abbildungsfehler zu reduzieren. Ein reines Verschieben der Bezugspunkte Ferne- und/oder Nähe nach oben und/oder unten ohne Designänderung, d.h. ohne den Verlauf der Grenz-Astigmatismuslinien zu verändern, würde das Problem kaum lösen, auf der anderen Seite jedoch zusätzlich die Progressionslänge verkürzen und die Kanalbreite verkleinern. Unter Grenz-Astigmatismuslinien werden insbesondere die temporale und die nasale Basis-Sollisoastigmatismuslinie sowie gegebenenfalls die temporale und nasale zusätzliche Sollisoastigmatismuslinie verstanden.

Da die Sportfassungen meist einen hohen Fassungsscheibenwinkel aufweisen und diese Brillen schwerpunktmäßig bei dynamischen Tätigkeiten (z.B. Laufen, Radeln, Skilaufen, Joggen, etc.) und weniger bei Naharbeiten Verwendung finden, kann auch der Fassungsscheibenwinkel ähnlich wie die "Wichtigkeit Aktiverhalten" zur Designsteuerung herangezogen werden. Insbesondere kann eine lineare Abhängigkeit der Gewichtungen $g_F$ (Gewichtung des Fernbereichs), $g_N$ (Gewichtung des Nahbereichs), $g_D$ (Gewichtung Dynamik, welche mit dem dynamischen Seheindruck korreliert) und dem Fassungsscheibenwinkel formuliert werden. Z.B. je größer der Fassungsscheibenwinkel desto größer $g_F$ und $g_D$ und desto kleiner $g_N$ ist.

Das Verfahren zum Erzeugen bzw. Berechnen eines progressiven Brillenglasdesigns kann ferner einen Skalierungsschritt umfassen, wobei Sollastigmatismuswerte A(u, y = const) in den Punkten eines jeden Horizontalschnitts, für welche die Bedingung $u \ge u_1$ oder $u \le -u_1$ erfüllt sind, mit einem Skalierungsfaktor $s(u, y)$ multipliziert werden..

Die mittels der oben beschriebenen Transformation eines Startdesigns erhaltene Sollastigmatismusverteilung $A(u, y)$ kann ferner transformiert werden. So kann die Sollastigmatismusverteilung $A(u, y)$ mittels einer Multiplikation mit einem Skalierungsfaktor $s(u, y)$ weiter transformiert werden:

$$A' = A_{neu} = s(u, y) A(u, y).$$

Um die Eigenschaften entlang der Hauptlinie zu erhalten, kann die Multiplikation mit dem Skalierungsfaktor für die Punkte erfolgen, für welche die Bedingungen $u \ge u_1$ oder $u \le -u_1$ erfüllt sind. In diesem Fall erfolgt n der Nähe der Hauptlinie (d.h. bei $|u| < |u_1|$) keine Änderung der Sollastigmatismuswerte. Ferner kann der Skalierungsfaktor s bei $u = |u_1|$ gleiche 1 gesetzt werden: $s(\pm u_1, y) = 1$.

Für bestimmte Sonderanwendungen kann es physiologisch vorteilhaft sein, das Startdesign sehr stark abzuändern. Ein Beispiel hierfür sind Gleitsichtgläser für Bewegungssportarten. Hier stehen die Anforderungen an einen großen fehlerfreien Fernbereich und sehr weichen Übergängen im temporalen Bereich (geringe Schaukelbewegungen) im Vordergrund. Die Größe des Nahbereichs ist jedoch von untergeordneter Bedeutung. Ebenso kann der andere Extremfall interessant werden, dass z.B. für feinmechanische Tätigkeiten ein sehr großer, breiter Nahbereich benötigt wird. Um solchen Anforderungen noch besser gerecht zu werden, kann bei der Berechnung der Sollvorgaben für den Astigmatismus ein zusätzlicher Faktor $s(u, y)$ verwendet werden, um gezielt die Sollastigmatismuswerte flächenmäßig weiter zu beeinflussen.

Eine beispielhafte Funktion $s(u, y)$ kann folgendermaßen definiert werden:

In jedem Horizontalschnitt $y = const$ des Brillenglases werden die Sollastigmatismuswerte mit einem Faktor multipliziert, der sich für jede Glashälfte (nasal, temporal) von einer vorgegebenen inneren $u$-Koordinate $u_1$ mit dem Funktionswert 1 nach außen hin linear ändert. Anstatt der linearen Änderung innerhalb der Horizontalschnitte können selbstverständlich auch andere Funktionen verwendet werden (z.B. eine quadratische Funktion von $u$, eine kubische Funktion von $u$, eine Doppelasymptotenfunktion usw.).

Ferner kann eine zweite Konstruktionslinie $u_2(y)$ vorgegeben werden. Beispielsweise ist $u_2 = const$ und $|u_2| > |u_1|$. Der Wert des Skalierungsfaktors $s(u_2, y)$ an der Konstruktionslinie $u_2(y)$ kann für die unterschiedlichen Horizontalschnitte unterschiedlich vorgegeben werden.

Insbesondere kann der Geradepunkt $(u_2, f_2(y))$ (bei einer linearen Funktion von $u$) für die unterschiedlichen Horizontalschnitte $y = const$ unterschiedlich vorgegeben werden. Anders ausgedrückt kann der äußere Funktionswert $f_2$ an der Stelle $u_2$ für den Fern-, Nah und den Progressionsbereich unterschiedlich vorgegeben werden, d.h. $f_2 = f(y)$.

Für das dynamische Sportglas kann beispielsweise der periphere Astigmatismus im mittleren und oberen Glasbereich (d.h. im Fernbereich) zusätzlich reduziert werden. Die Funktion $f_2(y)$ kann folglich im oberen Glasbereich deutlich kleiner als 1 sein ($f_2(y)<1$), vorzugsweise kleiner oder gleich 0,5. Im Nahbereich kann die Funktion $f_2(y)$ den Wert 1 wieder erreichen. Vorzugsweise gilt im Nahbereich $f_2(y) \approx 1$.

Im Falle eines breiteren Nahbereichs ist ein genau entgegengesetzter Verlauf vorteilhaft: Im oberen Bereich erfolgt vorzugsweise keine Abänderung, d.h. $f_2(y) \approx 1$. Im Nahbereich erfolgt eine zusätzliche Reduktion des Astigmatismus, d.h. $f_2(y)<1$.

Somit kann der Sollastigmatismus im Fernbereich, Nahbereich und/oder in der Peripherie zusätzlich durch eine einfach zu steuernde Funktion gezielt beeinflußt bzw. reduziert werden.

Die Funktion $f_2(y)$ kann zum Beispiel eine Doppelasymptotenfunktion mit den Parametern $a,b,c,d,m$ sein, wobei

$$f_2(y) = b + \frac{a}{(1 + e^{c(y+d)})^m}$$

gilt, und

$$s(u, y) = f_0 \left( 1 + \frac{f_2(y) - 1}{u_2 - u_1}(u - u_1) \right),$$

wobei $|u_2| > |u_1|$.

Eine einfach zu handhabende Funktion für den Faktor $f_2(y)$ am Glasrand $u_2$ ist die Doppelasymptotenfunktion:

$$f_2(y) = b + \frac{a}{(1 + e^{c(y+d)})^m}$$

mit den Parametern $a,b,c,d,m$. Für die Funktion $s(u, y)$ gilt dann:

$$s(u, y) = f_0\left(1 + \frac{f_2(y)-1}{u_1 - u_1}(u - u_2)\right).$$

Die Koeffizienten $b, c, d$ und $m$ der Doppelasymptotenfunktion $f_2(y)$ können vorab festgelegt bzw. vorgegeben werden. Beispielsweise kann $b = 1$, $c = -0,3$, $d = 5$, $m = 1$, $a_{max} = -0,5$ gesetzt werden. Der Hub $a$ kann dann beispielsweise anhand einer Gewichtung Dynamik $g_D$ gesteuert werden. Beispielsweise gilt für den Koeffizienten $a$ der Doppelasymptotenfunktion $f_2(y)$:

$$a = \frac{g_D a_{max}}{100}.$$

Für $g_D = 80\%$ und $a_{max} = -0,5$ beträgt $a$ den Wert -0,4. Der Abfall im Fernteil beträgt $a = -0,4$, der Wert des Skalierungsfaktors $s(y_{FT}) = 1 - 0,4 = 0,6$.

Der oben beschriebene Skalierungsschritt bzw. das oben beschriebene Skalierungsverfahren kann auf eine beliebige Sollastigmatismusverteilung, unabhängig von der Art und Weise wie diese Sollastigmatismusverteilung erhalten wurde, angewandt werden. Insbesondere ist das oben beschriebene Skalierungsverfahren nicht allein auf die Skalierung von Sollastigmatismusverteilungen, welche mittels einer Transformation der Basis-Sollisoastigmatismuslinie erhalten wurden, beschränkt.

Ein Aspekt der Erfindung betrifft daher ein computerimplementiertes Verfahren zum Erzeugen bzw. Berechnen eines progressiven Brillenglasdesign mittels einer Transformation eines Startdesigns, umfassend die Schritte:

- Vorgabe des Startdesigns, wobei das Startdesign eine Start-Sollastigmatismusverteilung $A(u, y)$ umfasst;
- Transformieren des Startdesigns mittels einer Miltiplikation der Sollastigmatismuswerte $A(u, y = const)$ in den Punkten eines jeden Horizontalschnitts, für welche die Bedingung $|u| > |u_1|$ erfüllt ist, mit einem Skalierungsfaktor $s(u, y)$, wobei vorzugsweise $s(u_1, y) = 1$ gilt.

Wie bereits oben dargelegt wurde, kann die Basis-Sollisoastigmatismuslinie in einfacher Weise parametrisch dargestellt werden, wobei in den unterschiedlichen Bereichen (Fern-, Nah- und/oder Progressionsbereich, welche z.B. durch Vorgabe von zwei vertikalen Koordinaten $y_F$ und $y_N$ definiert werden können) die Basis-Sollisoastigmatismuslinie durch unterschiedliche Funktionen beschrieben werden kann. Nachfolgend wird eine beispielhafte Transformation der Basis-Sollisoastigmatismuslinie $l_G$, so daß sie durch den verschobenen ersten Steuerpunkt verläuft, beschrieben.

Die Basis-Sollisoastigmatismuslinie kann zumindest einen Bereich aufweisen, in welchem keine Transformation stattfindet. Die Basis-Sollisoastigmatismuslinie kann insbesondere durch zumindest einen Angel- bzw. Fixpunkt $\vec{r}_0 = (u_0, y_0)$ verlaufen, wobei im Angel- bzw. Fixpunkt die Bedingungen

$$u_G(y_0) = u'_G(y_0)$$

$$\frac{du_G(y_0)}{dy} = \frac{du'_G(y_0)}{dy}$$

erfüllt sind.

Insbesondere können die Punkte auf der Basis-Sollisoastigmatismuslinie mit Koordinaten $(u, y = y_F)$ und/oder $(u, y = y_N)$ jeweils einen Angel- bzw. Fixpunkt darstellen.

Gemäß einem Beispiel wird die Basis-Sollisoastigmatismuslinie im Progressionsbereich (d.h. bei $y_N \leq y \leq y_F$) nicht transformiert. Somit behält das abgeleitete individuelle Design die charakteristische Eigenschaft des Brechwertverlaufs und damit verbundene minimale Breite des Progressionskanals des Startdesigns. Der Verlauf der Basis-Sollisoastigmatismuslinie im Progressionsbereich kann wie oben beschrieben anhand des Brechwertverlaufs entlang der Hauptlinie oder aus dem aktuellen Objektabstandsverlauf und dem Akkomodationsmodell bestimmt werden. Die Punkte mit Koordinaten $(u, y_F)$ und $(u, y_N)$ stellen somit jeweils einen Angel- bzw. Fixpunkt dar.

Im Nah- und/oder Fernbereich kann dagegen eine Transformation der Basis-Sollisoastigmatismuslinie erfolgen. Nachfolgend wird beispielhaft das Abändern der Basis-Sollisoastigmatismuslinie im Nahbereich in Detail erläutert.

Wie bereits oben dargelegt wurde, kann die Basis-Sollisoastigmatismuslinie im Nahbereich beispielsweise durch eine Funktion der Form:

$$u_G(y) = a_n + \frac{b_n}{y} + \frac{c_n}{y^2} + \frac{d_n}{y^3}$$

mit den Parametern bzw. Koeffizienten $a_n$, $b_n$, $c_n$, $d_n$ beschrieben werden.

Die erste Ableitung dieser Funktion ist

$$\frac{du_G(y)}{dy} = -\frac{b_n}{y^2} - \frac{2c_n}{y^3} - \frac{3d_n}{y^4}.$$

Die Basis-Sollisoastigmatismuslinie verläuft durch einen ersten vorgegebenen oder vorgebbaren Steuerpunkt $\vec{r}_n(u_n, y_n)$ im Nahteil.

Das Transformieren des Startdesigns umfaßt ein Verschieben des ersten Steuerpunkt entlang einer vorgegebenen oder vorgebbaren Kurve, insbesondere entlang einer Geraden: $\vec{r}_n(u_n, y_n) \rightarrow \vec{r}'_n(u'_n, y'_n)$. Die Verschiebung des Steuerpunkts erfolgt wie oben beschrieben in Abhängigkeit von individuellen Daten des Brillenträgers.

Die abgeänderte Basis-Sollisoastigmatismuslinie $l'_G$ wird durch eine Funktion der Form:

$$u'_G(y) = a'_n + \frac{b'_n}{y} + \frac{c'_n}{y^2} + \frac{d'_n}{y^3}$$

mit den Parametern $a'_n$, $b'_n$, $c'_n$, $d'_n$ beschrieben.

Der Parameter bzw. Koeffizient $a_n = a'_n$ kann vorgegeben bzw. geeignet festgelegt werden. Die restlichen Parameter der obigen Funktion können aus den Daten des verschobenen Steuerpunkts $\vec{r}'_n(u'_n, y'_n)$ und gegebenenfalls unter Berücksichtigung von zusätzlichen Bedingungen berechnet bzw. ermittelt werden. Eine solche zusätzliche Bedingung kann die Bedingung sein, daß der Verlauf der Basis-Sollisoastigmatismuslinie in dem Progressionsbereich, welcher sich zwischen einer vertikalen Koordinate $y_N$ (an der Grenze zum Nahbereich) und einer vertikalen Koordinate $y_F$ (an der Grenze zum Fernbereich) erstreckt, nicht abgeändert wird, so daß in diesem Bereich (d.h. zwischen $y_N$ und $y_F$) die Basis-Sollisoastigmatismuslinie des Startdesigns und die Basis-Sollisoastigmatismuslinie des abgeleiteten, individuellen Designs zusammenfallen. Der Punkt $(u, y = y_N)$ stellt somit einen Angel- bzw. Fixpunkt dar. Ebenfalls stellt der Punkt $(u, y = y_F)$ einen Angel- bzw. Fixpunkt dar.

Da der Verlauf der Basis-Sollisoastigmatismuslinie des Startdesigns vorgegeben ist, lasst sich anhand der Daten des Verlaufs der Basis-Sollisoastigmatismuslinie des Startdesigns im Progressionsbereich, vorgegeben durch den Abstand $u$ der Basis-Sollisoastigmatismuslinie von der Hauptlinie, die erste Ableitung bei $y = y_N$ berechnen.

Anhand dieser Daten sowie der Daten der Koordinaten des verschobenen Steuerpunkts können die restlichen Parameter der abgeänderten Basis-Sollisoastigmatismuslinie und somit der Verlauf der abgeänderten Basis-Sollisoastigmatismuslinie im Nahbereich durch Lösung des folgenden Systems linearer Gleichungen eindeutig berechnet werden:

$$u'_G(y = y_N) = u_G(y = y_N)$$

$$\frac{du'_G(y = y_N)}{dy} = \frac{du_G(y = y_N)}{dy}$$

$$u'_G(y = y'_n) = u'_n = a'_n + \frac{b'_n}{y'_n} + \frac{c'_n}{y'^2_n} + \frac{d'_n}{y'^3_n}.$$

Der Verlauf der Basis-Sollisoastigmatismuslinie im Fernteil eines harten Designs läßt sich ebenfalls in der Regel durch die Vorgabe und Manipulation eines Steuerpunktes ändern. Insbesondere kann die Basis-Sollisoastigmatismuslinie im Fernteil im durch eine Funktion

$$u_G(y) = a_f + b_f y + c_f y^n$$

mit den Parametern bzw. Koeffizienten $a_f, b_f, c_f$ beschrieben werden. Die Potenz $n$ des Polynoms wird in der Regel vorgegeben bzw. geeignet festgelegt.

Die erste Ableitung dieser Funktion ist:

$$\frac{du_G(y)}{dy} = b_f + nc_f y^{n-1}$$

Die Basis-Sollisoastigmatismuslinie im Fernteil verläuft durch einen ersten vorgegebenen oder vorgebbaren Steuerpunkt $\vec{r}_f(u_f y_f)$. Dieser Punkt wird wie oben beschrieben verschoben: $\vec{r}_f(u_f, y_f) \rightarrow \vec{r}'_f(u'_f, y'_f)$. Die Parameter der obigen Funktion können aus den Daten des verschobenen Steuerpunkts $\vec{r}'_n(u'_n, y'_n)$ und gegebenenfalls unter Berücksichtigung von zusätzlichen Bedingungen berechnet bzw. ermittelt werden. Eine solche zusätzliche Bedingung kann die Bedingung sein, daß der Punkt $(u, y = y_F)$ einen Angel- bzw. Fixpunkt darstellt.

Die abgeänderte Basis-Sollisoastigmatismuslinie wird durch eine Funktion der Form:

$$u'_G(y) = a'_f + b'_f y + c'_f y^n$$

mit den Parametern $a'_f, b'_f, c'_f$ beschrieben.

Die Parameter bzw. Koeffizienten der abgeänderten Basis-Sollisoastigmatismuslinie können beispielsweise durch Lösung des folgenden Systems von Gleichungen eindeutig bestimmt werden, wobei im Progressionsbereich der Verlauf der Basis-Sollisoastigmatismuslinie unverändert bleibt:

$$u'_G(y = y_F) = u_G(y = y_F)$$

$$\frac{du'_G(y = y_F)}{dy} = \frac{du_G(y = y_F)}{dy}$$

$$u'_G(y = y'_f) = u'_f = a'_f + b'_f y'_f + c'_f y'^n_f$$

Bei einer durch eine Funktion der Form

$$u_G(y) = a + b(\text{atan}(\frac{y - c}{d}) + \frac{\pi}{2})$$

mit den Parametern bzw. Koeffizienten $a, b, c, d$ beschriebenen Basis-Sollisoastigmatismuslinie eines weichen Designs reichen in der Regel zwei vorgegebene Steuerpunkte $\vec{r}_{f1}(u_{f1}, y_{f1})$ und $\vec{r}_{f2}(u_{f2}, y_{f2})$ im Fernteil bzw. - bereich aus, um den Verlauf der abgeänderten Basis-Sollisoastigmatismuslinie eindeutig zu bestimmen. Die zwei Steuerpunkte werden wie oben beschrieben verschoben:

$$\vec{r}_{f1}(u_{f1}, y_{f1}) \rightarrow \vec{r}'_{f1}(u'_{f1}, y'_{f1})$$

$$\vec{r}_{f2}(u_{f2}, y_{f2}) \rightarrow \vec{r}'_{f2}(u'_{f2}, y'_{f2}).$$

Die Parameter bzw. Koeffizienten $a',b',c',d'$ der abgeänderten Basis-Sollisoastigmatismuslinie und somit deren Verlauf im Fernteil können durch Lösung des folgenden Systems von Gleichungen eindeutig bestimmt werden:

$$u'_G(y = y_F) = u_G(y = y_F)$$

$$\frac{du'_G(y = y_F)}{dy} = \frac{du_G(y = y_F)}{dy}$$

$$u'_G(y = y'_{f1}) = u'_{f1} = a' + b'(\text{atan}(\frac{y'_{f1} - c'}{d'}) + \frac{\pi}{2})$$

$$u'_G(y = y'_{f2}) = u'_{f2} = a' + b'(\text{atan}(\frac{y'_{f2} - c'}{d'}) + \frac{\pi}{2}),$$

wobei der Punkt auf der Basis-Sollisoastigmatismuslinie mit Koordinate $y = y_F$ ein Angel- bzw. Fixpunkt ist.

Wie bereits oben dargelegt wurde, kann das Erzeugen bzw. Berechnen einer Sollastigmatismusverteilung, welche die abgeänderte Basis-Sollisoastigmatismuslinie $l'_G$ aufweist, eine Interpolation der Sollastigmatismuswerte zwischen der Hauptlinie und der abgeänderten Basis-Sollisoastigmatismuslinie $l'_G$ umfassen.

Insbesondere kann das Startdesign Vorgaben für die Sollastigmatismuswerte $A_0(u = 0, y)$ entlang der Hauptlinie umfassen, wobei das Erzeugen bzw. Berechnen einer Sollastigmatismusverteilung $A(u, y)$, welche die abgeänderte Sollisoastigmatismuslinie aufweist, eine Interpolation zwischen den Sollastigmatismuswerten $A(u = 0, y)$ auf der Hauptlinie und den Sollastigmatismuswerten auf der abgeänderten Basis-Sollisoastigmatismuslinie umfaßt, wobei $A(u = 0, y) = A_0(u = 0, y)$ gilt.

Die Bedingung $A(u = 0, y) = A_0(u = 0, y)$ bedeutet, daß die Soll-Astigmatismuswerte $A(u = 0, y)$ entlang der Hauptlinie des Startdesigns nicht transformiert werden. Die Sollastigmatismuswerte auf der abgeänderten Basis-Sollisoastigmatismuslinie $l'_G$ sind gleich dem Basis-Sollastigmatismus $A_G$.

Die Interpolation kann eine lineare, quadratische oder kubische Interpolation sein. Es ist auch eine Interpolation höherer Ordnung denkbar.

Ein beispielhaftes Berechnen bzw. Erzeugen einer Sollastigmatismusverteilung bzw. Sollastigmatismuswerte anhand des vorgegebenen Verlaufs einer Hauptlinie und des vorgegebenen Verlaufs einer Basis-Sollisoastigmatismuslinie wird nachfolgend im Detail beschrieben.

Der Verlauf der vorgegebenen Basis-Sollisoastigmatismuslinie $l_G$ kann - wie oben beschrieben - durch eine eindimensionale Funktion $u_G(y)$ vorgegeben werden. Selbstverständlich kann mittels des nachfolgend beschriebenen Verfahrens ebenfalls die Sollastigmatismusverteilung zwischen der vorgegebenen Hauptlinie $HL$ und der abgeänderten Basis-Sollisoastigmatismuslinie $l'_G$ berechnet werden. In diesem Fall tritt in den nachfolgenden Formeln die eindimensionale Funktion $u'_G(y)$, welche den Verlauf der abgeänderten Basis-Sollisoastigmatismuslinie $l'_G$ beschreibt, anstelle der eindimensionalen Funktion $u_G(y)$, welche den Verlauf der Basis-Sollisoastigmatismuslinie $l_G$ beschreibt.

Insbesondere können die Sollastigmatismuswerte in Horizontalschnitten interpoliert werden, wobei in jedem Horizontalschnitt zwischen einem vorgegebenen Sollastigmatismuswert an der Hauptlinie $A(u = 0, y) = A_0(y)$ und dem Wert $A_G = const$ an der abgeänderten Basis-Sollisoastigmatismuslinie interpoliert wird.

Die Interpolation kann bezüglich $u$ linear, quadratisch oder durch eine beliebige Potenzfunktion erfolgen:

$$A(u, y) = A_0(y) + b(y)u^p$$

Der Koeffizient $b(y)$ kann bei vorgegebener Potenz $p$ direkt durch:

$$b(y) = \frac{A_G - A_0(y)}{u_G(y)^p}$$

bestimmt werden, wobei - wie oben beschrieben - $u_G(y)$ der horizontale Abstand der vorgegebenen Basis-Sollisoastigmatismuslinie von der Hauptlinie ist.

Die Interpolation kann dann als

$$A(u, y) = A_0(y) + \frac{A_G - A_0(y)}{u_G(y)^p}u^p = A_0(y) + (A_G - A_0(y))\left(\frac{u}{u_G(y)}\right)^p$$

beschrieben werden.

Die Potenz $p$ wird im allgemeinen variabel vorgegeben. Je größer $p$ gewählt wird, desto flacher ist der seitliche Anstieg des Astigmatismus an der Hauptlinie. Im Progressionsbereich steigt der Astigmatismus nach dem Satz von Minkwitz generell linear an, so daß in diesem Bereich $p$ vorzugsweise gleich 1 gewählt wird. Mit zunehmender Abnahme des Sollastigmatismus im Nahteil nimmt $p$ vorzugsweise ebenfalls zu, so daß der horizontale Anstieg des Sollastigmatismus langsamer erfolgt. Dies führt zu einer Aufweitung des Nahteils.

In der Peripherie des Brillenglases (d.h. zwischen der Basis-Sollisoastigmatismuslinie und dem Brillenglasrand) kann durch eine zusätzliche Vorgabe der äußersten, maximalen Sollisoastigmatismuslinie mit dem Wert $A_{max}$ und eine Vorgabe der Abstände der maximalen Sollisoastigmatismuslinien von der Basis-Sollisoastigmatismuslinie im Fern- und Nahteil, die Verteilung des Sollastigmatismus bestimmt werden.

Insbesondere können die Sollastigmatismuswerte in der Peripherie des Brillenglases mittels so genannter Parallelenkurvenmodell-Verfahren ermittelt bzw. berechnet werden.

Gemäß diesem Verfahren werden in der Peripherie des Brillenglases Parallelkurven zu der Basis-Sollisoastigmatismuslinie bzw. weitere Sollisoastigmatismuslinien, welche im wesentlichen parallel zu der Basis-Sollisoastigmatismuslinie verlaufen, konstruiert. Der senkrechte Abstand dieser Sollisoastigmatismuslinien wird durch die Vorgabe eines größten Wertes $A_{max}$ und des zugehörigen Abstandes von der Basis-Sollisoastigmatismuslinie entlang der Kurvennormalen gesteuert. Der Abstand der maximalen bzw. äußersten Sollisoastigmatismuslinie muss nicht konstant sein und kann mittels einer Abstandsfunktion $a(y)$ vorgegeben werden. Je größer der Wert von a(y), desto weiter sind die Sollisoastigmatismuslinien von einander entfernt und desto weicher sind die Astigmatismusübergänge. Die Abstandsfunktion $a(y)$ kann z.B. eine einfache lineare Funktion sein, derart, daß ein Abstand im Fernteil $a_F$ und ein Abstand im Nahteil $a_N$ vorgegeben und anschließend linear in $y$ interpoliert werden.

Der Sollastigmatismuswert an einem beliebigen Punkt $P(u, y)$ in der Peripherie des Brillenglases kann z.B. wie folgt berechnet werden:

1. Ermitteln des Punkts $P_G(u_G, y_G)$ auf der Basis-Sollisoastigmatismuslinie, dessen Kurvennormale durch den Punkt $P(u, y)$ verläuft, mittels eines geeigneten numerischen Verfahrens;
2. Berechnen des Abstands $d$ der beiden Punkte $P(u, y)$ und $P_G(u_G, y_G)$ :

$$d = \sqrt{(u - u_G)^2 + (y - y_G)^2};$$

3. Berechnen des zugehörigen Sollastigmatismuswerts $A(u,y)=A(d,a(y_G))$ mittels einer Interpolation zwischen $A_G$ ($d = 0$) und $A_{max}$ ($a(y_G)$). Diese Interpolation kann z.B. designspezifisch eine lineare, quadratische, kubische oder eine andere geeignete Interpolation sein. Vorzugsweise ist die Interpolation linear.

Alternativ können die Sollastigmatismuswerte in der Peripherie des Brillenglases nach dem so genannten Kegelstumpfmodell-Verfahren berechnet werden.

Dieses Verfahren ist insbesondere dann von Vorteil, wenn die Basis-Sollisoastigmatismuslinie beim Übergang in den Fernbereich zu stark gekrümmt ist, so daß sich die Kurvennormalen zu der Basis-Sollisoastigmatismuslinie unter Umständen schon innerhalb des Abstands $a(y)$ schneiden. In diesem Fall können nach dem oben beschriebenen Verfahren die äußeren Sollisoastigmatismuslinien nicht mehr sauber konstruiert werden, da das obige Verfahren mehr als eine Lösung liefert. Die Sollisoastigmatismuslinien werden als Höhenlinien eines Kegelstumpfes, dessen Grundfläche von der Basis-Sollisoastigmatismuslinie begrenzt wird, modelliert. Durch Vorgabe der Lage der Spitze $S(u_{SP}, y_{SP})$ des Kegelstumpfes und des zugehörigen Sollastigmatismuswerts $A_{SP}$ an der Spitze wird jedem Punkt $P(u, y)$ eindeutig ein Sollastigmatismuswert nach dem nachfolgend beschriebenen Verfahren zugewiesen:

1. Ermitteln des Schnittpunkts $F(u_F, y_F)$ der durch die Punkte $P$ und $S$ verlaufende Gerade und der Grenzkurve des Kegelstumpfes;
2. Berechnen der Abstände:

$$a_{SP} = \sqrt{(u_{SP} - u_F)^2 + (y_{SP} - u_F)^2}$$

und

$$a_P = \sqrt{(u_P - u_F)^2 + (y_P - u_F)^2};$$

3. Berechnen des Sollastigmatismuswerts $A(u, y)$ :

$$A_{KS} = A_G + (A_{SP} - A_G)\frac{a_P}{a_{SP}}$$

$$A_{soll}(u, y) = A_{soll}(p) = \min(A_{KS}, A_{max}).$$

Ferner kann insbesondere im Fernteil die Berechnung der Soll-Astigmatismuswerte, (z.B. mittels der oben beschriebenen Interpolation) durch eine zusätzliche, zweite Sollisoastigmatismuslinie (z.B. $I_{Z=0,25}$ bzw. $A_Z$ = 0,25 dpt) feiner gesteuert werden. Das Startdesign kann dementsprechend eine Vorgabe für den Verlauf einer zusätzlichen Sollisoastigmatismuslinie im Fern- und/oder Nahteil bzw. -bereich umfassen. Die zusätzliche, zweite Sollisoastigmatismuslinie kann analog zur Basis-Sollisoastigmatismuslinie vorgegeben und berechnet bzw. abgeändert werden.

Insbesondere wird erst zwischen der Hauptlinie und der zweiten, zusätzlichen Sollisoastigmatismuslinie und anschließend zwischen der zweiten, zusätzlichen Sollisoastigmatismuslinie und Basis-Sollisoastigmatismuslinie interpoliert. Die Berechnung der Sollastigmatismuswerte kann in diesem Fall eine erste Interpolation zwischen den Sollastigmatismuswerten auf der Hauptlinie und den Sollastigmatismuswerten auf der abgeänderten zusätzlichen Sollisoastigmatismuslinie und eine zweite Interpolation zwischen den Sollastigmatismuswerten auf der abgeänderten zusätzlichen Sollisoastigmatismuslinie und den Sollastigmatismuswerten auf der abgeänderten Basis-Sollisoastigmatismuslinie umfassen, wobei die ersten und die zweite Interpolation jeweils analog zu der oben beschriebenen Interpolation zwischen den Sollastigmatismuswerten auf der Hauptlinie und den Sollastigmatismuswerten auf der abgeänderten Basis-Sollisoastigmatismuslinie erfolgen.

Das Verfahren zum Erzeugen bzw. Berechnen eines progressiven Brillenglasdesigns kann einen Schritt des Erfassens von individuellen Parametern des Brillenträgers umfassen.

Wie bereits oben ausgeführt können sich die design- bzw. brillenträgerspezifischen Daten bzw. Randbedingungen, anhand welcher der zumindest eine Steuerpunkt verschoben wird, auf zuvor ermittelte durchschnittliche Daten bzw. Parameter, z.B. durchschnittliche Anforderungen und/oder Präferenzen bezüglich der Größe und/oder Lage des Fern-, Nah- und/oder Progressionsbereichs, durchschnittliche physiologische Parameter des Auges des Brillenträgers, durchschnittliche Parameter der Gebrauchsstellung des Brillenglases, durchschnittliche Fassungs- und/oder Zentrierdaten, etc. beziehen. Diese Parameter können zum Beispiel in einem Speicher, auf einem Speichermedium, in einer Datenbank, etc. gespeichert und daraus abgelesen werden.

Die design- bzw. brillenträgerspezifischen Vorgaben bzw. Randbedingungen, anhand welcher der zumindest eine Steuerpunkt verschoben wird, können ebenfalls individuelle Parameter und/oder individuelle Designvorgaben (z.B. Präferenzen, Anwendungsschwerpunkten, Gewichtungen Nah- und/oder Femebereich, etc.) eines bestimmten Brillenträgers bzw. eines bestimmten Kunden umfassen.

Die individuellen Daten und/oder individuelle Designvorgaben eines bestimmten Brillenträgers können z.B. mit einem Beratungstool wie "Consulting FreeSign®" der Firma Rodenstock GmbH sehr detailliert abgefragt werden. Vorzugsweise werden die möglichen individuellen Designvorschläge bzw. Designumsetzungen dem Kunden direkt demonstriert. Bisher konnte die Umsetzung der individuellen Anforderungen der Kunden bezüglich der Sehbereiche in entsprechende flexible Glasdesigns nicht zufriedenstellend gelöst werden. In der Regel war es notwendig, auf Spezialdesigns, wie z.B. "Impression Sport extracurved" der Firma Rodenstock GmbH, auszuweichen. Diese Spezialdesigns konnten jedoch nicht alle Nahentfemungen und Basiskurven abdecken. Durch die vorliegende Erfindung ist es möglich, gezielt einzelne Sehbereiche durch Abändern der Sollvorgaben zu betonen. So kann z.B. eine seitliche Aufweitung des Nahbereichs durchgeführt werden, welche beispielsweise mit einer Verkleinerung des Fernbereichs oder einer Erhöhung der Gradienten der Soll-Isoastigmatismuslinien im Fern- und/oder Nahbereich - je nach Kundenanforderungsprofil (zum Beispiel hohe Gewichtung Dynamik oder Fernteil) - kombiniert werden kann.

Das oben beschriebene Verfahren zum Erzeugen bzw. Berechnen eines progressiven Brillenglases kann mit anderen Verfahren zum Erzeugen bzw. Berechnen eines progressiven Brillenglases mittels einer Transformation eines vorgegebenen Startdesigns kombiniert werden.

So kann die Transformation des Startdesigns ferner eine Transformation (z.B. eine Streckung oder eine Stauchung in vertikaler Richtung) der zum Beispiel mittels Interpolation berechneten Sollastigmatismuswerte A(u, y) in Abhängigkeit von einer variabel einstellbaren, (individuellen) vertikalen Position des Fern- und/oder Nahbezugspunkts umfassen. Die Transformation erfolgt derart, daß das zu berechnende Brillenglasdesign die geforderte, vertikale Position des Fern- und/oder Nahbezugspunkts aufweist. Eine solche Transformation ist in der Patentanmeldung WO 2008/089996 beschrieben. Dabei weist ein Brillenglasdesign eine vorgegebene räumliche Position des Fern- und/oder Nahbezugspunkts auf, wenn in dem jeweiligen Bezugspunkt die vorgeschriebenen bzw. für den Brillenträger erforderlichen Werte für die Fern- und/oder Nahteilwirkungen (welche z.B. mittels Refraktionsbestimmung ermittelt werden) erreicht werden. Anders ausgedrückt sollen im Fern- und/oder Nahbezugspunkt die dem Design zugeordneten Abbildungsfehler (insbesondere astigmatische Abweichung und Refraktionsfehler) möglichst klein (vorzugsweise im wesentlichen Null) sein.

Alternativ können die mit dem Skalierungsfaktor s(u, y) multiplizierten Sollastigmatismuswerte A(u, y) in Abhängigkeit von der individuell ermittelten vertikalen Position des Fern- und/oder Nahbezugspunkts transformiert werden.

Ferner kann die Transformation des Startdesigns ferner eine Multiplikation der Sollastigmatismuswerte mit einem Skalierungsfaktor $l/l_D$, mit einer Funktion $h = h(S'(y'), l_D/l)$ oder mit einer Funktion $h = h(l_D/l)$ umfassen, wie ebenfalls in der Patentanmeldung WO 2008/089996 beschrieben wird. Hier bezeichnet $l$ die Progressionslänge des individuellen Brillenglasdesign und $l_D$ die Progressionslänge des Startdesigns. Vorzugsweise ist $h(l_D/l) = a \cdot (l_D/l) + b$, wobei $a, b$ Konstanten sind.

Somit kann zusätzlich direkt ein Gleitsichtglasdesign mit beliebiger vertikaler Lage der Bezugspunkte für die Ferne und die Nähe (Fern- und Nahbezugspunkt) und Hauptsehbereiche unter Beibehaltung der Designcharakteristik des Startdesigns abgeleitet und optimiert werden. Hierzu genügt es, lediglich die gewünschte individuelle Lage der Bezugspunkte für Ferne $B_F$ und Nähe $B_N$ vorzugeben. Die vertikale Position und Länge der Progressionszone der Gleitsichtfläche wird automatisch an die individuelle Benutzersituation angepaßt. Dabei kann eine beliebige Position der Bezugspunkte für Ferne $B_F$ und Nähe $B_N$ bei der Optimierung des Brillenglases berücksichtigt werden.

Ebenfalls kann das Startdesign ferner eine Vorgabe für eine Objektabstandsfunktion entlang der Hauptlinie des Brillenglases umfassen. Vorzugsweise umfaßt das Verfahren zum Berechnen eines individuellen Designs ferner eine geeignete Transformation der Objektabstandsfunktion des Startdesigns. Vorzugsweise werden die Transformationskoeffizienten der Transformation der Objektabstandsfunktion mittels einer Newtoniteration derart bestimmt, daß der Brechwert des Brillenglases in dem Fern- und/oder dem Nahbezugspunkt des individuellen Brillenglasdesigns mit dem Brechwert des Brillenglases in dem Fern- und/oder dem Nahbezugspunkt des Startdesigns übereinstimmt. Eine geeignete Transformation der Objektabstandsfunktion ist in der oben genannten Patentanmeldung WO 2008/089996 beschrieben.

Ebenfalls kann die Transformation des Startdesigns ferner eine Multiplikation der Sollastigmatismuswerte (Start-Sollastigmatismuswerte oder die mittels Interpolation ermittelten Sollastigmatismuswerte) mit einem Skalierungsfaktor $S_{Add}$, wobei $s_{Add} = t_{Add} \dfrac{Add}{Add_B}$ ist, umfassen.

Hier bezeichnet:

$t_{Add}$ einen Faktor, welcher im allgemeinen eine Funktion $t_{Add}$ = $t_{Add}$ (Add, F, Add$_B$) der Addition Add des zu berechnenden Brillenglases bzw. Brillenglasdesigns; und/oder der Fernteilwirkung F und/oder einer vorgegebenen Basisaddition $Add_B$ ist, wobei $t_{Add}$ =1 für $Add$ = $Add_B$ gilt. Im einfachsten Fall kann $t_{Add}$ = 1 sein.

Beispielsweise kann das Startdesign eine Start-Sollastigmatismusverteilung für die Basisaddition Add$_B$ umfassen. Diese Start-Sollastigmatismusverteilung kann zunächst umskaliert werden, um eine Sollastigmatismusverteilung für eine Addition $Add$ zu erhalten, wobei $Add$ die Addition des zu berechnenden Brillenglases bzw. Brillenglasdesigns ist. Nachfolgend kann der Verlauf der Basis-Sollisoastigmatismuslinie wie oben beschrieben geändert werden und mittels Interpolation eine abgeänderte, an den neuen Verlauf der Basis-Sollisoastigmatismuslinie angepasste Sollastigmatismusverteilung ermittelt werden. Eine Transformation einer vorgegebenen Sollastigmatismusverteilung mit einer Basisaddition $Add_B$ mittels einer Multiplikation mit einem Skalierungsfaktor s ist in der Patentanmeldung DE 10 2008 015 189.0 beschrieben.

Ebenfalls können die Sollastigmatismuswerte in einer anderen Reihenfolge geeignet transformiert werden. In gleicher Weise können ebenfalls andere Sollvorgaben des Startdesigns (z.B. Sollvorgaben für den Refraktionsfehler, Vergrößerung, etc.) geeignet transformiert bzw. geändert werden.

Das erfindungsgemäße Verfahren eignet sich sowohl für das Erzeugen von Designs bzw. Designvarianten für konventionelle oder wirkungsoptimierte progressive Brillengläser, als auch für das Erzeugen von Designs bzw. Designvarianten für individuell optimierte progressive Brillengläser.

Mit dem erfindungsgemäßen Verfahren zum Erzeugen bzw. Berechnen eines Designs für ein progressives Brillenglas können schon mit wenigen Parametern aus einem ausgewogenen Startdesign (z.B. einem Universaldesign, einem Nahdesign, etc.) beliebig viele Designs abgeleitet werden, wobei die Übergängen stufenlos sind. In einer bevorzugten Ausführungsform behalten alle aus dem Startdesign abgeleiteten Designs vorzugsweise die gleiche charakteristische Eigenschaft des Brechwertverlaufes entlang der Hauptlinie und damit zusätzlich auch die minimale Breite im Progressionskanal. Es ist folglich im Nachhinein möglich, nahezu alle denkbaren Kombinationen von Sehfeldgrößen und Gradientenverläufe zu erzeugen, ohne daß jeweils ein neues Design über den kompletten Wirkungsbereich erarbeitet werden muß. Da beim erfindungsgemäßen Vorgehen nicht die Grund- bzw. Startdesigns direkt abgeändert werden müssen, sondern erst kurz vor der Optimierung die Koeffizienten zur Erzeugung der Sollvorgaben anhand der zusätzlichen Parameter angepaßt werden, können damit rasch geeignete Anwendungsdesigns abgeleitet werden. Insbesondere eignet sich das erfindungsgemäße Verfahren besonders für einen per Datenbank gesteuerten Berechnungsablauf. Da mit dem erfindungsgemäßen Verfahren unterschiedliche Designvarianten schnell und effizient erzeugt und gegeneinander getestet werden können, kann der Aufwand für die Entwicklung und Herstellung von konventionellen, wirkungsoptimierten oder individuellen progressiven Brillengläsern erheblich reduziert werden.

Zusätzlich kann eine Anpassung an die frei festlegbaren Positionen der Nah- und/oder Fembezugspunkte des Brillenträgers und somit an unterschiedliche Progressionslängen durchgeführt werden. Insbesondere können die bestehenden Optimierungsvorgaben bzw. das bestehende Startdesign beliebig gestreckt und gestaucht und somit an die individuelle Gebrauchssituation und insbesondere an eine individuell ermittelte Progressionslänge angepaßt werden. Dabei ist keine Interpolation der Sollvorgaben von verschiedenen Designs (z.B. verschiedenen Startdesigns, welche unterschiedliche Progressionslänge aufweisen) notwendig. Somit können aus einem vorhandenen Startdesign zusätzlich Varianten mit unterschiedlicher (längerer oder kürzerer) Progressionszone bzw. Progressionslänge schnell und effizient erzeugt werden.

Ebenfalls ist es möglich, eine zusätzliche automatische Anpassung der Objektabstandsfunktion und somit eine automatische Anpassung des Sollbrechwertverlaufs vorzunehmen.

Das berechnete Brillenglasdesign kann ein Brillenglasdesign für ein progressives Brillenglas mit einer objektseitigen oder vorzugsweise augenseitigen progressiven Fläche sein. Die gegenüberliegende Fläche kann vorzugsweise eine einfache sphärische oder rotationssymmetrisch asphärische Fläche sein. Ebenfalls ist es möglich nach dem oben beschriebenen Verfahren, ein Brillenglasdesign für ein doppelprogressives Brillenglas zu berechnen bzw. erzeugen.

Ferner wird gemäß eines weiteren Aspekts des Erfindung eine Vorrichtung zum Erzeugen bzw. Berechnen eines progressiven Brillenglasdesigns bzw. eines Designs für ein progressives Brillenglas bereitgestellt, umfassend Designberechnungs- bzw. Designtransformationsmittel, welche ausgelegt sind, ein bevorzugtes Verfahren zum Erzeugen bzw. Berechnen eines progressiven Brillenglasdesign mittels einer Transformation eines vorgegebenen Startdesigns durchzuführen.

Das Startdesign umfaßt:

- Vorgaben für den Verlauf einer Hauptlinie HL; und
- die Vorgabe zumindest einer Basis-Sollisoastigmatismuslinie $I_G$ mit einem konstanten Basis-Sollastigmatismus $A_G$ = $const$ , wobei die Basis-Sollisoastigmatismuslinie $I_G$ durch zumindest einen ersten vorgegebenen Steuerpunkt $r_1$ = $(u_1, y_1)$ verläuft.

Insbesondere umfassen die Designberechungs bzw. -transformationsmittel:

- Steuerpunktänderungsmittel, welche ausgelegt sind, eine Verschiebung $\vec{r}_1(u_1, y_1) \rightarrow \vec{r}'_1(u'_1, y'_1)$ der Position des ersten Steuerpunkts $\vec{r}_1 = (u_1, y_1)$ entlang einer vorgegebenen bzw. vorgebbaren Kurve durchzuführen, wobei die Verschiebung des ersten Steuerpunkts $\vec{r}_1 = (u_1, y_1)$ unter Berücksichtigung von design- und/oder brillenglasträgerspezifischen Daten erfolgt;
- Basis-Sollisoastigmatismuslinien-Berechnungsmittel, welche ausgelegt sind, eine abgeänderte Basis-Sollisoastigmatismuslinie $I'_G$ derart zu berechnen, daß diese durch den verschobenen ersten Steuerpunkt $\vec{r}_1(u'_1, y'_1)$ verläuft,
- Berechnungsmittel welche ausgelegt sind, ein Erzeugen bzw. Berechnen einer Sollastigmatismusverteilung $A(u, y)$, welche die abgeänderte Sollisoastigmatismuslinie $I'_G$ aufweist, durchzuführen,

wobei

$x$ die horizontale Koordinate;
$y$ die vertikale Koordinate;
$u$ den horizontalen Abstand eines Punktes $(x, y)$ von der Hauptlinie; und $A(u, y)$ die Sollastigmatismuswerte des transformierten Startdesigns

bezeichnen.

Die Vorrichtung zum Erzeugen bzw. Berechnen eines progressiven Brillenglasdesigns kann ferner Erfassungsmittel umfassen, welche ausgelegt sind, individuelle Daten des Brillenträgers zu erfassen.

Das Startdesign kann in einem Speicher dauerhaft oder temporär gespeichert werden. Die Designberechnungsbzw. Designtransformationsmittel, welche insbesondere Basis-Sollisoastigmatismuslinien-Berechnungsmittel sowie die Berechnungsmittel zum Erzeugen bzw. Berechnen einer Sollastigmatismusverteilung umfassen können, können mittels entsprechend konfigurierten bzw. programmierten herkömmlichen Computern, spezialisierter Hardware und//oder Computernetze bzw. Computersysteme implementiert werden. Die Designberechnungs- bzw. Designtransformationsmittel und insbesondere die Basis-Sollisoastigmatismuslinien-Berechnungsmittel und/oder die Berechnungsmittel zum Erzeugen bzw. Berechnen einer Sollastigmatismusverteilung können mittels geeigneter Schnittstellen in einer Signalverbindung mit dem Speicher stehen und insbesondere die in dem Speicher gespeicherten Daten auslesen und/oder modifizieren. Die Steuerpunktsänderungsmittel können ferner eine interaktive grafische Benutzerschnittstelle (GUI) umfassen, welche es einem Benutzer ermöglicht, die Positionen der Steuerpunkte zu verändern.

Die Basis-Sollisoastigmatismuslinien-Berechnungsmittel können mittels geeigneter Schnittstellen in einer Signalverbindung mit der grafischen Benutzerschnittstelle stehen. Die Basis-Sollisoastigmatismuslinien-Berechnungsmittel können eine Berechnung einer Basis-Sollisoastigmatismuslinie $I'_G$, welche durch den verschobenen ersten Steuerpunkt $\vec{r}_1(u'_1, y'_1)$ verläuft, in Echtzeit durchführen.

Erfindungsgemäß werden ferner ein Computerprogrammerzeugnis, d.h. ein in der Patentanspruchskategorie einer Vorrichtung beanspruchtes Computerprogramm, sowie ein Speichermedium mit darauf gespeichertem Computerprogramm bereitgestellt, wobei das Computerprogramm ausgelegt ist, wenn geladen und ausgeführt auf einem Computer, ein bevorzugtes erfindungsgemäßes Verfahren zum Erzeugen bzw. Berechnen eines progressives Brillenglasdesigns durchzuführen.

Gemäß eines weiteren Aspekts der Erfindung wird ein Verfahren zum Herstellen eines progressiven Brillenglases vorgeschlagen, umfassend die Schritte:

- Berechnen eines Designs für das progressive Brillenglas nach einem bevorzugten Verfahren zum Erzeugen bzw. Berechnen eines progressiven Brillenglasdesigns; und
- Berechnen bzw. Optimieren des Brillenglases nach dem berechneten Brillenglasdesign.

Ferner kann das Herstellungsverfahren die Schritte:

- Bereitstellen von Flächendaten des berechneten bzw. optimierten Brillenglases; und
- Fertigen des Brillenglases gemäß den bereitgestellten Flächendaten des Brillenglases

umfassen.

Die Fertigung bzw. Bearbeitung kann mittels numerisch gesteuerten CNC-Maschinen, mittels eines Gießverfahrens, einer Kombination der beiden Verfahren oder nach einem anderen geeigneten Verfahren erfolgen.

Das Berechnen bzw. Optimieren des Brillenglases kann eine Minimierung der Zielfunktion:

$$F(\vec{x}) = \sum_{i=1}^{m} \left[ g_{i,Ast} (Ast_i - Ast_{i,Soll})^2 + \ldots \right]$$

umfassen, wobei

$Ast_{i,soll}$     den Sollwert der lokalen astigmatischen Abweichung bzw. des lokalen astigmatischen Fehlers an der $i$-ten Bewertungsstelle;

$Ast_i$     den tatsächlichen Wert der lokalen astigmatischen Abweichung bzw. des lokalen astigmatischen Fehlers an der $i$-ten Bewertungsstelle;

$g_{i,Ast}$     die lokale Gewichtung der astigmatischen Abweichung bzw. des lokalen astigmatischen Fehlers an der i-ten Bewertungsstelle

bezeichnen.

In der obigen Formel ist $Ast_{i,soll}$ die zuvor ermittelte und dem progressiven Brillenglasdesign zugeordnete Sollastigmatismusverteilung in der jeweiligen $i$-ten Bewertungsstelle.

Ferner bevorzugt geht in die Zielfunktion ebenfalls der Refraktionsfehler $\Delta R$ ein, so daß das Berechnen bzw. Optimieren des Brillenglases eine Minimierung der Zielfunktion:

$$F(\vec{x}) = \sum_{i=1}^{m} \left[ g_{i,\Delta R} (\Delta R_i - \Delta R_{i,Soll})^2 + g_{i,Ast} (Ast_i - Ast_{i,Soll})^2 + \ldots \right]$$

umfaßt, wobei

$\Delta R_{i,Soll}$     den Sollwert des lokalen Refraktionsfehlers an der $i$-ten Bewertungsstelle;

$\Delta R_i$     den tatsächlichen Wert des lokalen Refraktionsfehlers an der $i$-ten Bewertungsstelle;

$g_{i,\Delta R}$     die lokale Gewichtung der Refraktionsfehlers an der $i$-ten Bewertungsstelle

bezeichnen.

Die lokale Gewichtung $g_{i,Ast}$ kann nach der folgenden Formel berechnet werden: $\quad g_{i,Ast} = \dfrac{1}{Ast_{i,soll}^p}$.

Es ist jedoch auch möglich, die vorgegebene lokale Gewichtung $g_{i,Ast}$ zusätzlich mit einem Gewichtsfaktor $G_{i,Ast}$ zu skalieren.

Die Gewichtungsfaktoren $g_{i,Ast}$ in der Zielfunktion werden im allgemeinen für das Grund- bzw. Startdesign vorgegeben, so daß ein gutes Optimierungsergebnis erzielt werden kann. Wird nachträglich z.B. die Astigmatismusverteilung geändert, dann kann es zweckmäßig sein, ebenfalls die lokale Gewichtung $g_{i,Ast}$ entsprechend anzupassen. So können Sehbereiche, in denen kleine astigmatische Fehler (kleiner $Ast_{soll}$) vorgegeben werden, höher gewichtet werden als die peripheren Sehbereiche.

Für Werte des Sollastigmatismus $Ast_{soll} < 1{,}0$ wird die Funktion $\dfrac{1}{Ast_{i,soll}^p}$ größer als 1 und für Werte $Ast_{soll}$ > 1,0 wird die Funktion kleiner als 1. Je größer die Potenz $p$, desto steiler verläuft die Funktion und desto stärker werden die Bereiche mit $Ast_{soll} < 1{,}0$ gewichtet. Vorzugsweise ist $p \leq 1$, zum Beispiel p = 0,15.

Gemäß eines weiteren Ausführungsbeispiel gilt für die lokale Gewichtung $g_{i,Ast}$: $\quad g_{i,Ast} = \dfrac{1}{Ast_{i,soll}^p}$ für $Ast_{soll} \leq 1{,}0$ und $g_{i,Ast} = 1$ für $Ast_{soll} > 1{,}0$.

Die lokale Gewichtung $g_{i,\Delta R}$ des Refraktionsfehlers in der $i$-ten Bewertungsstelle kann in ähnlicher Weise in Abhängigkeit von der Größe des Refraktionsfehlers skaliert werden.

Die oben beschriebene Anpassung der lokalen Gewichtungen, welche in die Zielfunktion für das Optimieren des Brillenglases eingeht, kann selbstverständlich unabhängig von der Art und Weise, wie die Soll- bzw. Zielwerte (Sollastigmatismuswerte und/oder Soll-Refraktionswerte) ermittelt worden sind, angewandt werden. Ein Aspekt der Erfindung betrifft daher ein Verfahren zum Berechnen bzw. Optimieren eines Brillenglases umfassend die Schritte:

- Vorgeben einer Sollastigmatismusvereilung $Ast_{i,Soll}$;
- Berechnen bzw. Optimieren des Brillenglases mittels Minimierung einer Zielfunktion der Form:

$$F(\vec{x}) = \sum_{i=1}^{m} \left[ g_{i,Ast}(Ast_i - Ast_{i,Soll})^2 + \ldots \right],$$

wobei:

$Ast_{i,Soll}$ den Sollwert der lokalen astigmatischen Abweichung bzw. des lokalen astigmatischen Fehlers an der $i$-ten Bewertungsstelle;

$Ast_i$ den tatsächlichen Wert der lokalen astigmatischen Abweichung bzw. des lokalen astigmatischen Fehlers an der $i$-ten Bewertungsstelle;

$g_{i,Ast}$ die lokale Gewichtung der astigmatischen Abweichung bzw. des lokalen astigmatischen Fehlers an der $i$-ten Bewertungsstelle

bezeichnen; und
wobei für die lokale Gewichtung $g_{i,Ast}$ gilt:

$$g_{i,Ast} = \frac{1}{Ast_{i,soll}^{p}},$$

wobei $p$ eine vorgegebene bzw. vorgebbare Konstante, welche vorzugsweise kleiner oder gleich 1 ist, bezeichnet.

Ebenfalls betrifft ein Aspekt der Erfindung ein entsprechendes Computerprogrammprodukt sowie eine entsprechende Vorrichtung zum Durchführen des Verfahrens zum Berechnen und Optimieren des Brillenglases.

Die Berechnung bzw. Optimierung des Brillenglases kann ferner unter Berücksichtigung von zumindest zu einem Teil individueller Daten des Brillenträgers erfolgen.

Gemäß eines weiteren Aspekts der Erfindung wird eine Vorrichtung zum Herstellen eines progressiven Brillenglases vorgeschlagen, umfassend:

- Designberechnungs- bzw. Designtransformationsmittel, welche ausgelegt sind, ein Design für das progressive Brillenglas nach einem bevorzugten Verfahren zum Erzeugen bzw. Berechnen eines progressiven Brillenglasdesigns mittels einer Transformation eines Startdesigns zu berechnen bzw. erzeugen; und
- Optimierungs- bzw. Berechnungsmittel, welche ausgelegt sind, ein Berechnen bzw. Optimieren des Brillenglases nach dem berechneten Design durchzuführen.

Das Startdesign umfaßt:

- Vorgaben für den Verlauf einer Hauptlinie $HL$; und
- die Vorgabe zumindest einer Basis-Sollisoastigmatismuslinie $I_G$ mit einem konstanten Basis-Sollastigmatismus $A_G$ = $const$, wobei die Basis-Sollisoastigmatismuslinie $I_G$ durch zumindest einen ersten vorgegebenen Steuerpunkt $\vec{r}_1$ = $(u_1, y_1)$ verläuft.

Insbesondere umfassen die Designberechungs- bzw. Designtransformationsmittel:

- Steuerpunktänderungsmittel, welche ausgelegt sind, eine Verschiebung $\vec{r}_1(u_1,y_1) \rightarrow \vec{r}'_1 (u'_1, y'_1)$ der Position des ersten Steuerpunkts $\vec{r}_1$ = $(u_1, y_1)$ entlang einer vorgegebenen bzw. vorgebbaren Kurve durchzuführen, wobei die Verschiebung des ersten Steuerpunkts $\vec{r}_1$ = $(u_1, y_1)$ unter Berücksichtigung von design- und/oder brillenglasträgerspezifischen erfolgt;

- Basis-Sollisoastigmatismuslinien-Berechnungsmittel, welche ausgelegt sind, eine abgeänderte Basis-Sollisoastigmatismuslinie $l'_G$ derart zu berechnen, daß diese durch den verschobenen ersten Steuerpunkt $\vec{r}_1$ $(u'_1, y'_1)$ verläuft,
- Berechnungsmittel welche ausgelegt sind, ein Erzeugen bzw. Berechnen einer Sollastigmatismusverteilung $A(u,y)$, welche die abgeänderte Sollisoastigmatismuslinie $l'_G$ aufweist, durchzuführen,

wobei

x die horizontale Koordinate;
y die vertikale Koordinate;
u den horizontalen Abstand eines Punktes (x, y) von der Hauptlinie; und
A(u, y) die Sollastigmatismuswerte des transformierten Startdesigns

bezeichnen.

Die Optimierungs- bzw. Berechnungsmittel können - sowie die Designberechungs- bzw. Designtransformationsmittel mittels geeignet konfigurierten bzw. programmierten Computern, spezialisierte Hardware und/oder Computernetze bzw. Computersysteme und so weiter implementiert werden. Es ist möglich, daß der gleiche Computer bzw. das gleiche Computersystem derart konfiguriert bzw. programmiert ist, sowohl die Berechnung des Designs für das Brillenglas als auch die Berechnung bzw. Optimierung des Brillenglases nach dem berechneten Design durchzuführen. Es ist jedoch selbstverständlich möglich, daß die Berechnung des Designs und die Berechnung des Brillenglases nach dem berechneten Design in separaten Recheneinheiten, beispielsweise in separaten Computern oder Computersystemen erfolgen.

Ferner kann die Vorrichtung zum Herstellen eines progressiven Brillenglases vorzugsweise Bearbeitungsmittel zum fertig Bearbeiten des Brillenglases umfassen. Die Bearbeitungsmittel könnten z.B. CNC gesteuerte Maschinen zur Direktbearbeitung eines Blanks nach den ermittelten Optimierungsvorgaben umfassen. Vorzugsweise weist das fertig bearbeitete Brillenglas eine einfache sphärische oder rotationssymmetrisch asphärische Fläche und eine nach den erfindungsgemäß berechneten Designvorgaben sowie individuellen Parametern des Brillenträgers optimierte progressive Fläche auf. Vorzugsweise ist die sphärische oder rotationssymmetrisch asphärische Fläche die Vorderfläche (d.h. die objektseitige Fläche) des Brillenglases. Selbstverständlich ist es jedoch möglich, die nach dem berechneten Design optimierte Fläche als Vorderfläche des Brillenglases anzuordnen. Ebenfalls ist es möglich, daß beide Flächen des Brillenglases progressive Flächen sind.

Ebenfalls kann die Vorrichtung zum Herstellen eines progressiven Brillenglases ferner Erfassungsmittel zum Erfassen von individuellen Daten des Brillenträgers umfassen. Die Erfassungsmittel können insbesondere grafische Benutzerschnittstellen umfassen.

Erfindungsgemäß werden ferner ein Computerprogrammerzeugnis, d.h. ein in der Patentanspruchskategorie einer Vorrichtung beanspruchtes Computerprogramm, sowie ein Speichermedium mit darauf gespeichertem Computerprogramm bereitgestellt, wobei das Computerprogramm ausgelegt ist, wenn geladen und ausgeführt auf einem Computer, ein Verfahren zum Berechnen und Optimieren eines progressiven Brillenglases durchzuführen, wobei das Verfahren folgende Schritte umfaßt:

- Berechnen eines Designs für das progressive Brillenglas nach einem bevorzugten Verfahren zum Erzeugen bzw. Berechnen eines progressiven Brillenglasdesigns;
- Berechnen bzw. Optimieren des progressiven Brillenglases nach dem berechneten individuellen Design.

Ein nach einem bevorzugten Herstellungsverfahren hergestelltes progressives Brillenglas kann in einer vorgegebenen durchschnittlichen oder individuellen Gebrauchsstellung des Brillenglases vor den Augen eines bestimmten Brillenträgers zur Korrektur einer Fehlsichtigkeit des Brillenträgers, vervendet werden.

Bevorzugte Ausführungsformen der Erfindung werden nachfolgend unter Bezugnahme auf die Figuren beispielhaft beschrieben.

Fig. 1        Beispiel eines Designs mit Arctan-Darstellung der Basis-Sollisoastigmatismuslinie im Fernteil- bzw. bereich;

Fig. 2        Beispiel eines Designs mit Polynomdarstelung der Basis-Sollisoastigmatismuslinie im Fernteil- bzw. bereich;

Fig. 3        Beispiel der Transformation der Basis-Sollisoastigmatismuslinie;

Fig. 4        Beispiel einer Skalierung der Sollastigmatismuswerte mittels Multiplikation mit einem Skalierungsfaktor;
Fig. 4a Ursprüngliche Sollastigmatismusverteilung;
Fig. 4b Skalierte Sollastigmatismusverteilung;

Fig. 5      ein weiteres Beispiel einer Skalierung der Sollastigmatismuswerte mittels Multiplikation mit einem Skalierungsfaktor;
Fig. 5a Ursprüngliche Sollastigmatismusverteilung;
Fig. 5b Skalierte Sollastigmatismusverteilung;

Fig. 6a      Doppelasymptote $f_2(y)$ in einem Vertikalschnitt bei $u_2$ = 25 mm im Falle eines Designs für ein Brillenglas mit einem breiten Fernbereich;

Fig. 6b      Doppelasymptote $f_2(y)$ in einem Vertikalschnitt bei $u_2$ = 25 mm im Falle eines Designs für ein Brillenglas mit einem breiten Nahteil;

Fig. 7a      Beispiel eines Skalierungsfaktors $s(u, y)$ in den unterschiedlichen Horizontalschnitten (d.h. bei $y = const$) bei einem verbreiterten Fernbereich;

Fig. 7b      Verlauf der Doppelasymptote $f_2(y)$ des in Fig. 7a gezeigten Skalierungsfaktors im Vertikalschnitt bei $u_2$ = 25 mm;

Fig. 7c      Dreidimensionale Darstellung des in Fig. 7a gezeigten Skalierungsfaktors $s(u, y)$ ;

Fig. 8a      Beispiel eines Skalierungsfaktors $s(u, y)$ in den unterschiedlichen Horizontalschnitten (d.h. bei $y = const$) bei einem verbreiterten Nahbereich;

Fig. 8b      Verlauf der Doppelasymptote $f_2(y)$ des in Fig. 8a gezeigten Skalierungsfaktors im Vertikalschnitt bei $u_2$ = 25 mm;

Fig. 8c      Dreidimensionale Darstellung des in Fig. 8a gezeigten Skalierungsfaktors $s(u, y)$ ;

Fig. 9      Beispiel einer grafischen Benutzerschnittstelle zur Änderung eines Startdesigns;

Fig. 10      Beispiel einer Anpassung der lokalen Gewichtungen der Stützstellen

Fig. 11      Beispiel einer grafischen Benutzerschnittstelle zur Eingabe und Änderung der lokalen Gewichtungen;

Fig. 12a      Beispiel eines ersten abgeleiteten Designs und eines entsprechenden progressiven Brillenglases;

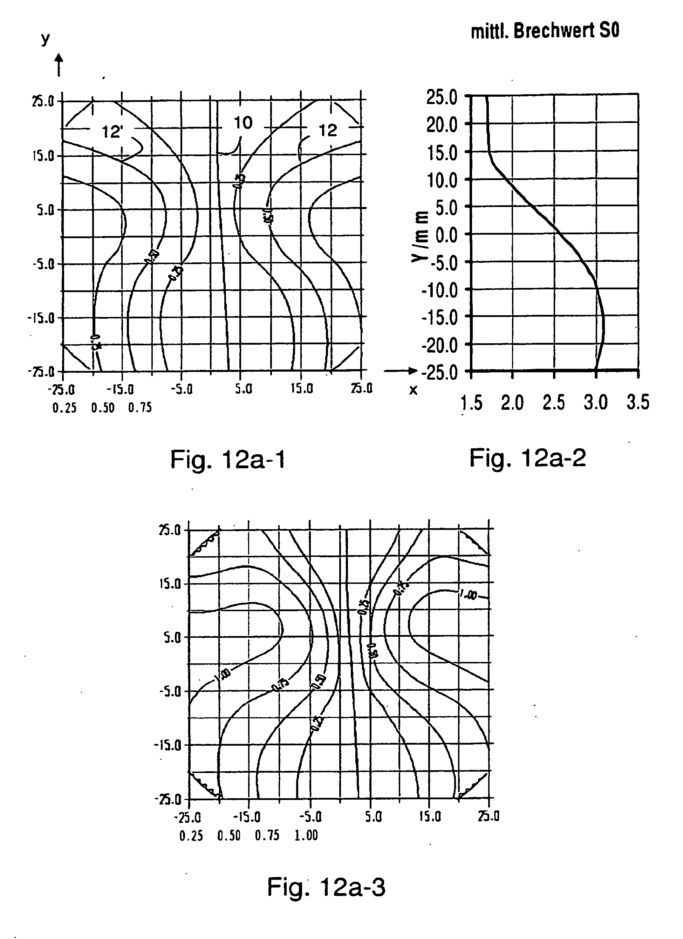

Fig. 12a-1 Sollastigmatismusverteilung;
Fig. 12a-2 Brechwertverlauf entlang der Hauptlinie;
Fig. 12a-3 Ist-Astigmatismusverteilung (in Gebrauchsstellung) eines progressiven Brillenglases, welches nach der in Fig. 12a-1 gezeigten Sollastigmatismusverteilung berechnet bzw. optimiert worden ist;

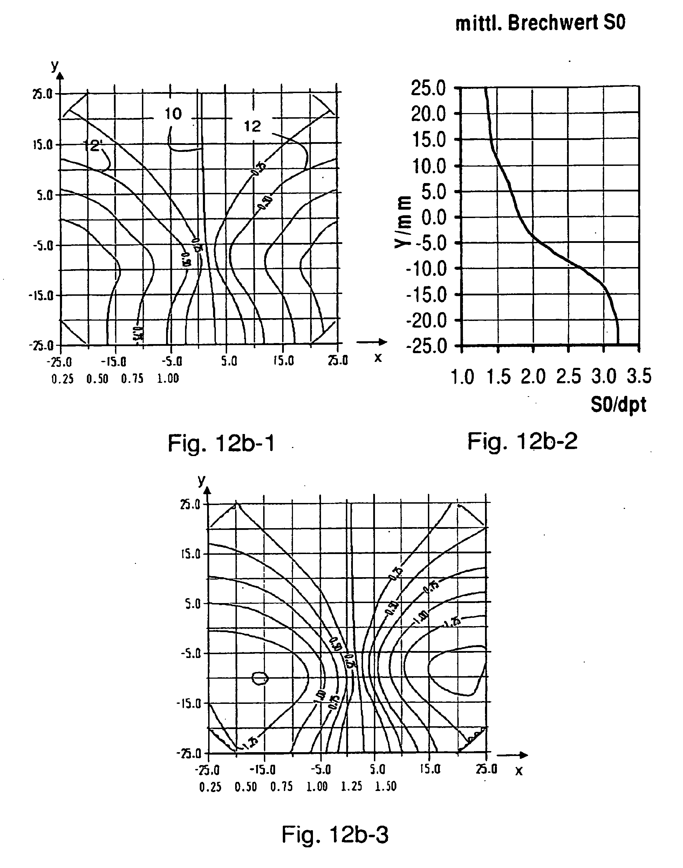

Fig. 12b      Beispiel eines ersten abgeleiteten Designs und eines entsprechenden progressiven Brillenglases;
Fig. 12b-1 Sollastigmatismusverteilung;
Fig. 12b-2 Brechwertverlauf entlang der Hauptlinie;
Fig. 12b-3 Ist-Astigmatismusverteilung (in Gebrauchsstellung) eines progressiven Brillenglases, welches nach der in Fig. 12b-1 gezeigten Sollastigmatismusverteilung berechnet bzw. optimiert worden ist;

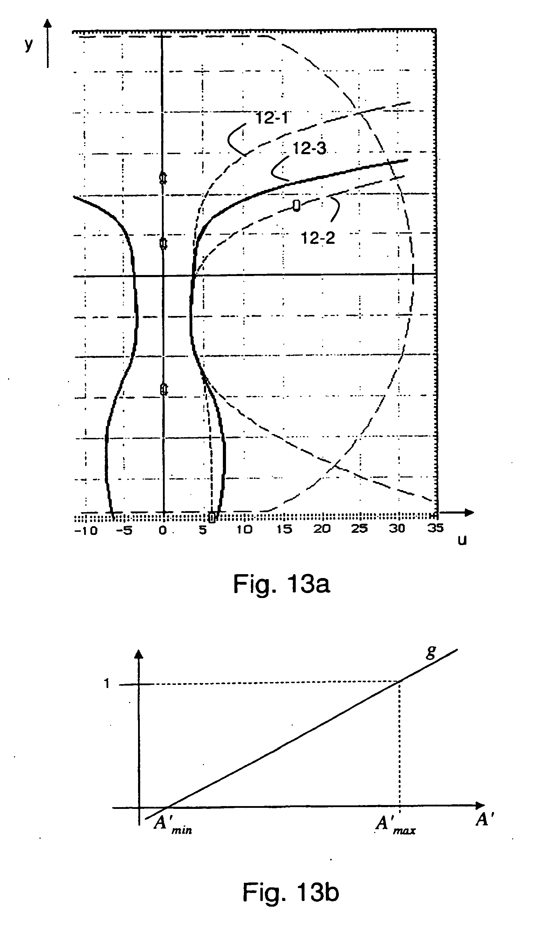

Fig. 13a      Beispiele von Basis-Sollisoastigmatismuslinien, welche nach dem Satz vom Minkwitz, anhand des aktuellen Objektabstandverlaufs und dem Akkommodationsmodell sowie anhand einer Kombination der beiden Modelle berechnet werden;

Fig. 13b      Beispiel einer Gewichtung der beiden Modelle; .

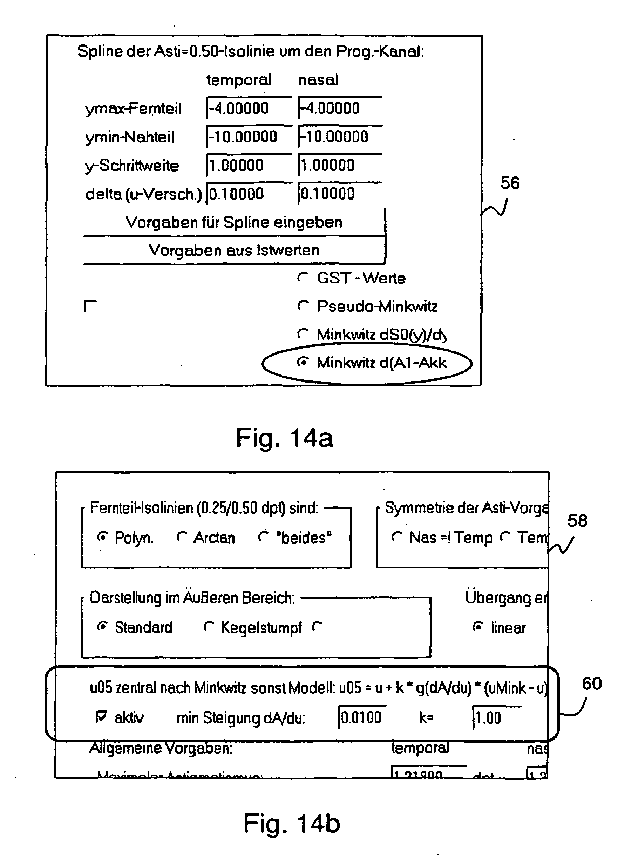

Fig. 14a,b      Beispiele graphischer Benutzerschnittstellen zur Eingabe der Parameter der Basis-Sollisoastigmatismuslinie;

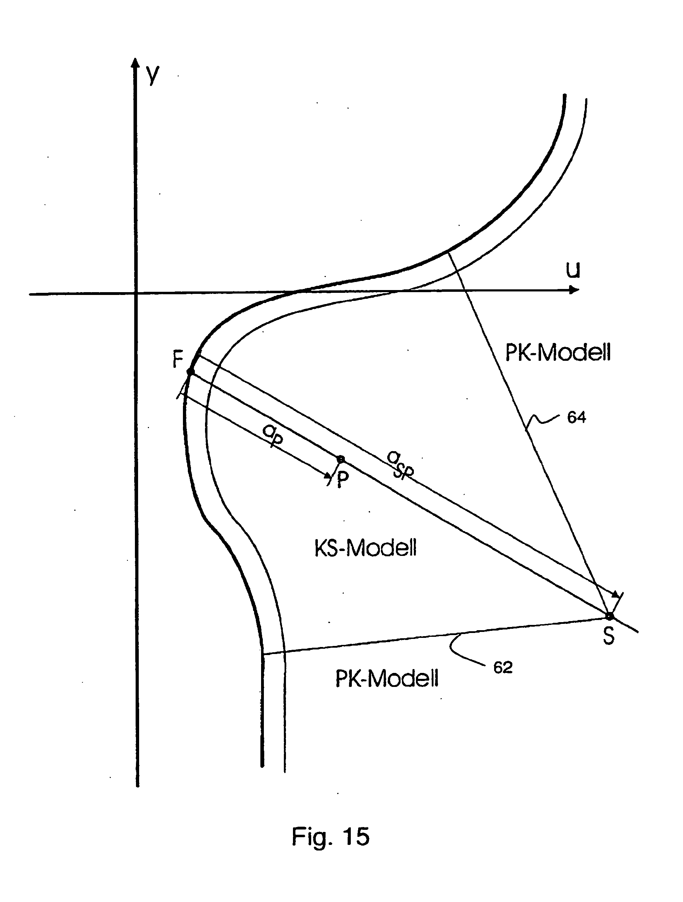

Fig. 15      Beispiel der Berechnung der Sollastigmatismuswerte in der Peripherie des Brillenglases;

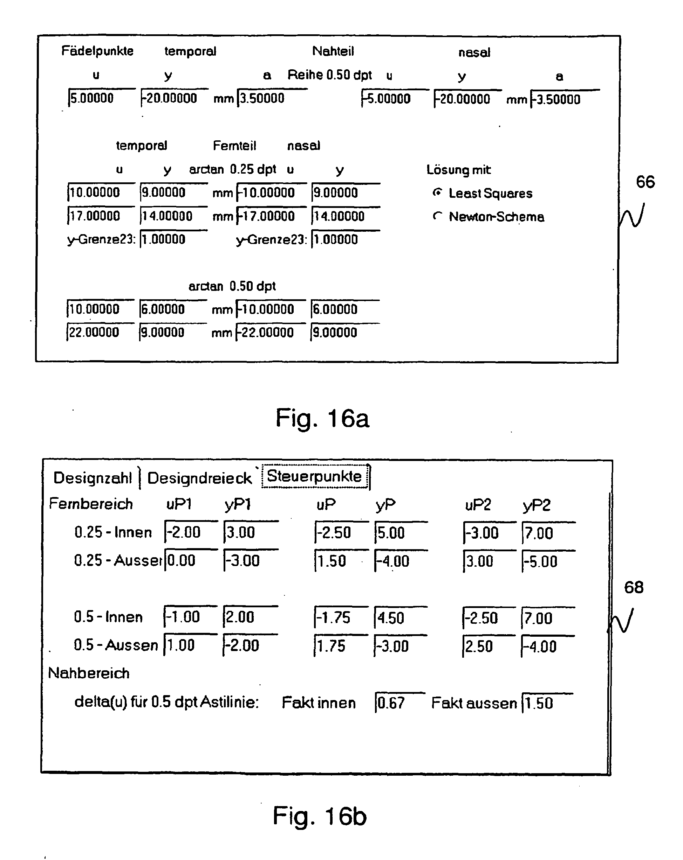

Fig. 16a      Beispiel einer graphischen Benutzerschnittstelle zur Eingabe und Änderung der Steuerpunkte mit eingegebenen Parametern eines Startdesigns;

Fig. 16b      Beispiel einer graphischen Benutzerschnittstelle zur Eingabe und Änderung der maximalen Variation der Steuerpunkte des Startdesigns;

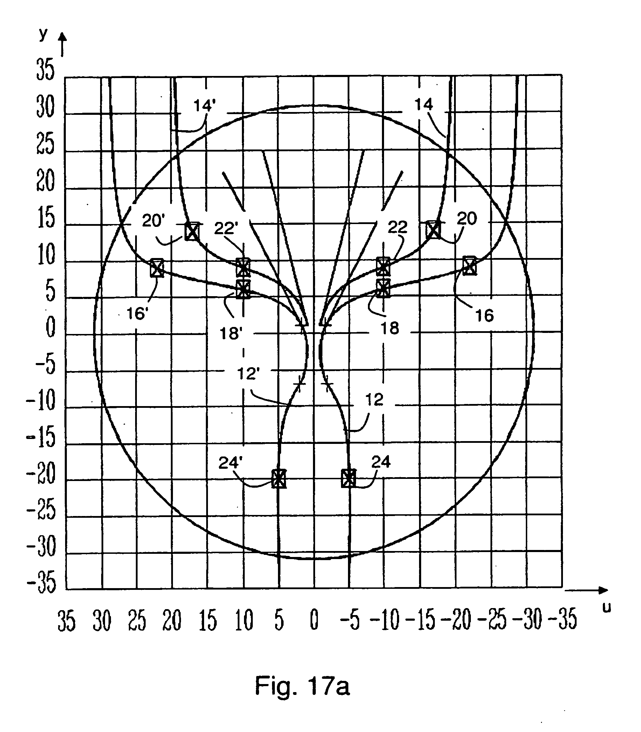

Fig. 17a      Konstruktionslinien und Steuerpunkte eines Startdesigns;

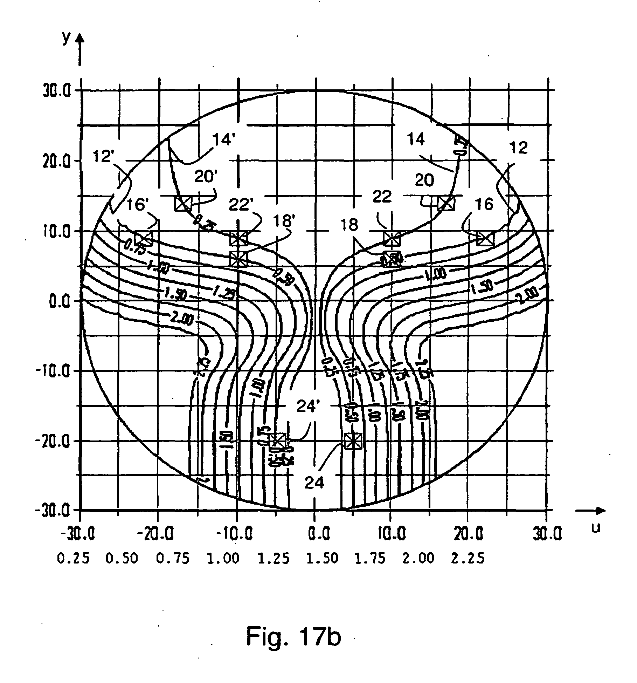

Fig. 17b      Sollastigmatismusverteilung des in Fig. 17a dargestellten Startdesigns;

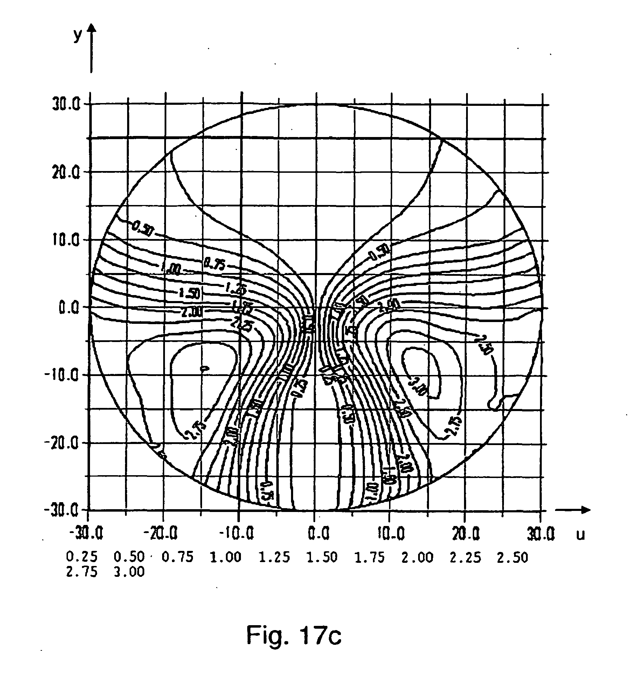

Fig. 17c      Ist-Astigmatismusverteilung (in Gebrauchsstellung) eines nach der in Fig. 17b dargestellten Sollastigmatismusverteilung optimierten Brillenglases;

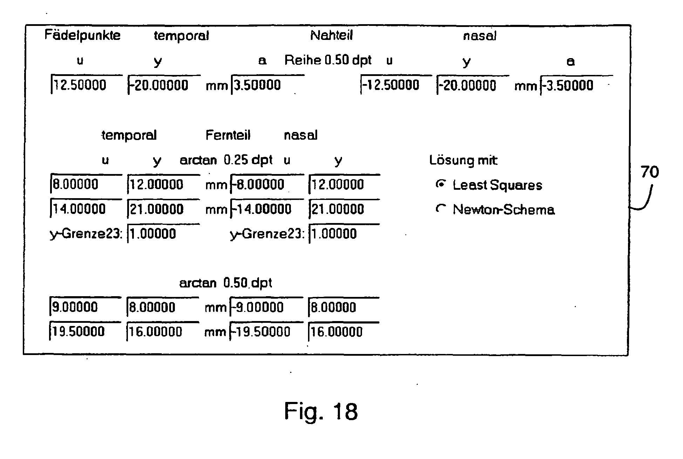

Fig. 18      Beispiel einer graphischen Benutzerschnittstelle zur Eingabe und Änderung der Steuerpunkte mit eingegebenen Parametern eines ersten transformierten Designs;

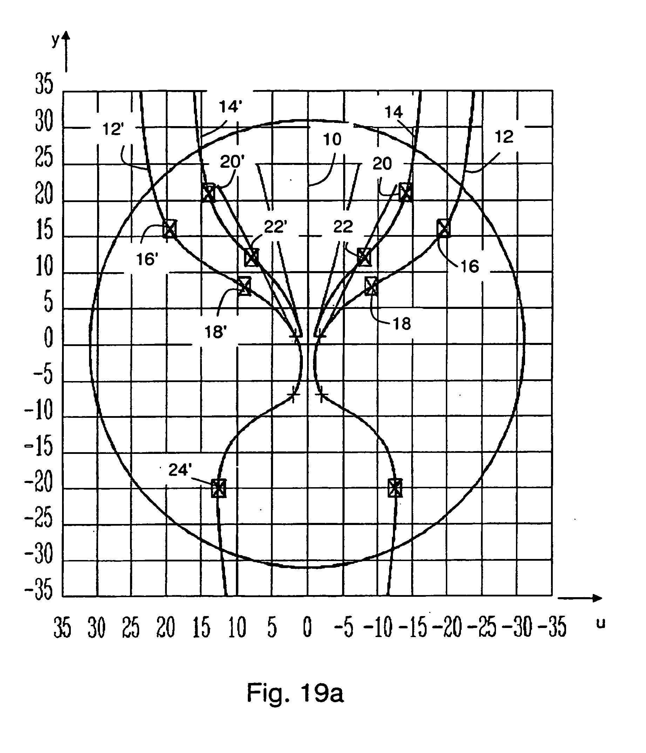

Fig. 19a      Konstruktionslinien und Steuerpunkte des ersten transformierten Designs;

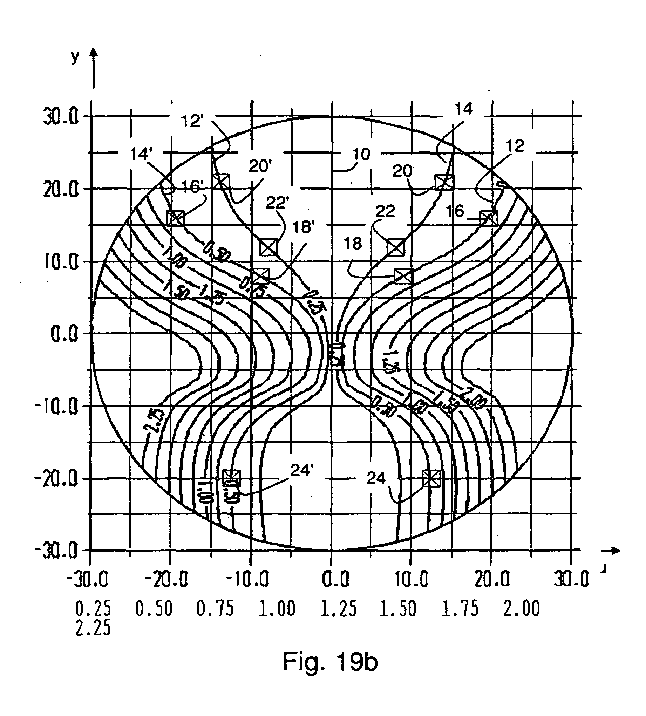

Fig. 19b      Sollastigmatismusverteilung des in Fig. 19a dargestellten transformierten Designs;

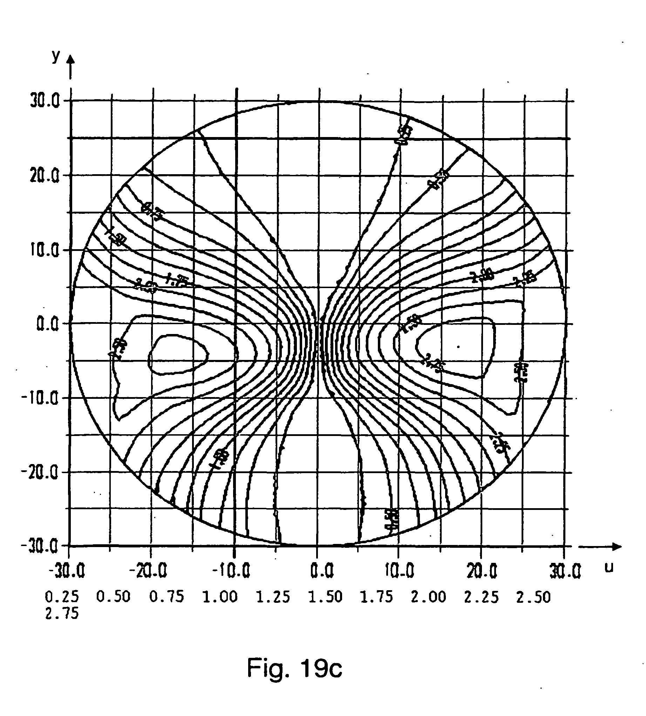

Fig. 19c      Ist-Astigmatismusverteilung (in Gebrauchsstellung) eines nach der in Fig. 19b dargestellten Sollastigmatismusverteilung optimierten Brillenglases;

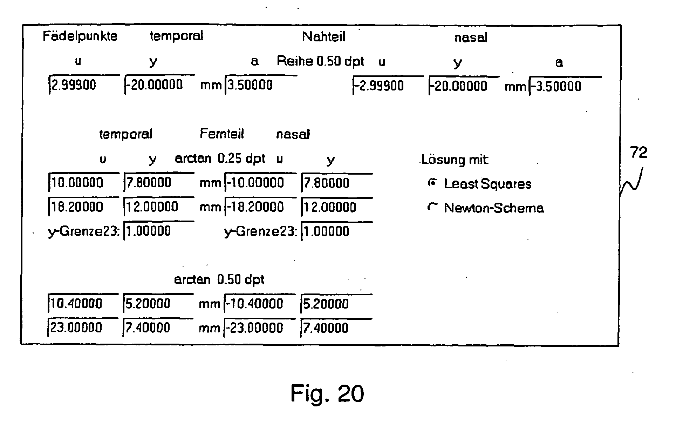

Fig.20      Beispiel einer graphischen Benutzerschnittstelle zur Eingabe und Änderung der Steuerpunkte mit eingegebenen Parametern eines zweiten transformierten Designs;

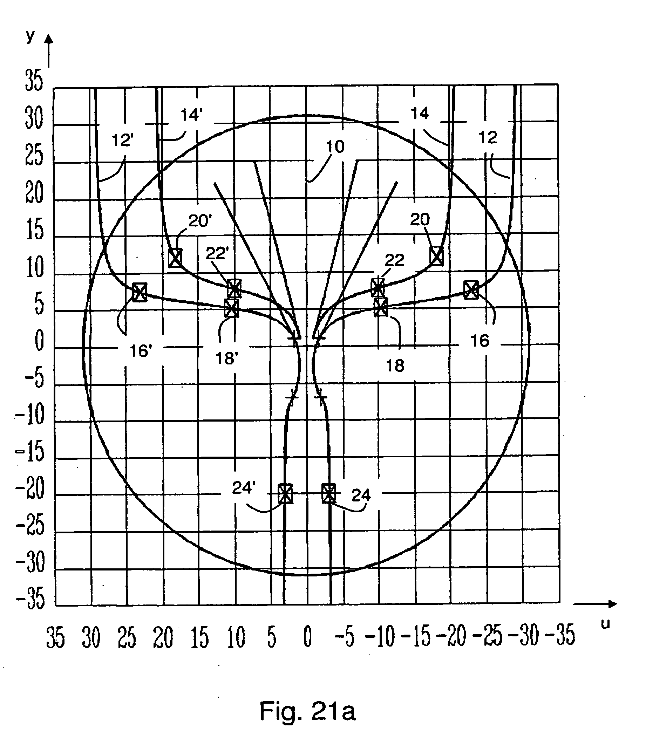

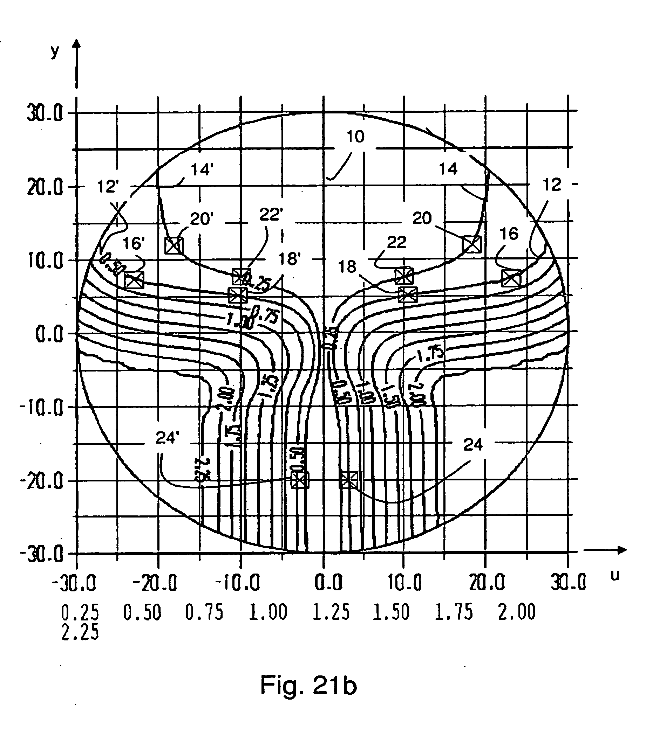

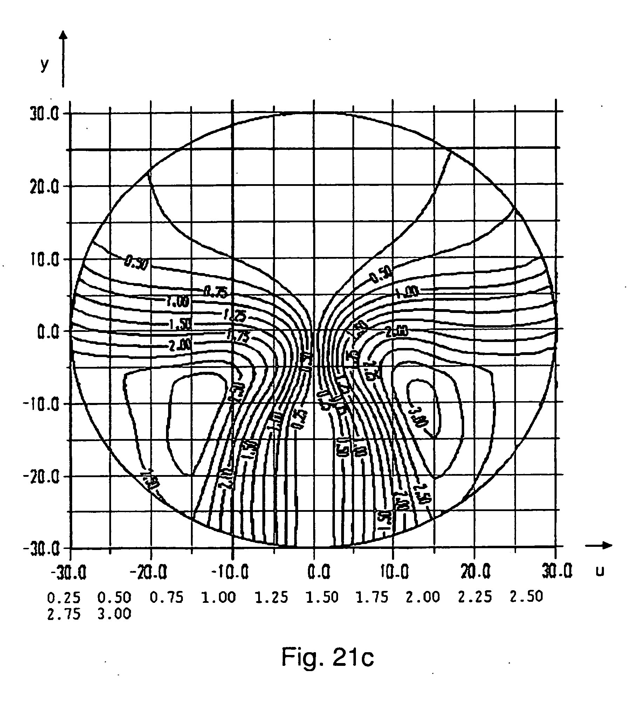

Fig. 21 a      Konstruktionslinien und Steuerpunkte des zweiten transformierten Designs;

Fig. 21 b      Sollastigmatismusverteilung des in Fig. 21 a dargestellten transformierten Designs;

Fig. 21 c      Ist-Astigmatismusverteilung (in Gebrauchsstellung) eines nach der in Fig. 21 b dargestellten Sollastigmatismusverteilung optimierten Brillenglases;

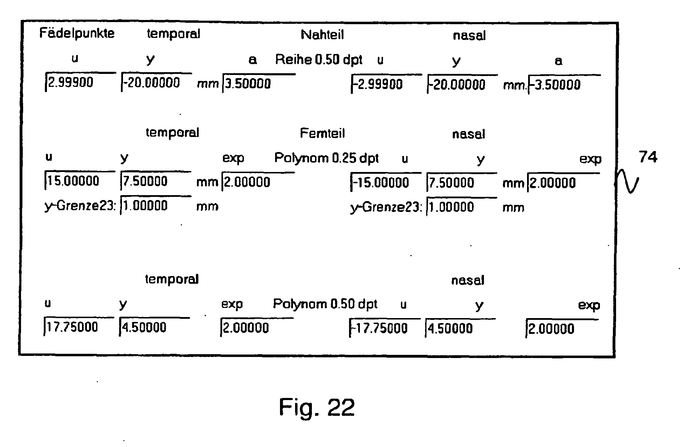

Fig. 22       Beispiel einer graphischen Benutzerschnittstelle zur Eingabe und Änderung der Steuerpunkte mit eingegebenen Parametern eines dritten transformierten Designs;

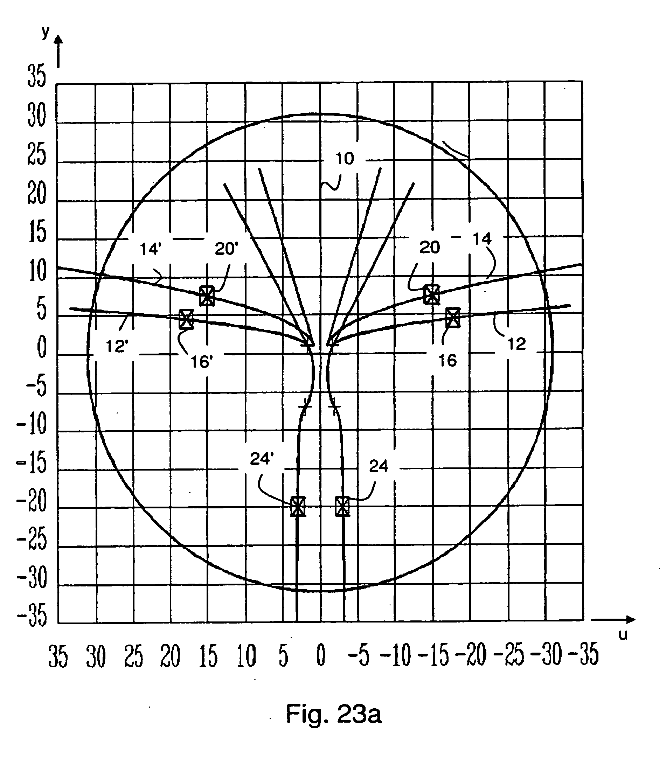

Fig. 23a       Konstruktionslinien und Steuerpunkte des dritten transformierten Designs;

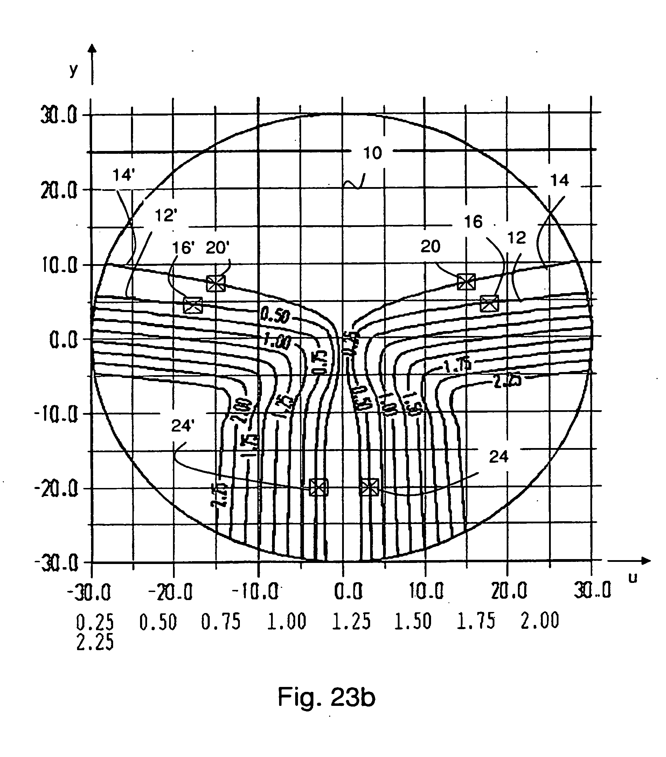

Fig. 23b       Sollastigmatismusverteilung des in Fig. 23a dargestellten transformierten Designs;

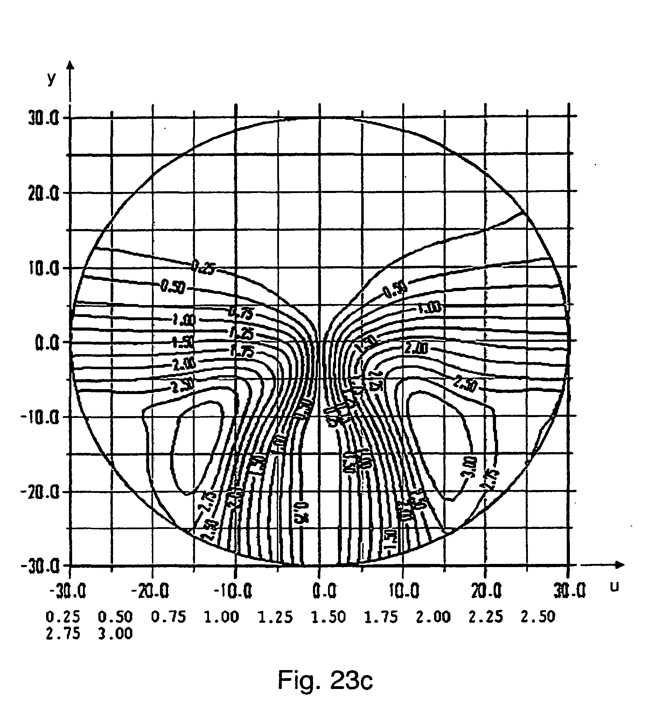

Fig. 23c       Ist-Astigmatismusverteilung (in Gebrauchsstellung) eines nach der in Fig. 23b dargestellten Sollastigmatismusverteilung optimierten Brillenglases;

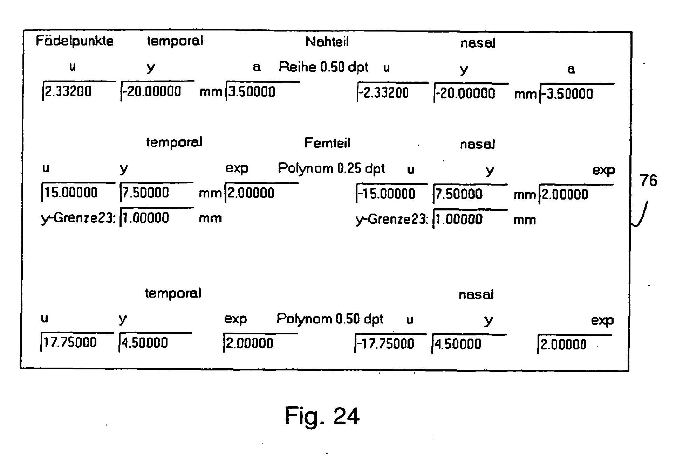

Fig. 24       Beispiel einer graphischen Benutzerschnittstelle zur Eingabe und Änderung der Steuerpunkte mit eingegebenen Parametern eines vierten transformierten Designs;

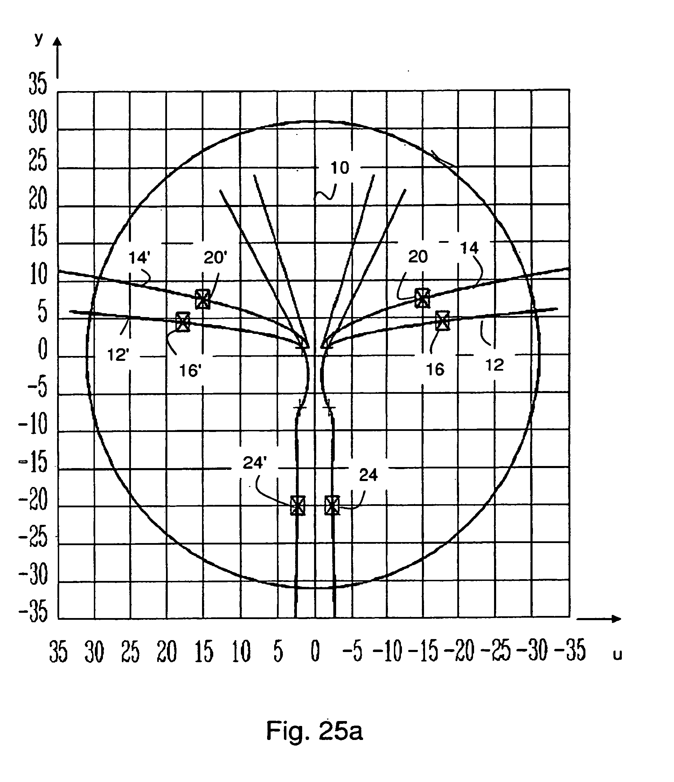

Fig. 25a       Konstruktionslinien und Steuerpunkte des vierten transformierten Designs;

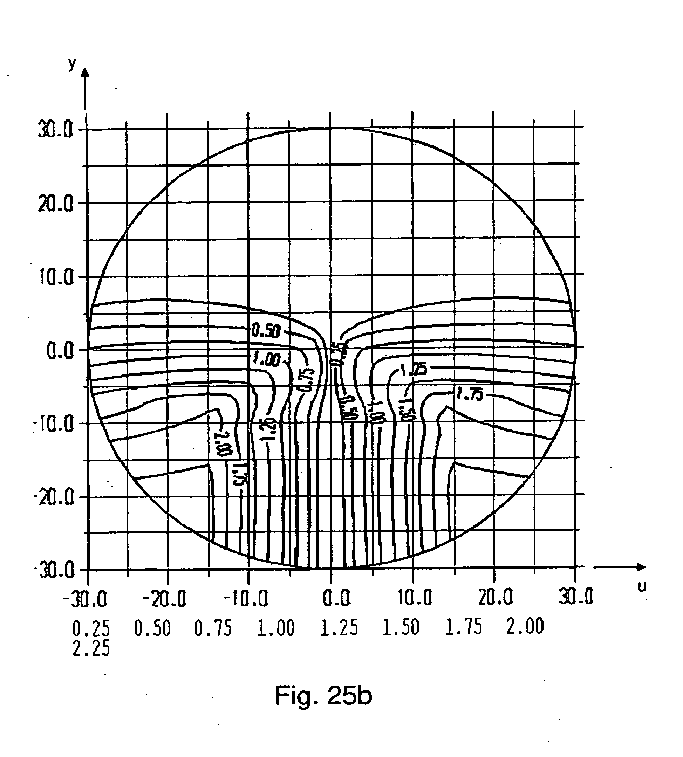

Fig. 25b       Sollastigmatismusverteilung des in Fig. 25a dargestellten transformierten Designs;

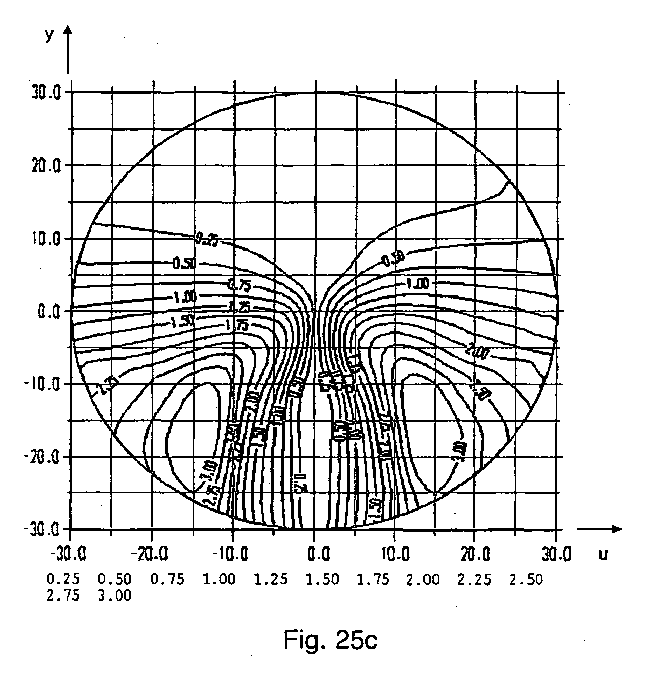

Fig. 25c       Ist-Astigmatismusverteilung (in Gebrauchsstellung) eines nach der in Fig. 25b dargestellten Sollastigmatismusverteilung optimierten Brillenglases;

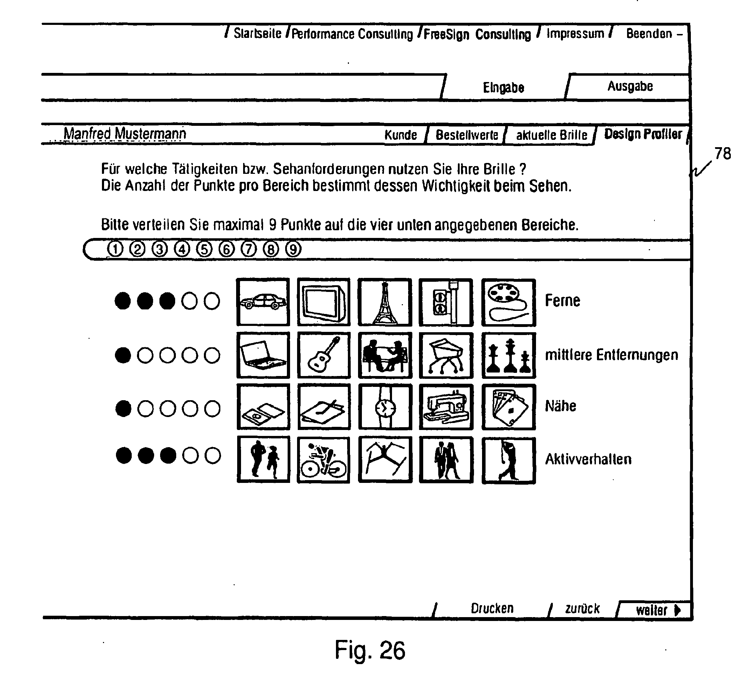

Fig. 26       Beispiel einer graphischen Benutzerschnittstelle zum Erfassen von Kundenpräferenzen;

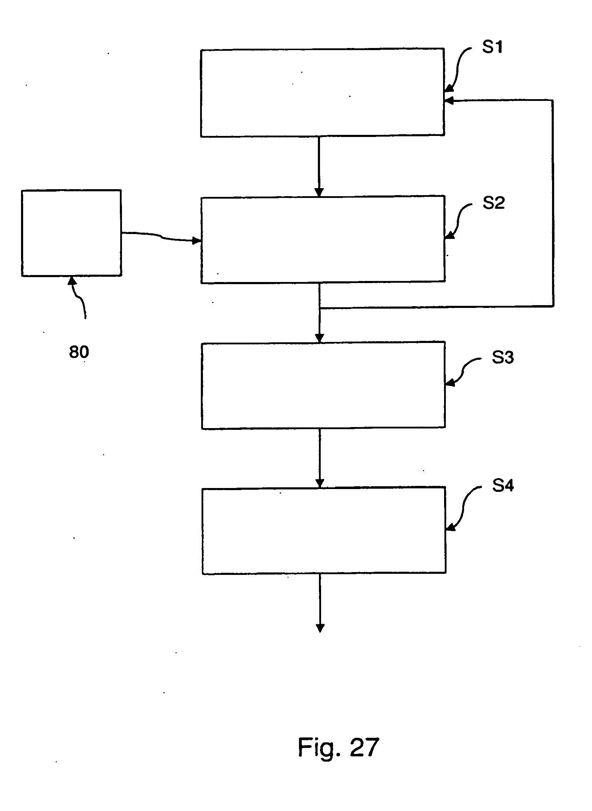

Fig. 27       einen beispielhaften Verfahrensablauf;

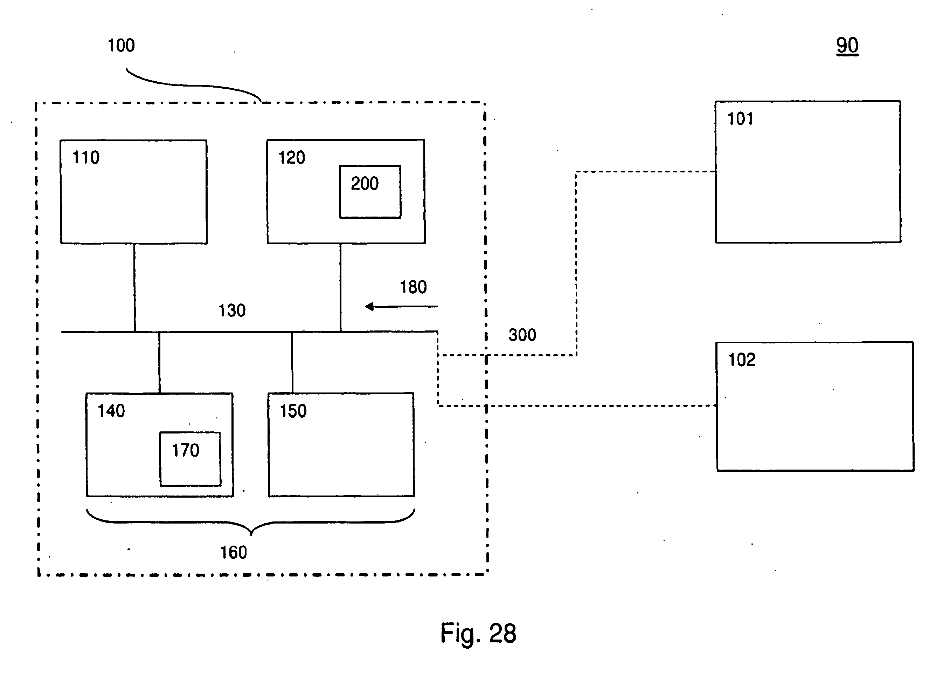

Fig. 28       schematische Darstellung eines Beispiels einer Vorrichtung zum Erzeugen bzw. Berechnen eines progressiven Brillenglasdesigns bzw. eines Designs für ein progressives Brillenglas sowie gegebenenfalls zum Berechnen bzw. Optimieren des Brillenglases nach dem berechneten Design.

Das Koordinatensystem $\{x, y\}$ bezieht sich auf ein kartesisches Koordinatensystem der Vorderfläche, wie oben definiert. Der Koordinatenmittelpunkt fällt mit dem geometrischen Mittelpunkt des Brillenglases zusammen. Das Koordinatensystem $\{u, y\}$ bezieht sich auf ein Koordinatensystem $\{u, y\}$, wie oben definiert. Der Koordinatenmittelpunkt fällt mit dem geometrischen Mittelpunkt des Brillenglases zusammen

In den nachfolgenden Figuren bezeichnet das Bezugszeichen 10 die Hauptlinie, das Bezugszeichen 12 die nasale Basis-Sollisoastigmatismuslinie, das Bezugszeichen 14 die nasale zusätzliche Sollisoastigmatismuslinie; die Bezugszeichen 16 und 18 entsprechend einen ersten (Bezugszeichen 16) und einen zweiten (Bezugszeichen 18) Steuerpunkt der nasalen Basis-Sollisoastigmatismuslinie im Fernbereich; die Bezugszeichen 20 und 22 einen ersten und einen zweiten Steuerpunkt der zusätzlichen nasalen Sollisoastigmatismuslinie im Fernbereich, das Bezugszeichen 24 einen ersten Steuerpunkt der Basis-Sollisoastigmatismuslinie im Nahbereich. Die Steuerpunkte können entlang der mittels Pfeilen dargestellten Geraden 26 (Steuerpunkt 16), 28 (Steuerpunkt 18), 30 (Steuerpunkt 20), 32 (Steuerpunkt 22) und 34 (Steuerpunkt 24) bewegt bzw. verschoben werden. Die mit einem Strich versehenen Bezugszeichen beziehen sich auf die gleichen Elemente auf der temporalen Seite, wobei die Konstruktion der temporalen Basis-Sollisoastigmatismuslinie 12' im wesentlichen gleich der Konstruktion der nasalen Basis-Sollisoastigmatismuslinie 12 und die Konstruktion der temporalen zusätzlichen Sollisoastigmatismuslinie 14' im wesentlichen gleich der Konstruktion der nasalen zusätzlichen Sollisoastigmatismuslinie 14 ist.

In allen gezeigten Figuren ist der konstante Betrag des Astigmatismus entlang der Basis-Sollisoastigmatismuslinie 12 bzw. 12' gleich 0, 5 dpt. Der konstante Betrag des Astigmatismus entlang der zusätzlichen Sollisoastigmatismuslinie 14 bzw. 14' ist 0,25 dpt. Die Zeichen $B_F$, $B_N$ und $B_Z$ bezeichnen jeweils den Fern-, den Nah- und den Zentrierpunkt des Brillenglasdesigns.

Soweit nicht anderes angegeben wird, beziehen sich alle in den Figuren gezeigten Verteilungen des Sollastigmatismus auf Verteilungen des Sollastigmatismus in Gebrauchsstellung des Brillenglases d.h. unter Berücksichtigung des Systems Brillenglas-Auge.

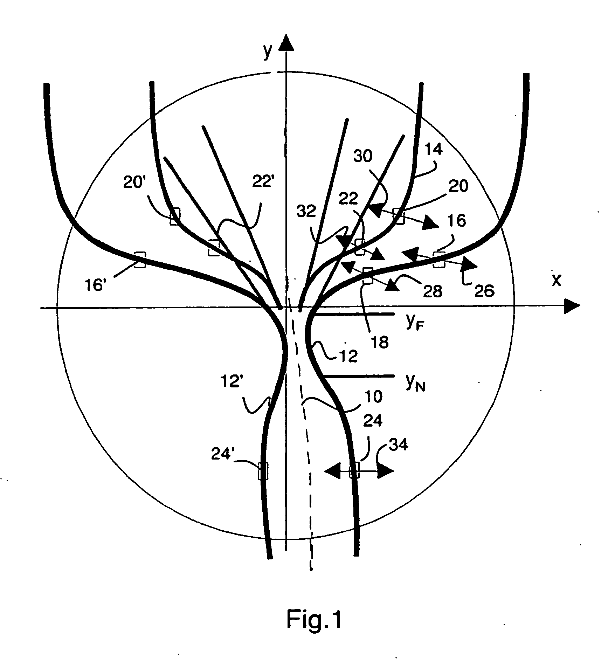

**Figur 1** zeigt die Konstruktionslinien - Hauptlinie, Basis-Sollisoastigmatismuslinie und zusätzliche Sollastigmatismuslinie - sowie die Steuerpunkte eines "weichen" Startdesigns.

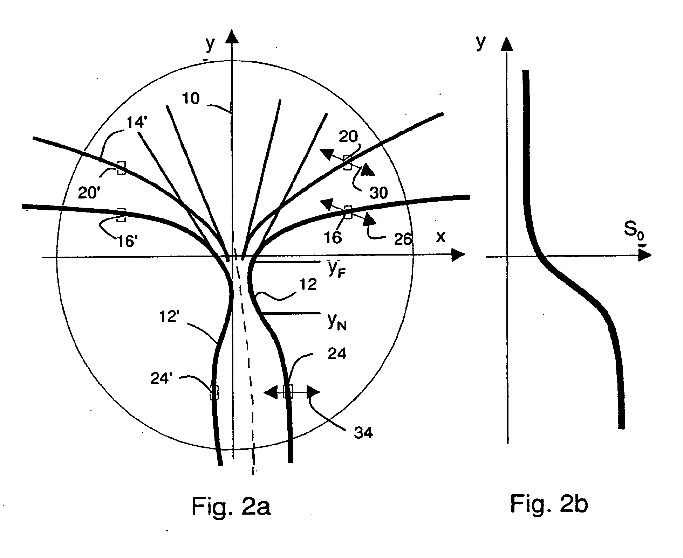

**Figur 2a** zeigt die Konstruktionslinien - Hauptlinie 10, Basis-Sollisoastigmatismuslinie 12 und zusätzliche Sollisoastigmatismuslinie im Fernbereich 14 - sowie die Steuerpunkte eines "harten" Startdesigns. In **Fig. 2b** ist der Brechwertverlauf entlang der Hauptlinie dargestellt. Auf der Abszisse in Fig. 2b ist der Brechwert in dpt und auf der Ordinate die $y$-Koordinate in mm dargestellt.

Im Fernteil des in Fig. 1 gezeigten "weichen" Startdesign ist der Verlauf der Basis-Sollisoastigmatismuslinie 12 (sowohl temporal als auch nasal) durch die Funktion $u_G(y) = a + b(\mathrm{atan}(\frac{y-c}{d}) + \frac{\pi}{2})$ mit den Parametern $a, b, c, d$ vorgegeben (Arctan-Darstellung des Fernteils).

Im Fernteil des in Fig. 2 gezeigten "harten" Startdesigns ist der Verlauf der Basis-Sollisoastigmatismuslinie 12 (sowohl temporal als auch nasal) durch die Funktion $u_G(y) = a_f + b_f y + c_f y^n$ mit den Parametern $a_f, b_f, c_f$ vorgegeben (Polynom-Darstellung des Fernteils).

Im Nahteil sowohl des in Fig. 1 als auch des in Fig. 2 dargestellten Startdesigns ist der Verlauf der Basis-Sollisoastigmatismuslinie 12 (sowohl temporal als auch nasal) durch die Funktion

$$u_G(y) = a_n + \frac{b_n}{y} + \frac{c_n}{y^2} + \frac{d_n}{y^3}$$ mit den Parametern $a_n, b_n, c_n, d_n$, vorgegeben.

Die Steuerpunkte des "weichen" und des "harten" Startdesign können entlang der entsprechenden, jeweils als Pfeilen dargestellten Geraden 26, 28, 30, 32 und 34 nach innen (d.h. in Richtung Hauptlinie) oder nach außen (d.h. in Richtung Peripherie) bewegt bzw. verschoben werden. Der Verlauf der Basis-Sollisoastigmatismuslinie 12 und gegebenenfalls der zusätzlichen Sollisoastigmatismuslinie 14 werden - wie oben beschrieben - derart verändert, daß diese durch die verschobenen Steuerpunkte verlaufen. Gemäß einer Ausführungsform erfolgt zwischen einer vertikalen Koordinate $y_F$ und einer vertikalen Koordinate $y_N$ (d.h. im Progressionsbereich) keine Änderung der nasalen und der temporalen Basis-Sollisoastigmatismuslinien 12 und 12'. Im Progressionsbereich bestimmt die Brechwertzunahme an der Hauptlinie den Verlauf der Basis-Sollisoastigmatismuslinie.

Die Variation der Position der Steuerpunkte 16 bis 24 kann automatisch anhand der design- und/oder brillenglasträgerspezifischen Daten erfolgen.

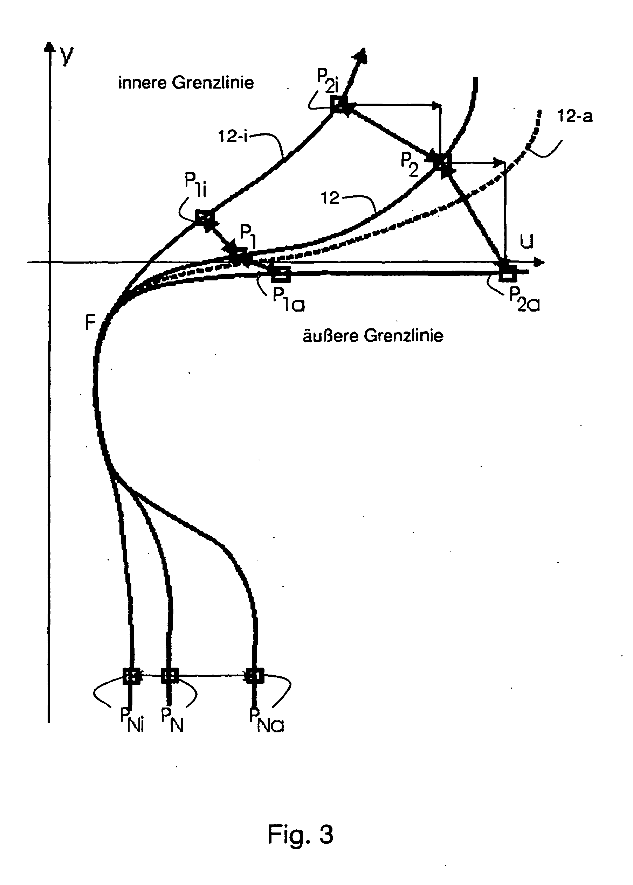

**Figur 3** zeigt im Detail die Variation der Position der Steuerpunkte der Basis-Sollisoastigmatismuslinie 12. Die Basis-Sollisoastigmatismuslinie 12 verläuft durch zwei Steuerpunkte $P_1$ und $P_2$ im Fernteil und durch einen Steuerpunkt $P_N$ im Nahbereich. Die Steuerpunkte $P_1$, $P_2$ und $P_N$ können entlang der als Pfeilen dargestellten Geraden nach innen ($P_1$, $P_2$, $P_N \rightarrow P_{1i}$, $P_{2i}$, $P_{Ni}$) oder nach außen ($P_1$, $P_2$, $P_N \rightarrow P_{1a}$, $P_{2a}$, $P_{Na}$) verschoben werden. Die Transformation des jeweiligen Steuerpunkts kann wie folgt beschrieben werden:

$$\vec{r} = \vec{r}_0 + mt\vec{v} \,,$$

wobei:

$\vec{r}_0$ den ursprünglichen Steuerpunkt;
$\vec{r}$ den verschobenen Steuerpunkt bezeichnen.

Die Verschiebung der Steuerpunkte kann in vorgegebenen Grenzen erfolgen, wobei für die innerste Position eines Steuerpunkts $\vec{r} = \vec{r}_0 + mt_i\vec{v}$ und für die äußerste Position eines Steuerpunkts $\vec{r} = \vec{r}_0 + mt_a\vec{v}$ gilt. Hier bezeichnet $t_a$ die maximale zulässige Verschiebung des Steuerpunkts nach außen und $t_i$ die maximale zulässige Verschiebung des Steuerpunkts nach innen. Die abgeänderte Basis-Sollisoastigmatismuslinie, welche durch den innersten Steuerpunkt verläuft, wird als innere Grenzlinie 12-i bezeichnet. Die abgeänderte Basis-Sollisoastigmatismuslinie, welche durch den äußersten Steuerpunkt verläuft, wird als äußere Grenzlinie 12-a bezeichnet.

Der zum Geradenparameter "$t$" zugehörige Faktor "$m$" ($t = mt_{i,a}$) kann zum Beispiel anhand der Gewichtung des jeweiligen Sehbereichs $g_{F,N}$ ($g_F$ - Gewichtung des Fernbereichs, $g_N$ - Gewichtung des Nahbereichs) ermittelt werden.

So kann der Faktor m beispielsweise anhand der Formel $m = \dfrac{g_{F,N}}{50} - 1$ berechnet werden, wobei für $0 \leq g_{F,N} \leq 100$ -1$\leq m \leq$1 gilt. Bei 0<$g_{F,N}$<50 gilt -1 < $m$ < 0 und es erfolgt eine Verkleinerung des jeweiligen Sehbereichs. Bei 50 < $g_{F,N}$ <100 gilt 0 < $m$ < 1 und es erfolgt eine Verbreiterung des jeweiligen Sehbereich. Bei $g_{F,N}$ =0 erfolgt keine Abänderung des jeweiligen Sehbereichs, bzw. keine Abänderung des jeweiligen Startdesigns.

Die inneren Grenzen ($P_{1i}$, $P_{2i}$, $P_{Ni}$) und die äußeren Grenzen ($P_{1a}$, $P_{2a}$, $P_{Na}$) der Position des jeweiligen Steuerpunkts $P_1$, $P_2$, $P_N$ der Basis-Sollisoastigmatismuslinie können vorgegeben bzw. im Voraus bestimmt werden. Der Geradenparameter $t_G$ und der Richtungsvektor v können dann wie folgt bestimmt werden:

$$t_G = \left| \overline{PP_G} \right| = \sqrt{(\vec{r}_G - \vec{r}_0)^2}$$

und

$$\nu = \frac{\vec{r}_G - \vec{r}_0}{\left| \vec{r}_G - \vec{r}_0 \right|},$$

wobei für die Lage des Steuerpunkts gilt $\vec{r} = \vec{r}_0 + mt_G \vec{v}$.

Die inneren und äußeren Grenzpunkte bzw. deren Positionen können im Voraus im Startdesign gespeichert werden.

Gewichtungen $g_{F,N} \neq 50\%$ verändern die Sehbereichesgrößen und damit auch die Größe des peripheren Bereichs des progressiven Brillenglasdesigns, in welchem die Abbildungsfehler höhere Werte annehmen können und dürfen. Andere Transformationen, wie z.B. eine Stauchung oder eine Streckung des Startdesigns, können ebenfalls die Größe des peripheren Bereichs des Designs verändern. In solchen Fällen kann eine zusätzliche Anpassung des maximal zulässigen Astigmatismus $A_{max}$ vorgenommen werden. Wird z.B. das Ferneteil gedrückt und/oder das Nahteil verbreitet, wird der maximal zulässige Astigmatismus $A_{max}$ erhöht und umgekehrt (Sandkastenmodell für den Astigmatismus). Dies kann z.B. durch eine Multiplikation des maximal zulässigen Astigmatismus $A_{max}$ mit einer einfachen, jedoch zweckmäßigen Funktion erfolgen:

$$A'_{max} = n(g_F, g_N) A_{max},$$

wobei $n(g_F, g_N) = 1 + \frac{p_{Ast\,max}}{100} \frac{(g_F + g_N - 100)}{100}$ ein Skalierungsfaktor ist;

$g_F$ ($0 \le g_F \le 100$) die Gewichtung des Fernbereichs in Prozent ist;
$g_N$ ($0 \le g_N \le 100$) die Gewichtung des Nahbereichs in Prozent ist;
$p_{Ast\,max}$ ($0 \le p_{Ast\,max} \le 50$) die maximal zulässige Anpassung in Prozent ist.

Wenn zum Beispiel $p_{Ast\,max} = 30\%$, und $g_{F;N} = 100\%$, kann der Faktor $n$ bei einer Sehbereichverkleinerung (z.B. bei einem weichen Design) wie folgt berechnet werden:

$$n = 1 + \frac{p_{Ast\,max}}{100} \frac{(g_F + g_N - 100)}{100} = 1 + \frac{15}{100} \frac{(0 + 0 - 100)}{100} = 1 - 0,15 = 0,85.$$

Bei einer Sehbereichvergrößerung (zum Beispiel bei einem harten Design) gilt dagegen:

$$n = 1 + \frac{p_{Ast\,max}}{100} \frac{(g_F + g_N - 100)}{100} = 1 + \frac{15}{100} \frac{(100 + 100 - 100)}{100} = 1 + 0,15 = 1,15.$$

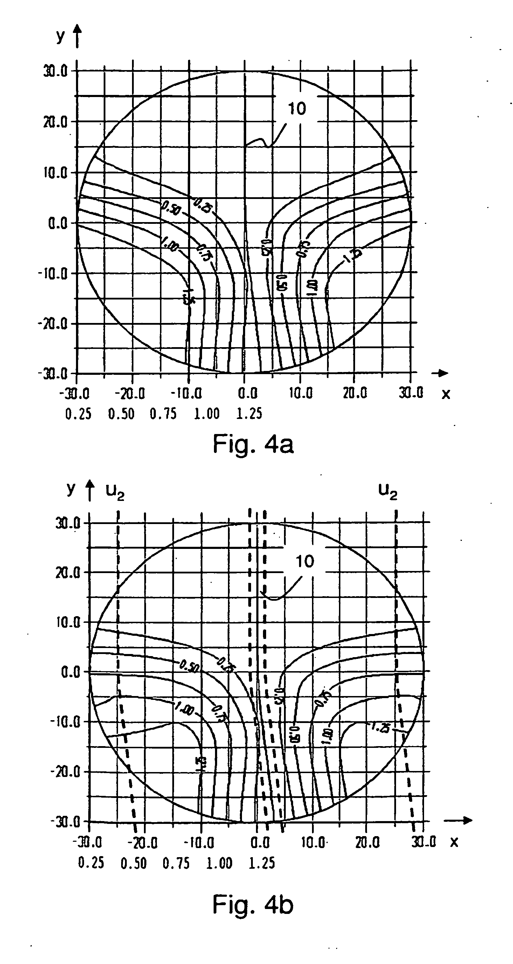

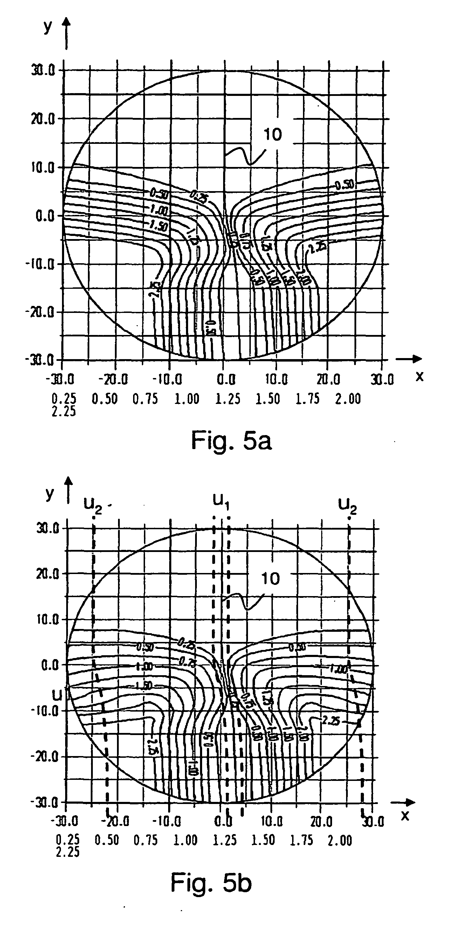

Figuren 4a und 4b zeigen ein Beispiel einer Skalierung der Sollastigmatismuswerte mittels Multiplikation mit einem Skalierungsfaktor $s(u, y)$, um dem Dynamikfaktor besser Rechnung zu tragen. Figuren 5a und 5b zeigen ein weiteres Beispiel einer Skalierung der Sollastigmatismuswerte mittels Multiplikation mit einem Skalierungsfaktor $s(u, y)$.

Fig. 4a und 5a zeigen jeweils die ursprüngliche Sollastigmatismusverteilung $Ast_{soll}(u, y)$ (d.h. ohne Berücksichtigung des Dynamikfaktors bzw. bei $g_D = 0$) und Fig. 4b bzw. 5b jeweils die skalierte Sollastigmatismusverteilung als Isolinien des gleichen Sollastigmatismus. Der Abstand zwischen den Isolinien beträgt 0,25 dpt. Die Gewichtung des Fernteils $g_F$ bei den in Fig. 4a,b und 5a,b gezeigten Sollastigmatismusverteilungen ist 100%.

Für die Skalierung der Sollastigmatismuswerte gilt:

$$Ast_{Sneu}(u, y) = s(u, y) Ast_{soll}(u, y).$$

Eine beispielhafte Funktion $s(u, y)$ kann folgendermaßen definiert werden:

$$s(u, y) = f_0\left(1 + \frac{f_2(y) - 1}{u_2 - u_1}(u - u_1)\right).$$

Die Funktion $f_2(y)$ kann beispielsweise eine Doppelasymptote mit den Koeffizienten $a,b,c,d,m$ sein:

$$f_2(y) = b + \frac{a}{(1 + e^{c(y+d)})^m}.$$

Der Koeffizient $a$ kann z.B. wie folgt bestimmt werden:

$$a = \frac{g_D a_{max}}{100}.$$

In jedem Horizontalschnitt $y = const$ des Brillenglases werden die Sollastigmatismuswerte mit einem Faktor multipliziert, der sich für jede Glashälfte (nasal, temporal) von einer vorgegebenen inneren $u$ -Koordinate (Koordinate $u_1$) mit dem Funktionswerte 1 nach außen hin linear ändert.

Der äußere Geradenpunkt ($u_2$, $f_2(y)$) kann für die Horizontalschnitte unterschiedlich vorgegeben werden, d.h. ist eine Funktion der Koordinate $y$.

Die in Fig. 4b gezeigte Sollastigmatismusverteilung wurde mit den folgenden Parameter erzeugt: $u_1$= 1 mm; $u_2$= 25 mm; $a$= -0,5; $b$= 1,0; $c$= -0,33; $d$ = 5; $m$= 1; $a_{max}$ = -0,5; $g_D$=100%. Die in Fig. 5b gezeigte Sollastigmatismusverteilung wurde mit den folgenden Parameter erzeugt: $u_1$= 1 mm; $u_2$= 30 mm; $a$= -0,5; $b$= 1,0; $c$= -0,5; $d$ = 10; $m$= 1; $a_{max}$ = -0,5; $g_D$=100%.

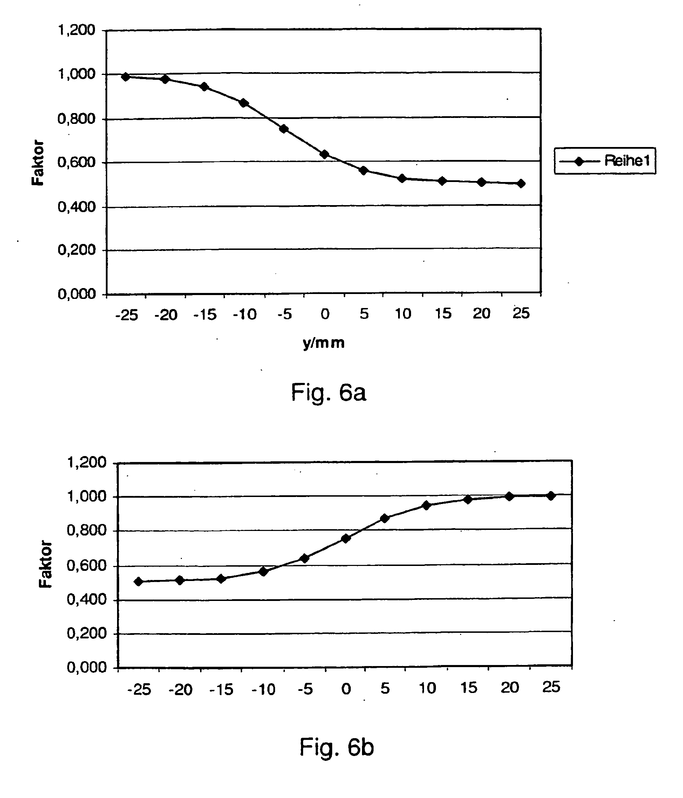

Die Funktion $f_2(y)$ kann von der Gewichtung der Dynamik $g_D$ abhängen. So ist für das dynamische Sportglas vorteilhaft, den peripheren Astigmatismus im mittleren und oberen Glasbereich zusätzlich zu reduzieren. Die Funktion $f_2(y)$ kann folglich im oberen Glasbereich deutlich kleiner als 1 sein ($f_2(y)$ <1), z.B. gleich 0,5. Im Nahbereich kann die Funktion $f_2(y)$ den Wert 1 wieder erreichen. Vorzugsweise gilt im Nahbereich $f_2(y) \approx 1$. Eine beispielhafte Funktion $s(u = u_2, y) = f_2(y)$ für diesen Fall ist in **Figur 6a** dargestellt. Insbesondere zeigt Fig. 6a die Doppelasymptotenfunktion $f_2(y)$ im Vertikalschnitt bei $u_2$ =25 mm (d.h. die Funktion $f_2(y)$ für $u_2$ = 25 mm).

Im Falle eines erwünschten breiteren Nahbereichs, ist genau ein entgegengesetzter Verlauf vorteilhaft: Im oberen Bereich erfolgt vorzugsweise keine Abänderung, d.h. $f_2(y)$ = 1. Im Nahbereich erfolgt eine zusätzliche Reduktion des Astigmatismus, d.h. $f_2(y)$ < 1. Eine beispielhafte Funktion $s(u = u_2, y) = f_2(y)$ für diesen Fall ist in **Figur 6b** dargestellt.- Insbesondere zeigt Fig. 6b die Doppelasymptotenfunktion $f_2(y)$ im Vertikalschnitt bei $u$ =25 mm (d.h. die Funktion $f_2(y)$ für $u_2$ = 25 mm).

Somit kann der Sollastigmatismus im Fernbereich, Nahbereich und/oder in der Peripherie zusätzlich durch eine einfach zu steuernde Funktion gezielt beeinflußt bzw. reduziert werden.

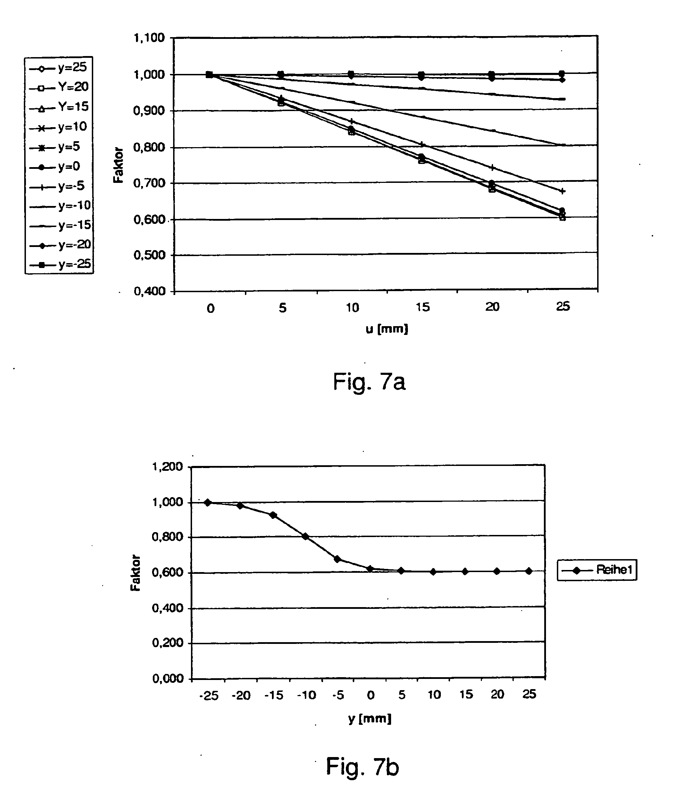

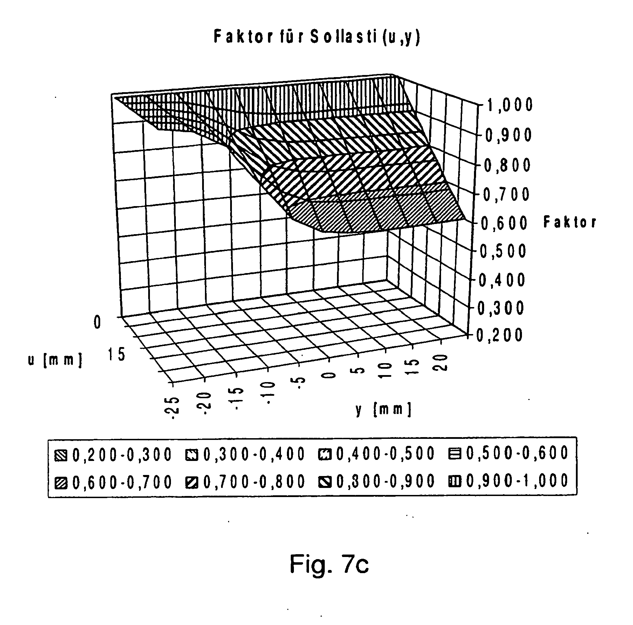

**Figuren 7a** bis **7c** sowie **Tabelle 1** beziehen sich auf ein Beispiel eines Skalierungsfaktors bei einem verbreiteten Fernbereich. **Figur 7a** zeigt das Skalierungsfaktors $s(u, y)$ in den unterschiedlichen Horizontalschnitten (d.h. bei $y = const$) von $y$ =-25 mm bis $y$ =25 mm in 5 mm Abstand. **Figur 7b** zeigt den Verlauf der Doppelasymptotenfunktion $f_2(y)$ des in Fig. 7a gezeigten Skalierungsfaktors im Vertikalschnitt bei $u_2$=25 mm. Die Koeffizienten der Doppelasymptotenfunktion sind $a$ = -0,4, $b$ =1,0, $c$ =-0,30, $d$ = 10,00, $m$ = 1,00, $u_1$ = 0, $u_2$ =25, $f_2(u_1 = 0)$ = 1. **Figur 7c** zeigt eine dreidimensionale Darstellung des in Fig. 7a gezeigten Skalierungsfaktors

$$s(u, y) = f_0\left(1 + \frac{f_2(y) - 1}{u_2 - u_1}(u - u_1)\right).$$ **Tabelle 1** zeigt die Werte der Funktion $s(u, y)$ :

**Tabelle 1:**

| y/u<br>y[mm] | u [mm]-><br>0 | 5 | 10 | 15 | 20 | 25 |
|---|---|---|---|---|---|---|
| -25 | 1,000 | 0,999 | 0,998 | 0,997 | 0,996 | **0,996** |
| -20 | 1,000 | 0,996 | 0,992 | 0,989 | 0,985 | **0,981** |
| -15 | 1,000 | 0,985 | 0,971 | 0,956 | 0,942 | **0,927** |
| -10 | 1,000 | 0,960 | 0,920 | 0,880 | 0,840 | **0,800** |
| -5 | 1,000 | 0,935 | 0,869 | 0,804 | 0,738 | **0,673** |
| 0 | 1,000 | 0,924 | 0,848 | 0,771 | 0,695 | **0,619** |
| 5 | 1,000 | 0,921 | 0,842 | 0,763 | 0,684 | **0,604** |
| 10 | 1,000 | 0,920 | 0,840 | 0,761 | 0,681 | **0,601** |
| 15 | 1,000 | 0,920 | 0,840 | 0,760 | 0,680 | **0,600** |
| 20 | 1,000 | 0,920 | 0,840 | 0,760 | 0,680 | **0,600** |
| 25 | 1,000 | 0,920 | 0,840 | 0,760 | 0,680 | **0,600** |

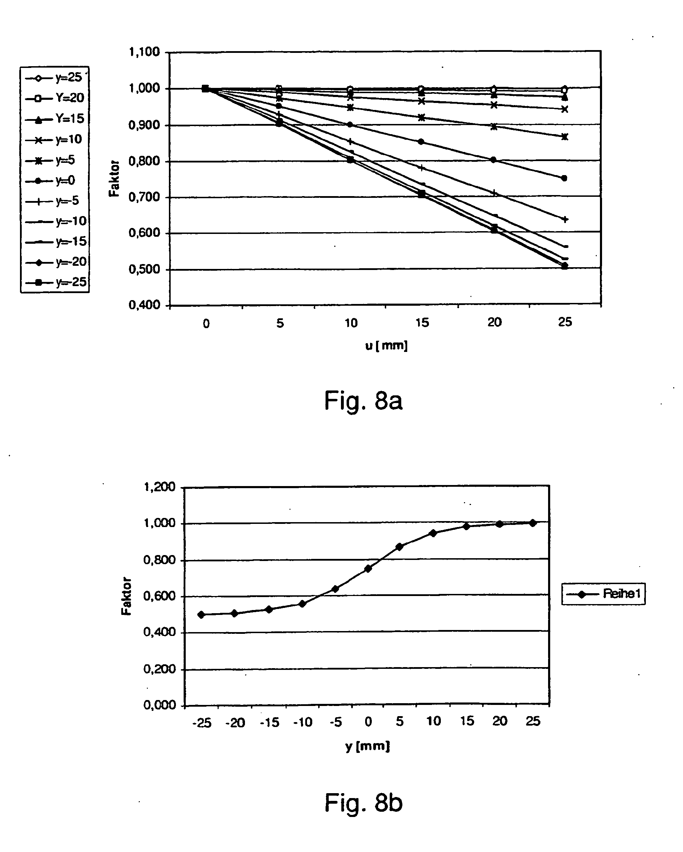

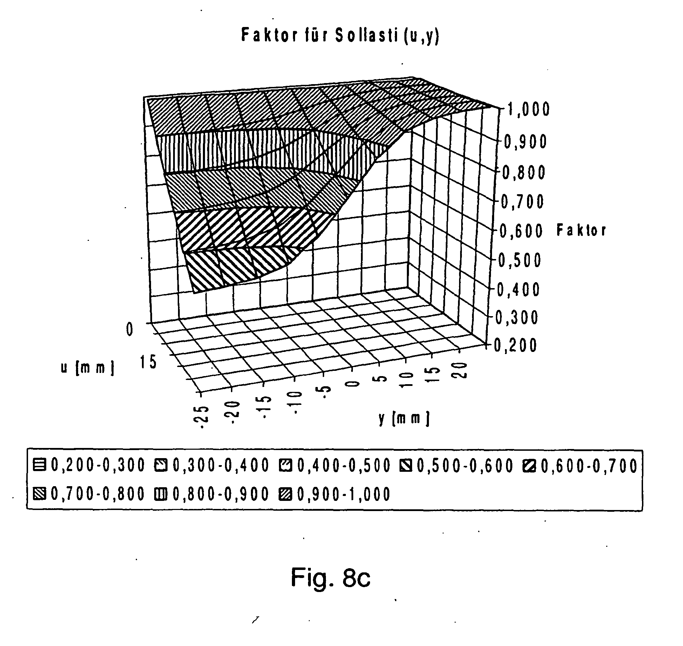

**Figuren 8a** bis **8c** sowie **Tabelle 2** beziehen sich auf ein Beispiel eines Skalierungsfaktors bei einem verbreiterten Nahbereich. **Figur 8a** zeigt den Skalierungsfaktor $s(u, y)$ in den unterschiedlichen Horizontalschnitten (d.h. bei $y$ = $const$) von $y$ =-25 mm bis $y$ =25 mm in 5 mm Abstand. **Figur 8b** zeigt den Verlauf der Doppelasymptotenfunktion $f_2(y)$ des in Fig. 8a gezeigten Skalierungsfaktors im Vertikalschnitt bei $u_2$=25 mm. Die Koeffizienten der Doppelasymptotenfunktion sind $a = 0{,}50$, $b =0{,}50$, $c = 0{,}20$, $d = 0{,}00$, $m = 1{,}00$, $u_1 = 0$, $u_2 =25$, $f_2 (u_1 =0)= 1$. **Figur 7c** zeigt eine dreidimensionale Darstellung des in Fig. 7a gezeigten Skalierungsfaktors $s(u, y)$. **Tabelle 2** zeigt die Werte der Funktion $s(u, y)$ :

**Tabelle 2:**

| y/u<br>y[mm] | u [mm]-><br>0 | 5 | 10 | 15 | 20 | 25 |
|---|---|---|---|---|---|---|
| -25 | 1,000 | 0,901 | 0,801 | 0,702 | 0,603 | **0,503** |
| -20 | 1,000 | 0,902 | 0,804 | 0,705 | 0,607 | **0,509** |
| -15 | 1,000 | 0,905 | 0,809 | 0,714 | 0,619 | **0,524** |
| -10 | 1,000 | 0,912 | 0,824 | 0,736 | 0,648 | **0,560** |
| -5 | 1,000 | 0,927 | 0,854 | 0,781 | 0,708 | **0,634** |
| 0 | 1,000 | 0,950 | 0,900 | 0,850 | 0,800 | **0,750** |
| 5 | 1,000 | 0,973 | 0,946 | 0,919 | 0,892 | **0,866** |
| 10 | 1,000 | 0,988 | 0,976 | 0,964 | 0,952 | **0,940** |
| 15 | 1,000 | 0,995 | 0,991 | 0,986 | 0,981 | **0,976** |
| 20 | 1,000 | 0,998 | 0,996 | 0,995 | 0,993 | **0,991** |
| 25 | 1,000 | 0,999 | 0,999 | 0,998 | 0,997 | **0,997** |

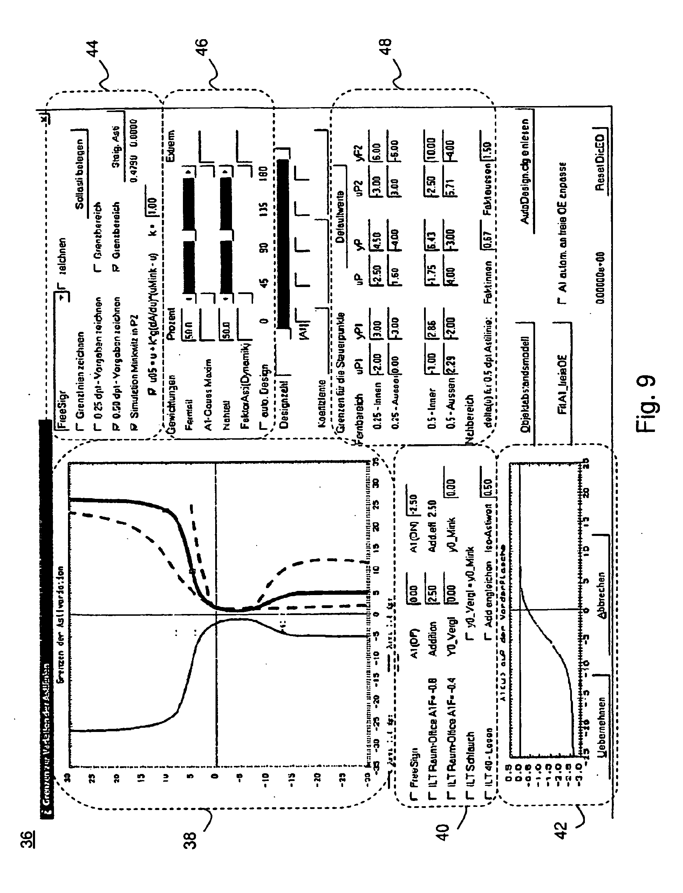

**Figur 9** zeigt eine beispielhafte grafische Benutzerschnittstelle 36, welche es ermöglicht, Parameter des Startdesigns einzugeben und gegebenenfalls abzuändern. Ferner ermöglicht, die in Fig. 9 gezeigte grafische Benutzerschnittstelle das Startdesign zu verändern.

In Abschnitt bzw. Bereich 38 der Figur 9 werden die Konstruktionslinien des Startdesigns bzw. des transformierten Startdesigns sowie die entsprechenden Steuerpunkte gezeigt. Ebenfalls können die Grenzen (in Form von Grenzlinien), innerhalb welcher die Basis-Sollisoastigmatismuslinie 12 bzw. deren Verlauf abgeändert werden kann, d.h. die innerste Basis-Sollisoastigmatismuslinie 12-i sowie die äußerste Basis-Sollisoastigmatismuslinie 12-a gezeigt werden.

Der Abschnitt 40 bzw. Bereich der graphischen Benutzerschnittstelle 36 ermöglicht die Auswahl aus unterschiedlichen Typen von Designs für ein progressives Brillenglas sowie die Angabe der Addition.

Im Abschnitt bzw. Bereich 42 der graphischen Benutzerschnittstelle 36 kann die Objektabstandsfunktion visualisiert werden. Der Abschnitt 44 der graphischen Benutzerschnittstelle 30 ermöglicht es, die zu transformierenden Konstruktionslinien zur Anzeige und gegebenenfalls Abänderung auszuwählen. Im Abschnitt 46 der graphischen Benutzerschnittstelle 36 können die einzelnen Gewichtungen $g_F$, $g_N$ und $g_D$ eingegeben werden. Im Abschnitt 48 der graphischen Benutzerschnittstelle 36 können die Koordinaten der Steuerpunkte für die Grenzlinien (d.h. für die innerste und die äußerste 0,5 dpt Basis-Sollisoastigmatismuslinie sowie für die innerste und die äußerste zusätzliche 0,25 dpt Sollisoastigmatismuslinie) angegeben bzw. angezeigt werden.

Anhand der eingegebenen Daten kann ein Designvorschlag mit geänderten SollAstigmatismuswerten, automatisch berechnet und visualisiert werden.

Wie bereits oben dargelegt wurde, erfolgt das Berechnen bzw. Optimieren des Brillenglases durch eine Minimierung einer Zielfunktion der Form:

$$F(\bar{x}) = \sum_{i=1}^{m} \left[ g_{i,Ast}(Ast_i - Ast_{i,Soll})^2 + \dots \right],$$

wobei

$Ast_{i,Soll}$     den Sollwert der lokalen astigmatischen Abweichung bzw. des lokalen astigmatischen Fehlers an der $i$-ten Bewertungsstelle;

$Ast_i$     den tatsächlichen Wert der lokalen astigmatischen Abweichung bzw. des lokalen astigmatischen Fehlers an der $i$-ten Bewertungsstelle;

$g_{i,Ast}$     die lokale Gewichtung der astigmatischen Abweichung bzw. des lokalen astigmatischen Fehlers an der $i$-ten Bewertungsstelle

bezeichnen.

In der obigen Formel ist $Ast_{i,soll}$ die zuvor ermittelte und dem progressiven Brillenglasdesign zugeordnete Sollastigmatismusverteilung in der jeweiligen $i$-ten Bewertungsstelle.

Ferner bevorzugt geht in die Zielfunktion ebenfalls der Refraktionsfehler $\Delta R$ ein, so daß das Berechnen bzw. Optimieren des Brillenglases eine Minimierung der Zielfunktion:

$$F(\bar{x}) = \sum_{i=1}^{m} \left[ g_{i,\Delta R}(\Delta R_i - \Delta R_{i,Soll})^2 + g_{i,Ast}(Ast_i - Ast_{i,Soll})^2 + \dots \right]$$

umfaßt, wobei

$\Delta R_{i,Soll}$     den Sollwert des lokalen Refraktionsfehlers an der $i$-ten Bewertungsstelle;

$\Delta R_i$     den tatsächlichen Wert des lokalen Refraktionsfehlers an der $i$-ten Bewertungsstelle;

$g_{i,\Delta R}$     die lokale Gewichtung der Refraktionsfehlers an der $i$-ten Bewertungsstelle

bezeichnen.

Die Gewichtungsfaktoren $g_{i,Ast}$ in der Zielfunktion werden im allgemeinen für das Grund- bzw. Startdesign vorgegeben, so daß ein gutes Optimierungsergebnis erzielt werden kann. Wird nachträglich z.B. die Astigmatismusverteilung geändert, z.B. durch eine Streckung oder Stauchung in vertikaler Richtung und/oder durch eine Transformation des jeweiligen Sehbereichs mittels einer Abänderung der Basis-Sollisoastigmatismuslinie und/oder durch weiteren Transformationen, dann kann es vorteilhaft sein, ebenfalls die lokale Gewichtung $g_{i,Ast}$ entsprechend anzupassen. So können Sehbereiche, in denen kleine astigmatische Fehler (kleine $Ast_{soll}$) vorgegeben werden (z.B. die inneren Bereiche), höher gewichtet werden als die peripheren Sehbereiche. Eine Änderung der dem Startdesign zugeordneten designspezifischen lokalen Gewichtung ist dann lediglich bei extremen Designänderungen erforderlich.

Die lokale Gewichtung $g_{i,Ast}$ kann zum Beispiel wie folgt an den Ist-Verlauf des Astigmatismus angepaßt werden:

$$g_{i,Ast} = g_{i,Ast}(Ast) = \frac{1}{Ast_{i,soll}^P}.$$

Für Werte des Sollastigmatismus $Ast_{soll}$ < 1,0 wird die Funktion $\dfrac{1}{Ast_{i,soll}^{p}}$ größer als 1 und für Werte $Ast_{soll}$ > 1,0 wird die Funktion kleiner als 1. Je größer die Potenz $p$, desto steiler verläuft die Funktion und desto stärker werden die Bereiche mit $Ast_{soll}$ < 1,0 gewichtet.

Gemäß eines weiteren Ausführungsbeispiel gilt für die lokale Gewichtung $g_{i,Ast}$

$$g_{i,Ast} = \frac{1}{Ast_{i,soll}^{p}} \text{ für } Ast_{soll} \leq 1,0$$

und

$$g_{i,Ast} = 1 \text{ für } Ast_{soll} > 1,0.$$

Die lokale Gewichtung $g_{i,\Delta R}$ des Refraktionsfehlers in der $i$-ten Bewertungsstelle kann in ähnlicher Weise in Abhängigkeit von der Größe des Refraktionsfehlers skaliert werden.

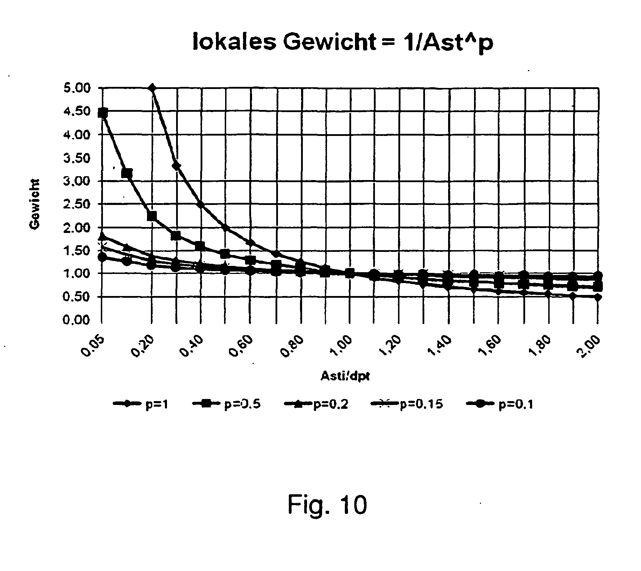

**Figur 10** zeigt die lokale Gewichtung $g_{i,Ast}$ als Funktion des Astigmatismus in dpt für unterschiedliche Werte der Potenz $p$ ($p$ = 1, $p$ = 0,5, $p$ = 0,2, $p$ = 0,15, $p$ = 0,1).

Die Berechnung bzw. Optimierung des Brillenglases kann ferner unter Berücksichtigung von zumindest einem Teil der individuellen Daten des Brillenträgers erfolgen.

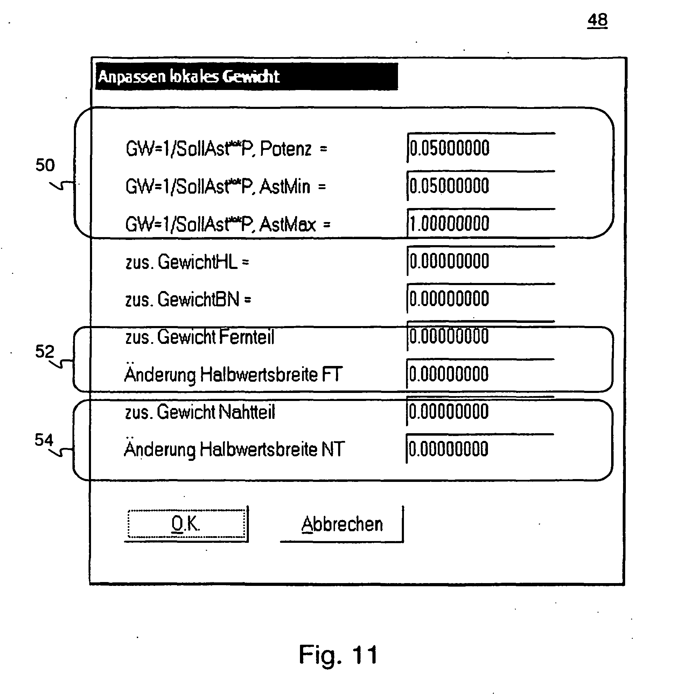

**Figur 11** zeigt ein Beispiel einer grafischen Benutzerschnittstelle 48 zur Eingabe und Änderung der lokalen Gewichtungen. Im Abschnitt bzw. Bereich 50 der grafischen Benutzerschnittstelle 48 können die lokalen Gewichtungen

$$g_{i,Ast} = \frac{1}{Ast_{i,soll}^{p}} \text{,}$$

insbesondere die Potenz $p$, sowie die lokalen Gewichtungen für $Ast_{max}$ und $Ast_{min}$ eingegeben und/oder gegebenenfalls geändert werden. Im Abschnitt 52 der grafischen Benutzerschnittstelle 50 können zusätzliche Gewichtungen für den Fernteil bzw. Bereich vorgegeben werden. Ebenfalls kann der Abschnitt 52 eine Eingabemaske zur Eingabe und/oder Abänderung der Halbwertsbreite bzw. Verteilungsbreite des Fernbereichs enthalten. Im Abschnitt 54 der grafischen Benutzerschnittstelle 50 können zusätzliche Gewichtungen für den Nahteil bzw. Bereich vorgegeben werden. Mit den zusätzlichen Gewichtungen können die allgemeinen Gewichtsfunktionen in der Optimierung beeinflußt werden. Ebenfalls kann der Abschnitt 54 eine Eingabemaske zur Eingabe und/oder Abänderung der Halbwertsbreite bzw. Verteilungsbreite des Nahbereichs enthalten.

Die zusätzlichen Gewichtungen für den Fern- und/oder Nahteil sowie die Grenzwerte für die zusätzlichen Gewichtungen können vorab festgelegt werden. Insbesondere können die Grenzwerte durch Optimierungstests in der Designfindung festgelegt werden.

Figuren **12a** und **12b** zeigen zwei beispielhafte Sollastigmatismusverteilungen und die entsprechenden Verteilungen des Ist-Astigmatismus (in Gebrauchsstellung) von progressiven Brillengläsern, welche nach der jeweiligen Sollastigmatismusverteilung berechnet bzw. optimiert sind.

Die in Fig. **12a-1** und **12b-1** gezeigten Sollastigmatismusverteilungen weisen jeweils eine Hauptlinie 10 und Basis-Sollisoastigmatismuslinien 12 und 12' auf. Der Verlauf der Basis-Sollisoastigmatismuslinie 12 bzw. 12 im Progressionsbereich wird anhand des aktuellen Objektabstandverlaufs und des Akkommodationsmodells berechnet. Die in Fig. 12a-1 und 12b-1 gezeigte Sollastigmatismusverteilungen sind mittels einer Transformation des gleichen Startdesigns erhalten, wobei die Transformation eine Abänderung der Position der vorgegebenen Steuerpunkte und einer Abänderung des Objektabstands umfaßt. Somit kann der Verlauf der Basis-Sollisoastigmatismuslinie optimal an den Objektabstandsverlauf angepaßt werden.

**Fig. 12a-2** und **12b-2** zeigen jeweils den Brechwertverlauf entlang der Hauptlinie 10 der jeweiligen Sollastigmatismusverteilung. **Fig. 12a-3** und **12b-3** zeigen jeweils den Ist-Astigmatismus eines progressiven Brillenglases, welches anhand der in Fig. 12a-1 bzw. 12b-1 gezeigte Sollastigmatismusverteilung berechnet bzw. optimiert worden ist.

Ebenfalls ist es möglich, den Verlauf der Basis- Sollisoastigmatismuslinie durch eine Kombination des nach dem Satz von Minkwitz ermittelten Verlaufs (kurz Minkwitz) und des aus dem aktuellen Objektabstandsverlauf und dem Akkomodationsmodell ermittelten Verlaufs (kurz Asti-Modell) zu berechnen. Beispielsweise kann der Abstand der Basis-Sollisoastigmatismuslinie von der Hauptlinie $u_{05}$ nach der Formel:

$$u_{05} = u_{Asti-Modell} + g(u_{Minkwitz} - u_{Asti-Modell})$$

ermittelt werden, wobei:

$u_{Asti-Modell}$ der aus dem aktuellen Objektabstandsverlauf und dem Akkomodationsmodell ermittelte Abstand der Basis-Sollisoastigmatismuslinie von der Hauptlinie ist;
$u_{Minkwitz-Modell}$ der nach dem Satz von Minkwitz ermittelte Abstand der Basis-Sollisoastigmatismuslinie von der Hauptlinie ist; und
$g$ eine Gewichtung der beiden Modelle

bezeichnet.

Bei $g = 1$ gilt $u_{05} = u_{Minkwistz}$ (Verlauf nach Minkwitz). Bei $g = 0$ gilt $u_{05} = u_{Asti-Modell}$ (Verlaufs nach Asti-Modell). Wie oben erläutert kann der Faktor $g$ nach der Formel:

$$g(A') = \frac{A' - A'_{min}}{A'_{max} - A'_{min}},$$

berechnet werden.

Der Faktor $g$ ist somit eine Funktion der Steigung $A' = \dfrac{dA}{du}$ (d.h. $g = g(\dfrac{dA}{du})$.

**Figur 13a** zeigt Beispiele von Basis-Sollisoastigmatismuslinien, welche nach dem Satz vom Minkwitz (Linie 12-1), anhand des aktuellen Objektabstandverlaufs und dem Akkommodationsmodell (Linie 12-2) sowie anhand einer Kombination der beiden Modelle (Linie 12-3) berechnet werden. **Figur 13b** illustriert die Berechnung der Gewichtung $g$ in Abhängigkeit von der Steigung des Astigmatismus $A$'.

**Figuren 14a** und **14b** zeigen Beispiele graphischer Benutzerschnittstellen 56 (Fig, 14a) und 58 (Fg. 14b) zur Eingabe der Parameter der Basis-Sollisoastigmatismuslinie. Im Abschnitt 60 der grafischen Benutzerschnittstelle 58 kann der Beuzter vorgeben, ob die Basis-Sollisoastigmatismuslinie nach dem Satz von Minkwitz oder nach einem Modell;

$$u_{05} = u_{Asti-Modell} + k * g(\frac{dA}{du}) * (u_{Minkwitz} - u_{Asti-Modell}),$$

berechnet wird, wobei $k$ einen vorgegebenen bzw. vorgebbaren zusätzlichen Vorfaktor bezeichnet.

Nachdem der Verlauf der Basis-Sollisoastigmatismuslinie festgelegt ist, wird eine Sollastigmatismusverteilung, welche diese Basis-Sollisoastigmatismuslinie aufweist, berechnet bzw. ermittelt. Insbesondere können - wie oben beschrieben - die Sollastigmatismuswerte zwischen der Hauptlinie und der Basis-Sollisoastigmatismuslinie mittels einer Interpolation (z.B. einer linearen, quadratischen oder kubischen Interpolation) zwischen den Sollastigmatismuswerten auf der Hauptlinie und den Sollastigmatismuswerten auf der Basis-Sollisoastigmatismuslinie berechnet werden. In der Peripherie des Brillenglases können die Sollastigmatismuswerte nach dem oben beschriebenen Parallelkurvenmodell-Verfahren, nach dem oben beschriebenen Kegelstumpfmodell-Verfahren oder nach einer Kombination der beiden Verfahren berechnet werden.

**Figur 15** illustriert die Berechnung der Sollastigmatismuswerte in der Peripherie des Brillenglases nach dem Parallelkurvenmodell-Verfahren (in der Fig. 15 bezeichnet als PK-Modell) und nach dem Kegelstumpfmodell-Verfahren (in der Fig. 15 bezeichnet als KS-Modell). In Fig. 15 wird in dem zentralen Bereich des Brillenglases (d.h. den Bereich zwischen den Geraden 62 und 64) das Kegelstumpfmodell-Verfahren zum Berechnen der Sollastigmatismuswerte in der Peripherie angewandt, und im Fern- und Nahteil das Parallelenkurvenmodell-Verfahren angewandt.

In Fig. 15 bezeichnen ferner:

Punkt $P(u, y)$ einen beliebigen Punkt in der Peripherie des Brillenglases bzw. des Brillenglasdesigns;
Punkt $S(u_{SP}, y_{SP})$ die Spitze des Kegelstumpfes
Punkt $F(u_F, y_F)$ den Schnittpunkt der durch die Punkte $P$ und $S$ verlaufende Gerade und der Grenzkurve des Kegelstumpfes.

Ferner gilt:

$$a_{SP} = \sqrt{(u_{SP} - u_F)^2 + (y_{SP} - u_F)^2}$$

$$a_P = \sqrt{(u_P - u_F)^2 + (y_P - u_F)^2}.$$

**Figuren 16a** und **16b** zeigen Beispiele graphischer Benutzerschnittstellen 66 und 68 zur Eingabe und Änderung der Steuerpunkte mit eingegebenen Parametern eines Startdesigns (grafische Benutzerschnittstelle 66 in Fig. 16a) und zur Eingabe und Änderung der maximalen Variation der Steuerpunkte des Startdesigns (grafische Benutzerschnittstelle 68 in Fig. 16b). Das Startdesign ist in **Figuren 17a** bis **c** gezeigt. **Figuren 19** bis **25** zeigen transformierte Designs, welche von dem Startdesign abgeleitet sind.

Bei allen in den Figuren 17 bis 25 gezeigten Designs befindet sich der Fernbezugspunkt $B_F$ bei einer vertikalen Höhe von 8 mm ($y_{B_F}$ =8 mm), der Zentrierpunkt $B_Z$ bei einer vertikalen Höhe von 4 mm ($y_{B_Z}$ =4 mm) und der Nahbezugspunkt $B_N$ bei einer vertikalen Höhe von -14 mm ($y_{B_N}$ =-14 mm).

Die in den Figuren 17 bis 25 gezeigten progressiven Brillenglasdesigns betreffen Brillenglasdesigns für ein progressives Brillenglas mit den Parametern:

Sph = 0,50 dpt, Zyl = 0,00 dpt, Addition = 2,5 dpt. Das Brillenglas ist in einer Gebrauchsstellung mit den Parametern:

Puppillendistanz rechts ($PD_R$) = 32 mm;
Puppillendistanz links ($PD_L$) = 32 mm;
Hornhautscheitelabstand (HSA) = 13 mm;
Vorneigung = 7°;
Fassungsscheibenwinkel = 0° (d.h. keine Verkippung des Brillenglases im die Vertikale).

Die Basiskurve $D_1$ der Vorderfläche beträgt 5,5 dpt. Der Radius der sphärischen Vorderfläche ist 95,4545 mm. Die Brechzahl des Brillenglases n ist gleich 1,597.

Der reziproke Objektabstand in dpt and der Hauptlinie wird beschrieben durch die Doppellasymptotenfunktion:

$$S_1(u_0, y) = b_s + \frac{a_s}{(1 + e^{c_s(y+d_s)})^{m_s}} = -2{,}59 + \frac{2{,}61}{\left(1 + e^{-0{,}46(y+2{,}2)}\right)^{0{,}75}}.$$

Bei allen in den Figuren 17 bis 25 weist das Brillenglasdesign eine Hauptlinie 10, eine Basis-Sollisoastigmatismuslinie 12 und eine zusätzliche Sollisoastigmatismuslinie 14 auf. Der Verlauf der Basis-Sollisoastigmatismuslinie 12 und der zusätzlichen Sollisoastigmatismuslinie 14 wird automatisch anhand der Gewichtungen der Sehbereiche (d.h. Gewichtungen des Fern- und/oder Nahbereichs) sowie gegebenenfalls der Gewichtung der Dynamik automatisch verändert. Anschließend wird eine Sollastigmatismusverteilung, welche die jeweilige Basis-Sollisoastigmatismuslinie 12 und zusätzliche Sollisoastigmatismuslinie 14 aufweist, automatisch berechnet.

Die Berechnung der Sollastigmatismusverteilung zwischen den Sollastigmatismuswerten auf der Hauptlinie 10 und den Sollastigmatismuswerten auf der zusätzlichen Sollisoastigmatismusline 14 erfolgt im Progressionsbereich mittels einer linearen Interpolation und im Fern- und Nahbereich mittels einer quadratischen Parabel. Der Übergang der Hochzahl erfolgt linear:

$$A(u) = A_0 + k * u^{p(y)},$$

wobei $1 \le p(y) \le 2$ gilt.

Somit ist es möglich einen weicheren horizontalen Anstieg des Sollastigmatismus im Fern- und Nahbereich zu erhalten.

Zwischen den Sollastigmatismuswerten auf der zusätzlichen Sollisoastigmatismusline 14 und der Basis-Sollisoastigmatismusline 12 erfolgt die Berechnung der Sollastigmatismuswerte mittels einer linearen Interpolation. In der Peripherie erfolgt die Berechung der Sollastigmatismusverteilung nach dem oben beschriebenen Kegelstumpfmodell.

**Figuren 17a** bis **17c** zeigen jeweils die Konstruktionslinien und Steuerpunkte des Startdesigns (Fig. 17a); die Sollastigmatismusverteilung des in Fig. 17a dargestellten Startdesigns (Fig. 17b) sowie die Ist-Astigmatismusverteilung (in Gebrauchsstellung) eines nach der in Fig. 17b dargestellten Sollastigmatismusverteilung optimierten Brillenglases (Fig. 17c).

Im Fernteil wird die 0,5 dpt Basis-Sollisoastigmatismuslinie 12 des Startdesigns durch eine arctan-Funktion (Arctangens-Darstellung) beschrieben. In der Peripherie ist die Sollastigmatismusverteilung nach dem oben beschriebenen Kegelstumpfmodell berechnet. Die Gewichtungen des Fern- und Nahteils sind jeweils 50% ($g_F = g_N =$50%). Die Gewichtung der Dynamik $g_D$ beträgt 0%. Ebenfalls umfaßt das Startdesign eine zusätzliche 0,25-dpt-Sollisoastigmatismuslinie 14 im Fernteil.

Der Figur 16a und 16b können die Positionen der Steuerpunkte (Fädelpunkte) sowie die maximal zulässigen Variationen der Positionen der Steuerpunkte der 0,5 dpt Basis-Sollisoastigmatismuslinie und der zusätzlichen 0,25 dpt - Sollisoastigmatismuslinie entnommen werden.

Die nachfolgende **Tabelle 3** gibt die Positionen der Steuerpunkte der Basis-Sollisoastigmatismuslinie sowie der zusätzlichen Sollisoastigmatismuslinie des Startdesigns. Die Steuerpunkte sind symmetrisch zur Hauptlinie angeordnet. Es werden deshalb nur die temporalen Steuerpunkte ($u > 0$) angegeben.

**Tabelle 3:**

| 0,25 dpt Sollisoastigmatismuslinie | 0,5 dpt Basis- Sollisoastigmatismuslinie |
|---|---|
| Erster Steuerpunkt im Femteil:<br>$u =$10,00 mm; $y =$9,00 mm | Erster Steuerpunkt im Femteil:<br>$u =$10,00 mm; $y = $6,00mm |
| Zweiter Steuerpunkt im Fernteil:<br>$u =$17,00 mm; $y =$14,00 mm | Zweiter Steuerpunkt im Fernteil:<br>$u = $22;00 mm; $y =$9 mm |
|  | Steuerpunkt im Nahteil<br>$u = $5 mm; $y =$-20 mm |

Die Steuerpunkte im Fernteil können sowohl horizontal als auch vertikal verschoben werden. Es gilt:

$$\vec{r} = \vec{r}_0 + t\vec{v} = ,$$

$$t = mt_{a,i} = (\frac{g_F}{50} - 1)t_{a,i},$$

wobei $\vec{r}_0$ die Position des jeweiligen Steuerpunkts des Startdesign, $\vec{r}$ die Position des verschobenen Steuerpunkts bezeichnet und $t_{a,i}$ die maximal zulässige Verschiebung nach außen bzw. innen bezeichnet. Bei $g_F < $50% erfolgt eine Verschiebung des entsprechenden Steuerpunkts im Fernteil nach innen/oben. Bei $g_F >$50% erfolgt eine Verschiebung des entsprechenden Steuerpunkts im Fernteil nach außen/unten.

In diesem Beispiel kann der Steuerpunkt der 0,5-dpt-Basis-Sollisoastigmatismuslinie im Nahteil lediglich horizontal verschoben werden. Es gilt:

$$u_N = u_0(1 + (\frac{g_N}{50} - 1)v_N,$$

wobei $u_0$ den horizontalen Abstand von der Hauptlinie des dritten Steuerpunkts im Nahteil des Startdesigns und $u_N$ den horizontalen Abstand von der Hauptlinie des verschobenen Steuerpunkts im Nahteil bezeichnet.

Die nachfolgende **Tabelle 4** zeigt die maximal zulässigen Variationen der Positionen der Steuerpunkte:

**Tabelle 4:**

| 0,25 dpt Soll-Isoastigmatismuslinie | 0,5 dpt Basis- Soll-Isoastigmatismuslinie |
|---|---|
| Ester Steuerpunkt im Fernteil:<br>Maximale Variation nach innen:<br>$u$ =-2,00 mm; $y$ =3,00 mm<br>Maximale Variation nach außen:<br>$u$ = 0,00 mm; $y$ = -3,00 mm | Erster Steuerpunkt im Fernteil:<br>Maximale Variation nach innen:<br>$u$ =-1,00 mm; $y$ =2,00 mm<br>Maximale Variation nach außen:<br>$u$ = 1,00 mm; $y$ =-2,00 mm |
| Zweiter Steuerpunkt im Fernteil:<br>Maximale Variation nach innen:<br>$u$ =-3,00 mm; $y$ =7,00 mm<br>Maximale Variation nach außen:<br>$u$ = 3,00 mm; $y$ =-5,00 mm | Zweiter Steuerpunkt im Fernteil<br>Maximale Variation nach innen:<br>$u$ = -2,50 mm; $y$ = 7 mm<br>Maximale Variation nach außen:<br>$u$ = 2,5 mm; $y$ =-4,00 mm |
|  | Dritter Steuerpunkt im Nahteil:<br>Nur horizontale Verschiebung<br>Faktor innen $v_N$ = 0,67<br>Faktor außen $v_N$ = 1,50 |

Die nachfolgende **Tabelle 5** zeigt den Zusammenhang zwischen den Fern- und Nahteilgewichtungen $g_F$ und $g_N$ und den Steuerpunkten bei der Designmodifikation.

**Tabelle 5:**

| | | $g_F$ < 50%<br>Verschiebung nach innen/oben | $g_F$ > 50%<br>Verschiebung nach außen/unten |
|---|---|---|---|
| 0,25 dpt-Linie | Erster Steuerpunkt im Fernteil | $\vec{r_1} = \begin{pmatrix} u_1 \\ y_1 \end{pmatrix} = \begin{pmatrix} 10 \\ 9 \end{pmatrix} + (\frac{g_F}{50} - 1)\begin{pmatrix} -2 \\ 3 \end{pmatrix}$ | $\vec{r_1} = \begin{pmatrix} u_1 \\ y_1 \end{pmatrix} = \begin{pmatrix} 10 \\ 9 \end{pmatrix} + (\frac{g_F}{50} - 1)\begin{pmatrix} 0 \\ -3 \end{pmatrix}$ |
| 0,25 dpt-Linie | Zweiter Steuerpunkt im Fernteil | $\vec{r_2} = \begin{pmatrix} u_2 \\ y_2 \end{pmatrix} = \begin{pmatrix} 17 \\ 14 \end{pmatrix} + (\frac{g_F}{50} - 1)\begin{pmatrix} -3 \\ 7 \end{pmatrix}$ | $\vec{r_2} = \begin{pmatrix} u_2 \\ y_2 \end{pmatrix} = \begin{pmatrix} 17 \\ 14 \end{pmatrix} + (\frac{g_F}{50} - 1)\begin{pmatrix} 3 \\ -5 \end{pmatrix}$ |
| 0,50 dpt-Linie | Erster Steuerpunkt im Fernteil | $\vec{r_1} = \begin{pmatrix} u_1 \\ y_1 \end{pmatrix} = \begin{pmatrix} 10 \\ 6 \end{pmatrix} + (\frac{g_F}{50} - 1)\begin{pmatrix} -1 \\ 2 \end{pmatrix}$ | $\vec{r_1} = \begin{pmatrix} u_1 \\ y_1 \end{pmatrix} = \begin{pmatrix} 10 \\ 6 \end{pmatrix} + (\frac{g_F}{50} - 1)\begin{pmatrix} 1 \\ -2 \end{pmatrix}$ |
| 0,50 dpt-Linie | Zweiter Steuerpunkt im Fernteil | $\vec{r_2} = \begin{pmatrix} u_2 \\ y_2 \end{pmatrix} = \begin{pmatrix} 22 \\ 9 \end{pmatrix} + (\frac{g_F}{50} - 1)\begin{pmatrix} -2,5 \\ 7 \end{pmatrix}$ | $\vec{r_2} = \begin{pmatrix} u_2 \\ y_2 \end{pmatrix} = \begin{pmatrix} 22 \\ 9 \end{pmatrix} + (\frac{g_F}{50} - 1)\begin{pmatrix} 2,5 \\ -4 \end{pmatrix}$ |
| 0,50 dpt-Unie | Dritter Steuerpunkt im Nahteil | $u_N = 5(1 + (\frac{g_N}{50} - 1)0,67)$<br><br>$y_N$=-20 | $u_N = 5(1 + (\frac{g_N}{50} - 1)1,5)$<br><br>$y_N$=-20 |

**Erste Modifikation des Startdesigns**

**Fig. 18** zeigt ein Beispiel einer graphischen Benutzerschnittstelle 70 zur Eingabe und Änderung der Positionen der Steuerpunkte mit eingegebenen Parametern eines ersten transformierten Designs gemäß einer ersten Modifikation des Startdesigns.

**Figuren 19a** und **19b** zeigen das erste transformierte Design, wobei **Fig. 19a** die Konstruktionslinien - Hauptlinie 10, Basis-Sollisoastigmatismuslinie 12, und zusätzliche Sollisoastigmatismuslinie 14 - und die entsprechenden Steuerpunkte 16 bis 24 zeigt; **Fig. 19b** die entsprechende Sollastigmatismusverteilung des in Fig. 19a dargestellten transformierten Designs zeigt. Die Basis-Sollisoastigmatismuslinie im Fernteil wird - wie bei dem Startdesign - mittels einer arctan-Funktion beschrieben (Arcustan-Darstellung).

Bei dieser Designmodifikation werden Fern- und Nahteil unterschiedlich gewichtet.

So beträgt die Gewichtung des $g_F$ =0% und die Gewichtung des Nahteils $g_N$ =100%. Die Gewichtung der Dynamik $g_D$ beträgt 0%. Anhand der Gewichtungen wird die Verschiebung der Steuerpunkte automatisch berechnet. Der Verlauf der Basis-Sollisoastigmatismuslinie 12 und der zusätzlichen Sollisoastigmatismuslinie 14 wird derart verändert, daß sie durch die entsprechend verschobenen Steuerpunkte verlaufen. Anschließend wird eine Sollastigmatismusverteilung, welche die geänderten Basis- und zusätzliche Sollisoastigmatismuslinien aufweist, mittels Interpolation ermittelt. Die so berechnete Sollastigmatismusverteilung ist in Fig. 19b gezeigt. Gegebenenfalls kann die so berechnete Sollastigmatismusverteilung ferner modifiziert werden z.B. durch eine Multiplikation mit einem Skalierungsfaktor, durch eine Anpassung des maximal zulässigen Astigmatismuswerts oder durch eine weitere Modifikation.

**Fig. 19c** zeigt die Ist-Astigmatismusverteilung (in Gebrauchsstellung) eines nach der in Fig. 19b dargestellten Sollastigmatismusverteilung optimierten Brillenglases.

Mit der ersten Transformation bzw. Modifikation des in Fig. 17a,b dargestellten Startdesigns kann ein progressives Brillenglasdesign bzw. ein progressives Brillenglas mit einem extrem nahteilbetontes Design automatisch erhalten werden.

**Zweite Modifikation des Startdesigns**

**Fig. 20** zeigt ein Beispiel einer graphischen Benutzerschnittstelle 72 zur Eingabe und Änderung der Steuerpunkte mit eingegebenen Parametern eines zweiten transformierten Designs, welches mittels einer Modifikation des in Fig. 17a,b gezeigten Startdesigns automatisch berechnet wird.

**Figuren 21a** und **21b** zeigen das zweite transformierte Design, wobei **Fig. 21a** die Konstruktionslinien - Hauptlinie 10, Basis-Sollisoastigmatismuslinie 12, und zusätzliche Sollisoastigmatismuslinie 14 - und die entsprechenden Steuerpunkte 16 bis 24 darstellt und **Fig. 21b** die entsprechende Sollastigmatismusverteilung des in Fig. 21 a dargestellten transformierten Designs darstellt. Die Basis-Sollisoastigmatismuslinie im Fernteil wird - wie bei dem Startdesign - ebenfalls mittels einer arctan-Funktion beschrieben (Arcustan-Darstellung).

Bei dieser zweiten Designmodifikation beträgt die Gewichtung des Fernteils $g_F$ =70% und die Gewichtung des Nahteils $g_N$ =20%. Die Gewichtung Dynamik $g_D$ beträgt 0%. Die Verschiebung der Steuerpunkte wird automatisch anhand der neuen Gewichtungen $g_F$ und $g_N$ berechnet. Der Verlauf der Basis-Sollisoastigmatismuslinie 12 und der zusätzlichen Sollisoastigmatismuslinie 14 wird derart verändert, daß sie durch die entsprechend verschobenen Steuerpunkte verlaufen. Anschließend wird eine Sollastigmatismusverteilung, welche die geänderten Basis- und zusätzliche Sollisoastigmatismuslinien aufweist, mittels Interpolation ermittelt, welche in Fig. 20b gezeigt ist. Gegebenenfalls kann die so berechnete Sollastigmatismusverteilung weiter modifiziert werden, z.B. durch eine Multiplikation mit einem Skalierungsfaktor, durch eine Anpassung des maximal zulässigen Astigmatismuswerts, oder durch eine weitere Modifikation.

**Fig. 21c** zeigt die Ist-Astigmatismusverteilung (in Gebrauchsstellung) eines nach der in Fig. 21 b dargestellten Sollastigmatismusverteilung optimierten Brillenglases.

Mit der zweiten Transformation bzw. Modifikation des in Fig. 17a,b dargestellten Startdesigns kann ein progressives Brillenglasdesigns bzw. ein progressives Brillenglas mit einer leichten Fernteilbetonung (50% -> 70%) auf Kosten des Nahteils (50% -> 20%) automatisch erhalten werden.

**Dritte Modifikation des Startdesigns**

**Fig. 22** zeigt ein Beispiel einer graphischen Benutzerschnittstelle 74 zur Eingabe und Änderung der Positionen der Steuerpunkte mit eingegebenen Parametern eines dritten transformierten Designs, welches mittels einer Modifikation des in Fig. 17a,b gezeigten Startdesigns automatisch berechnet wird.

**Figuren 23a** und **23b** zeigen das dritte transformierte Design, wobei **Fig. 23a** die Konstruktionslinien - Hauptlinie 10, Basis-Sollisoastigmatismuslinie 12, und zusätzliche Sollisoastigmatismuslinie 14 - und die entsprechenden Steuerpunkte 16 bis 24 zeigt; **Fig. 23b** die entsprechende Sollastigmatismusverteilung des in Fig. 23a dargestellten transformierten Designs zeigt.

Anders als bei der ersten oder der zweiten Modifikation erfolgt bei dieser Modifikation eine Umschaltung der Darstellung der Basis-Soll-Isoastigmatismuslinie 12 sowie der zusätzlichen Sollisoastigmatismuslinie 14 von der Arcustan-Darstellung in die Polynom-Darstellung. Der jeweilige Steuerpunkt $(u_p, y_p)$ für die Polynom-Darstellung (d.h. der jeweilige Steuerpunkt im Fernteil der Basis-Sollisoastigmatismuslinie 12 und der zusätzlichen Sollisoastigmatismuslinie 14) kann durch Mittelwertbildung aus den beiden Steuerpunkten $(u_1,y_1)$ und $(u_2,y_2)$ der Arcustan-Darstellung der Basis-Sollisoastigmatismuslinie bzw. der zusätzlichen Sollisoastigmatismuslinie des Startdesigns berechnet werden:

$$u_P = \frac{u_1 + u_2}{2} \quad \text{und} \quad y_P = \frac{y_1 + y_2}{2}.$$

Die Umschaltung von der Arcustan-Darstellung in die Polynom-Darstellung kann automatisch in Abhängigkeit von der Gewichtung des Fernteils $g_F$ erfolgen. So kann z.B. die 0,5 dpt Basis-Sollisoastigmatismuslinie ab $g_F$ =81% und die zusätzliche Sollisoastigmatismuslinie ab $g_F$ =91% auf die Polynom-Darstellung umgeschaltet werden.

Bei der dritten Designmodifikation beträgt die Gewichtung des Fernteils $g_F$ =100% und die Gewichtung des Nahteils $g_N$ =20%. Die Gewichtung Dynamik $g_D$ beträgt 0%. Die Verschiebung der Steuerpunkte wird automatisch anhand der neuen Gewichtungen $g_F$ und $g_N$ berechnet. Der Verlauf der Basis-Sollisoastigmatismuslinie 12 und der zusätzlichen Sollisoastigmatismuslinie 14 wird derart verändert, daß sie durch die entsprechend verschobenen Steuerpunkten verlaufen. Anschließend wird eine Sollastigmatismusverteilung, welche die geänderten Basis- und zusätzliche Sollisoastigmatismuslinien aufweist, mittels Interpolation ermittelt, welche in Fig. 23b gezeigt ist. Gegebenenfalls kann die so berechnete Sollastigmatismusverteilung ferner modifiziert werden, z.B. durch eine Multiplikation mit einem Skalierungsfaktor, durch eine Anpassung des maximal zulässigen Astigmatismuswerts, oder durch eine weitere Modifikation.

**Fig. 23c** zeigt die Ist-Astigmatismusverteilung (in Gebrauchsstellung) eines nach der in Fig. 23b dargestellten Sollastigmatismusverteilung optimierten Brillenglases.

Mit der dritten Modifikation des Startdesigns kann eine maximale Fernteilbetonung automatisch erzielt werden.

**Vierte Modifikation des Startdesigns**

**Fig. 24** zeigt ein Beispiel einer graphischen Benutzerschnittstelle 76 zur Eingabe und Änderung der Positionen der Steuerpunkte mit eingegebenen Parametern eines dritten transformierten Designs, welches mittels einer Modifikation des in Fig. 16 gezeigten Startdesigns automatisch berechnet wird.

**Figuren 25a** und **25b** zeigen das transformierte Startdesign gemäß der vierten Modifikation, wobei **Fig. 25a** die Konstruktionslinien - Hauptlinie 10, Basis-Sollisoastigmatismuslinie 12, und zusätzliche Sollisoastigmatismuslinie 14 - und die entsprechenden Steuerpunkte; **Fig. 25b** die entsprechenden Sollastigmatismusverteilung des in Fig. 25a dargestellten transformierten Designs zeigt. Wie bei der dritten Modifikation erfolgt bei der vierten Modifikation ebenfalls eine Umschaltung der Darstellung der Basis-Sollisoastigmatismuslinie 12 sowie der zusätzlichen Sollisoastigmatismuslinie 14 von der Arcustan-Darstellung in die Polynom-Darstellung.

Bei der vierten Designmodifikation beträgt die Gewichtung des Fernteils $g_F$ =100% und die Gewichtung des Nahteils $g_N$ =20%. Die Gewichtung Dynamik $g_D$ beträgt 80%. Die Verschiebung der Steuerpunkte wird automatisch anhand der neuen Gewichtungen $g_F$ und $g_N$ berechnet.

Der Verlauf der Basis-Sollisoastigmatismuslinie 12 und der zusätzlichen Sollisoastigmatismuslinie 14 wird derart verändert, daß sie durch die entsprechend verschobenen Steuerpunkten verlaufen. Anschließend wird eine Sollastigmatismusverteilung, welche die geänderten Basis- und zusätzliche Sollisoastigmatismuslinien aufweist, mittels Interpolation ermittelt.

Die so ermittelte Sollastigmatismusverteilung wird mit einem globalen Skalierungsfaktor s(u, y) multipliziert, um der Gewichtung Dynamik Rechnung zu tragen:

$$A'(u, y) = A_{Sneu}(u, y) = s(u, y) A_{soll}(u, y),$$

wobei $A_{soll}(u, y)$ die zuvor ermittelte Sollastigmatismusverteilung ist.

Das Multiplizieren mit dem globalen Skalierungsfaktor s(u, y) wurde zuvor im Detail beschrieben. Insbesondere kann der Skalierungsfaktor wie folgt berechnet werden:

$$s(u, y) = f_0 \left( 1 + \frac{f_2(y) - 1}{u_2 - u_1}(u - u_1) \right)$$

$$f_2(y) = b + \frac{a}{(1 + e^{c(y+d)})^m},$$

wobei beispielsweise $u_1$ =0, $u_2$ =25, $f_0$ = 1, $b$ =1, $a$ =-0,4, $c$ =-0,3, $d$ =10 und $m$ = 1.

Einen einfachen Zusammenhang zwischen weichen peripheren Übergängen und der Größe Gewichtung Dynamik $g_D$ kann z.B. dadurch erzielt werden, dass der Koeffizient $a$ (die Differenz der beiden Asymptoten) in Abhängigkeit von $g_D$ variiert wird. So kann der Koeffizient $a$ zum Beispiel wie folgt berechnet werden:

$$a = \frac{g_D a_{max}}{100} = \frac{80 * (-0,5)}{100} = -0,4.$$

Die übrigen Koeffizienten können geeignet festgelegt bzw. vorgegeben werden.

Der maximal zulässige Wert $a_{max}$ für die Gewichtung Dynamik $g_D$=100% kann, ebenso wie die anderen Koeffizienten, designspezifisch vorgegeben werden. Für $g_D$ =0 beträgt $a$ =0 und wenn $b$ =1, dann gilt $s(u, y)$ = konstant =1.

Die resultierende Sollastigmatismusverteilung wird in **Fig. 25b** gezeigt. **Fig. 25c** zeigt die Ist-Astigmatismusverteilung (in Gebrauchsstellung) eines nach der in Fig. 25b dargestellten Sollastigmatismusverteilung optimierten Brillenglases.

Mit der vierten Modifikation des Startdesigns kann eine maximale Fernteilbetonung automatisch erzielt werden. Die zusätzliche Berücksichtigung der Gewichtung Dynamik $g_D$ ($g_D$ = 90%) ermöglicht eine zusätzliche Reduktion des peripheren Astigmatismus und der peripheren Astigmatismusgradienten. Somit kann ein Design für ein progressives Brillenglas, welches besser für dynamische Tätigkeiten (z.B. Sport) geeignet ist, automatisch berechnet werden

**Fig. 26** zeigt ein Beispiel einer graphischen Benutzerschnittstelle 78 zum Erfassen von Kundenpräferenzen. Anhand der erfaßten Kundenpräferenzen und Angaben zu dem Aktivverhalten sowie gegebenenfalls weiterer individueller Daten des Brillenträgers können die Gewichtungen des Fern- und Nahbereichs sowie die Gewichtung Dynamik bestimmt werden.

Jeweils fünf verschiedene Piktogramme für die Ferne, die mittlere Entfernung und die Nähe sowie für das Aktivverhalten des Brillenträgers symbolisieren die Bereiche, die der Brillenträger bei der Wahl seines Designprofils gegeneinander abwägen soll. Die Piktogramme dienen als Beispiele für den jeweiligen Entfernungsbereich und stellen nur eine kleine Auswahl aller möglichen Tätigkeiten für diese Entfernung dar. Mit den zu vergebenden Punkten können die Bereiche gewichtet werden. In einem konkreten Beispiel können insgesamt 9 Punkte auf die vier verschiedenen Bereiche (Ferne, mittleren Entfernung, Nähe und Aktivverhalten) verteilt werden. Je wichtiger dem Kunden der jeweilige Entfernungsbereich ist bzw. je mehr seine Tätigkeiten in einen Bereich fallen, desto mehr Punkte für diesen Bereich werden vergeben. Die Anzahl der Punkte pro Bereich sowie die Gesamtpunktzahl können beschränkt werden. So können z.B. pro Bereich maximal 5 Punkte vergeben werden, insgesamt jedoch nicht mehr als 9 Punkte.

Die vergebenen Punkte bestimmen das individuelle Designprofil des Brillenträgers. Vereinfacht gilt: Je mehr Punkte für die Ferne in Relation zur gegebenen Gesamtpunktzahl vergeben werden, desto größer die Gewichtung des jeweiligen Sehbereichs. Die Punkte für das Aktivverhalten und das Sehen in mittleren Entfernungen wirken sich in erster Linie auf die Länge der Progressionszone aus und bestimmen somit auch wie verzeichnungsfrei das Brillenglas ist. Die Punkte für das Aktivverhalten können insbesondere mit der Gewichtung Dynamik korrelieren. Bei der Vergabe der Punkte kann eine gleich große Punktzahl in jedem Bereich einem ausgewogenen, universellen Design entsprechen.

**Fig. 27** zeigt schematisch einen beispielhaften Verfahrensablauf bei der Herstellung eines (individuell optimierten) progressiven Brillenglases nach einem ermittelten Gleitsichtglasdesign, welches gemäß einem bevorzugten Verfahren berechnet wird.

In einem ersten Schritt (S1) werden (individuellen) designspezifische und/oder brillenglasspezifische Daten erfasst. Die Erfassung der designspezifischen und/oder brillenglasspezifischen Daten kann mittels geeigneter grafischer Benutzerschnittstellen (GUI), welche die Eingabe und gegebenenfalls die Änderung der eingegebenen Daten ermöglichen.

Die brillenglasspezifischen Daten umfassen insbesondere Refraktionsdaten (Sphäre, Zylinder, Achslage, Addition, Prisma und Basis), Fassungs- und Zentrierdaten (Scheibenhöhe und Zentrierhöhe, Fassungsform), und/oder Parameter der Gebrauchssituation bzw. Gebrauchsstellung der Brille (insbesondere Pupillendistanz, Hornhautscheitelabstand, Vorneigung, Fassungsscheibenwinkel, etc.). Die designspezifischen Daten können insbesondere Daten bezüglich der Hauptnutzung bzw. Daten bezüglich der Anwendungsschwerpunkte (Autofahren, Computerarbeitsplatz, Lesen, Handwerken, etc.) des Gleitsichtglases; und/oder Daten bezüglich der Präferenzen hinsichtlich der Sehbereiche (Fern-, Nah- und Zwischen- bzw. Progressionsbereich) umfassen. Anhand der erfaßten individuellen Präferenzen und/oder Anwendungsschwerpunkte können den einzelnen Sehbereichen entsprechende Gewichtungen (Gewichtung Ferne, Gewichtung Nähe, Gewichtung Zwischenbereich, Gewichtung Dynamik) zugeordnet werden.

Ferner können die designspezifischen Daten Daten bezüglich der Objektabstände wie Arbeitsabstand beim Lesen (Naharbeit), Arbeitsabstand in der Ferne und/oder Daten bezüglich des Akkommodationsmodells umfassen.

Die design- und brillenglasspezifischen Daten werden erfaßt und ausgewertet und steuern die Bestimmung des optimalen Verlaufs der Basis-Sollisoastigmatismuslinie bzw. der optimalen Größe der Sehbereiche und vorzugsweise der optimalen räumlichen Lage der Bezugspunkte Ferne und Nähe.

In einem zweiten Schritt (S2) wird ein für einen vorgegebenen Brillenträger in einer vorgegebenen Gebrauchssituation optimaler Verlauf der Basis-Sollisoastigmatismuslinie und somit die optimale Größe und/oder Lage der Sehbereiche (Fern-, Nah- und Progressionsbereich) sowie gegebenenfalls eine optimale räumliche Lage des Fern- und/oder Nahbezugspunkts anhand der erfaßten individuellen Daten berechnet bzw. festgelegt. Dies kann manuell oder vorzugsweise automatisch anhand der erfaßten Daten erfolgen.

In einem weiteren Schritt (S3) wird ein Gleitsichtglasdesign bzw. ein Vorschlag für ein Gleitsichtsglasdesign mit dem in dem zweiten Schritt S2 ermittelten optimalen Verlauf der Basis-Sollisoastigmatismuslinie und vorzugsweise mit der ermittelten optimalen Lage des Fern- und Nahbezugspunkt nach einem bevorzugten Verfahren mittels einer Transformation eines vorgegebenen Startdesigns 80 berechnet. Dieser Designvorschlag wird mittels geeigneter graphischer Benutzerschnittstellen visualisiert, wobei dem Benutzer die Möglichkeit gegeben wird, durch eine Veränderung des Verlaufs der Basis-Sollisoastigmatismuslinie (z.B. durch Verschiebung der Steuerpunkte) und gegebenenfalls der individuellen Position des Fern- und/oder des Nahbezugspunkts und/oder durch eine Veränderung der design- und brillenglasspezifischen Daten, insbesondere der Präferenzen, der Fassungsdaten, der Gewichtungen, etc., das Design aktiv zu verändern.

Die Änderung bzw. die Anpassung des Verlaufs der Basis-Sollisoastigmatismuslinie sowie gegebenenfalls der Position des Fern- und/oder Nahbezugspunkte und/oder der Präferenzen bezüglich der Sehbereiche kann beispielsweise mittels einer geeigneten interaktiven graphischen Benutzerschnittstelle erfolgen.

Das neue Brillenglasdesign wird vorzugsweise in Echtzeit berechnet und visualisiert. Ebenfalls kann die Differenz bzw. die Veränderung der optischen Eigenschaften des neuen gegenüber dem Startdesign visualisiert werden.

Zusätzlich können die entsprechenden geometrischen Daten eines nach dem berechneten (individuellen) Design bzw. Designvorschlag berechneten Brillenglases (Mittendicke, Randdicke, Basiskurve, Gewicht) berechnet und ebenfalls mittels einer geeigneten graphischen Benutzerschnittstelle (vorzugsweise in Form eines dreidimensionalen Models) visualisiert werden. Insbesondere können kosmetische Eigenschaften bzw. Daten bezüglich der Ästhetik des Brillenglases (z.B. Gewicht, geometrische Daten wie Bauhöhe, maximale Randdicke, Mittendicke, etc.) visualisiert werden. Die Visualisierung der kosmetischen Eigenschaften des Brillenglases kann beispielsweise mittels einer dreidimensionalen Darstellung eines Models des Brillenglases mit den ermittelten geometrischen Daten erfolgen. Die Darstellung der kosmetischen Eigenschaften des Brillenglases kann z.B. durch eine Auswahl der Basiskurve und des Brechungsindexes beeinflußt werden. Die Auswahl kann wirkungsabhängig sein.

Neben der Visualisierung der geometrischen und/oder kosmetischen Eigenschaften des Brillenglases kann ferner eine Visualisierung der optischen Eigenschaften des Brillenglases (Sehbereiche, insbesondere räumliche Lage und Größe der einzelnen Sehbereiche, Verlauf der Basis-Sollisoastigmatismuslinie, etc. erfolgen). Die Darstellung der Sehbereichsgrößen kann lediglich relativ zu den Verordnungsdaten erfolgen, ohne daß eine eventuelle Materialabhängigkeit berücksichtigt wird. Selbstverständlich kann jedoch eine Berücksichtigung einer Materialabhängigkeit vorgesehen werden.

Ferner kann eine Visualisierung des Sehkomforts (z.B. Blicksenkung, Schaukeln, peripheres Sehen, Verzerrungen, etc.) vorgesehen werden.

Zusätzlich kann eine geeignete Darstellung von Performancewerten bezüglich der Sehbereiche, des Sehkomforts und/oder der kosmetischen Eigenschaften bzw. der Ästhetik des berechneten Brillenglases vorgesehen werden. Ebenfalls können alternative Designvorschläge und/oder Performancewerte alternativer Designvorschläge dargestellt werden.

Anschließend (Schritt S4) wird ein individuelles progressives Brillenglas nach dem endgültigen individuellen Design berechnet bzw. optimiert, wobei bei der Berechnung bzw. Optimierung des Brillenglases ebenfalls (individuelle) Daten bezüglich des Brillenträgers (wie z.B. individuelle Gebrauchssituation, Fassungsdaten, Daten bezüglich der Augen des Brillenträgers, etc.) berücksichtigt werden können. Das fertig berechnete bzw. optimierte Brillenglas kann zum Beispiel mittels einer direkten Bearbeitung mit numerisch gesteuerten Maschinen, mittels eines Gießverfahrens oder mittels anderen geeigneten Verfahren z.B. aus Glas oder Kunststoff hergestellt werden (Schritt S5).

Fig. 28 zeigt eine schematische Darstellung eines Beispiels einer Vorrichtung zum Erzeugen bzw. Berechnen eines progressiven Brillenglasdesigns bzw. eines Designs für ein progressives Brillenglas sowie gegebenenfalls zum Berechnen bzw. Optimieren des Brillenglases nach dem berechneten Design.

Die bevorzugte Vorrichtung umfasst ein Computersystem 90, mit zumindest einem ersten Computer 100. Das Computersystem 70 kann jedoch optional eine Vielzahl von Computern 10q, q = 1, 2, ..., welche durch ein (mono-, bi- und/oder multidirektionales) Netzwerk miteinander 300 verbunden sind, umfassen.

Der Computer 100 weist einen Prozessor 110, einen Speicher 120 und einen Bus 130 auf. Ferner kann der Computer 100 eine Eingabevorrichtung 140 und/oder eine Ausgabevorrichtung 150 umfassen. Die Elemente 110 bis 170 des Computers 100 verallgemeinern die entsprechenden Elemente der Computer 101, 102, etc. Der Computer 100 ist beispielsweise ein konventioneller Personalcomputer (PC), ein Multiprozessorcomputer, eine Mainframecomputer, eine tragbarer PC (laptop) oder ein stationärer PC oder dergleichen.

Der Prozessor 110 des Computers 100 ist beispielsweise ein Zentralprozessor (CPU), ein Mikrocontroller (MCU), oder ein digitaler Signalprozessor (DSP).

Der Speicher 120 symbolisiert Elemente, die Daten und Befehle entweder zeitlich begrenzt oder dauerhaft speichern. Obwohl zum besseren Verständnis der Speicher 120 als Teil des Computers 100 gezeigt ist, kann die Speicherfunktion an anderen Stellen, z.B im Prozessor selbst (z.B. Cache, Register) und/oder auch im Netzwerk 300, beispielsweise in den Computern 101/102 implementiert werden. Der Speicher 120 kann ein Read-Only-Memory (ROM), ein Random-Access-Memory (RAM), ein programmierbars oder nicht-programmierbares PROM oder ein Speicher mit anderen Zugriffsoptionen sein. Der Speicher 120 kann physisch auf einem computerlesbaren Programmträger, zum Beispiel auf:

(a) einem magnetischen Träger (Festplatte, Diskette, Magnetband);
(b) einem optischen Träger (CD-ROM, DVD);
(c) einem Halbleiterträger (DRAM, SRAM, EPROM, EEPROM);

implementiert bzw. gespeichert werden.

Wahlweise kann der Speicher 120 über verschiedene Medien verteilt werden. Teile des Speichers 120 können fest oder austauschbar angebracht sein. Zum Lesen und Schreiben benutzt der Computer 100 bekannte Mittel wie z.B. Diskettenlaufwerke, etc.

Der Speicher 120 kann Unterstützungskomponenten wie zum Beispiel ein Bios (Basic Input Output System), ein Betriebssystem (OS), eine Programmbibliothek, einen Compiler, einen Interpreter und/oder ein Tabellen- bzw. Textverarbeitungsprogramm speichern. Diese Komponenten sind zum besseren Verständnis nicht dargestellt. Unterstützungskomponenten sind kommerziell verfügbar und können auf dem Computer 100 von Fachleuten installiert bzw. in diesem implementiert werden.

Ferner kann der Speicher 120 einen Start- bzw. Grunddesign sowie design- oder brillenglasspezifische Parameter und/oder Rahmenbedingungen speichern.

Der Prozessor 110, der Speicher 120, die Eingabe- und die Ausgabevorrichtung sind über zumindest einen Bus 130 verbunden und/oder wahlweise über das (mono-, bi- bzw. multidirektionale) Netzwerk 300 (z.B. das Internet) angeschlossen bzw. stehen miteinander in Verbindung. Der Bus 130 sowie das Netzwerk 300 stellen logische und/oder physische Verbindungen dar, die sowohl Befehle als auch Datensignale übertragen. Die Signale innerhalb des Computers 100 sind überwiegend elektrische Signale, wohingegen die Signale im Netzwerk elektrische, magnetische und/oder optische Signale oder auch drahtlose Funksignale sein können.

Netzwerkumgebungen (wie das Netzwerk 300) sind in Büros, untemehmensweiten Computernetzwerken, Intranets und im Internet (d.h. World Wide Web) üblich. Die physische Entfernung zwischen den Computern im Netzwerk ist ohne Bedeutung. Das Netzwerk 300 kann ein drahtloses oder ein verdrahtetes Netzwerk sein. Als mögliche Beispiele für Implementierungen des Netzwerks 300 seien hier angeführt: ein lokales Netzwerk (LAN), ein kabelloses lokales Netzwerk (WLAN), ein Wide Area Network (WAN), ein ISDN-Netz, eine Infrarotverbindung (IR), eine Funkverbindung wie beispielsweise das Universal Mobile Telecommunication System (UMTS) oder eine Satellitenverbindung. Übertragungsprotokolle und Datenformate sind bekannt. Beispiele dafür sind: TCP/IP (Transmission Control Protocol/Internet Protocol), HTTP (Hypertext Transfer Protocol), URL (Unique Resource Locator), HTML (Hypertext Markup Language), XML (Extensible Markup Language), WML (Wireless Application Markup Language), Wireless Application Protocol (WAP) usw.

Die Eingabe- und Ausgabevorrichtungen können Teil einer Benutzerschnittstelle 160 sein.

Die Eingabevorrichtung 140 steht für eine Vorrichtung, die Daten und Anweisungen zur Verarbeitung durch den Computer 100 bereitstellt. Beispielsweise ist die Eingabevorrichtung 140 eine Tastatur, eine Zeigevorrichtung (Maus, Trackball, Cursorpfeile), Mikrofon, Joystick, Scanner. Obwohl es sich bei den Beispielen allesamt um Vorrichtungen mit menschlicher Interaktion, vorzugsweise durch eine graphische Benutzerschnittstelle, handelt, kann die Vorrichtung 140 auch ohne menschliche Interaktion auskommen wie zum Beispiel ein drahtloser Empfänger (z.B. mittels Satelliten- oder terrestrischer Antenne) oder ein Sensor (z.B. ein Thermometer). Die Eingabevorrichtung 140 kann zum Lesen des Speichermediums bzw. Trägers 170 verwendet werden.

Die Eingabevorrichtung 140 kann insbesondere eine (interaktive) grafische Benutzerschnittstelle gemäß den zuvor beschriebenen Beispielen umfassen.

Die Ausgabevorrichtung 150 bezeichnet eine Vorrichtung, die Anweisungen und Daten anzeigt, die bereits verarbeitet wurden. Beispiele dafür sind ein Monitor oder eine andere Anzeige (Kathodenstrahlröhre, Flachbildschirm, Flüssigkristallanzeige, Lautsprecher, Drucker, etc.). Ähnlich wie bei der Eingabevorrichtung 140 kommuniziert die Ausgabevorrichtung 150 bevorzugt mit dem Benutzer vorzugsweise durch eine graphische Benutzerschnittstelle. Die Ausgabevorrichtung kann ebenfalls mit anderen Computern 101, 102, etc. kommunizieren. Die Eingabevorrichtung 140 und die Ausgabevorrichtung 150 können in einer einzigen Vorrichtung kombiniert werden.

Ferner wird ein Computerprogrammerzeugnis bzw. -produkt 200 bereitgestellt, welches derart ausgelegt ist, daß es - wenn geladen und ausgeführt auf einem Computer - ein Verfahren zum Erzeugen bzw. Berechnen eines progressiven Brillenglasdesigns bzw. eines Designs für ein progressives Brillenglas sowie gegebenenfalls zum Berechnen bzw. Optimieren des Brillenglases nach dem berechneten Design durchführen kann. Das Computerprogrammerzeugnis 200 kann auf einem körperlichen Speichermedium bzw. Programmträger 210 gespeichert werden oder als Programmsignal vorliegen.

Das Computerprogrammerzeugnis bzw. -produkt 200 umfasst Programminstruktionen und wahlweise Daten, die den Prozessor 110 unter anderem dazu veranlassen, die Verfahrensschritte des Verfahrens gemäß der Erfindung oder bevorzugte Ausführungsformen hiervon auszuführen. Mit anderen Worten, definiert das Computerprogramm 200 die Funktion des Computers 100 und dessen Interaktion mit dem Netzwerksystem 300. Das Computerprogrammerzeugnis 200 kann beispielsweise als Quellcode in einer beliebigen Programmiersprache und/oder als Binärcode in kompilierter Form (d.h. maschinenlesbaren Form) vorliegen. Ein Fachmann ist in der Lage, das Computerprogrammerzeugnis 200 in Verbindung mit jeder der zuvor erläuterten Unterstützungskomponente (z.B. Compiler, Interpreter, Betriebssystem) zu benutzen.

Obwohl das Computerprogrammerzeugnis 200 als im Speicher 120 gespeichert dargestellt ist, kann das Computerprogrammerzeugnis 100 aber auch an beliebig anderer Stelle gespeichert sein. Das Computerprogrammerzeugnis 200 kann ebenfalls auf dem Speichermedium bzw. Programmträger 170 gespeichert sein. Ebenfalls können der Start- bzw. Grunddesign und/oder design- oder brillenglasspezifische Parameter und/oder Rahmenbedingungen nicht in dem Speicher 120, sondern an beliebig anderer Stelle gespeichert werden, z.B. auf dem Speichermedium 170.

Das Speichermedium 170 ist beispielhaft als außerhalb des Computers 100 dargestellt. Um das Computerprogrammerzeugnis 200 auf den Computer 100 zu übertragen, kann das Speichermedium 170 in das Eingabegerät 140 eingeführt werden. Das Speichermedium 170 kann als ein beliebiger, computerlesbarer Träger implementiert werden wie zum Beispiel als eines der zuvor erläuterten Medien (vgl. Speicher 120). Das Programmsignal 180, welches vorzugsweise über das Netzwerk 300 zum Computer 100 übertragen wird, kann ebenfalls das Computerprogrammerzeugnis 200 beinhalten bzw. ein Teil hiervon sein.

Schnittstellen zum Koppeln der einzelnen Komponenten des Computersystems 10 sind ebenfalls bekannt. Zur Vereinfachung sind die Schnittstellen nicht dargestellt. Eine Schnittstelle kann beispielsweise eine serielle Schnittstelle, eine parallele Schnittstelle, ein Gameport, ein universeller serieller Bus (USB), ein internes oder externes Modem, ein Grafikadapter und/oder eine Soundkarte aufweisen.

Ferner kann die Vorrichtung zum Erzeugen bzw. Berechnen eines progressiven Brillenglasdesigns bzw. eines Designs für ein progressives Brillenglas sowie gegebenenfalls zum Berechnen bzw. Optimieren des Brillenglases nach dem berechneten Design Bearbeitungsmittel zum fertig Bearbeiten des Brillenglases umfassen. Die Bearbeitungsmittel können z.B. CNC gesteuerte Maschinen zur Direktbearbeitung eines Blanks nach den ermittelten Daten des Brillenglases umfassen.

**Bezugszeichenliste**

| | |
|---|---|
| 10 | Hauptlinie, |
| 12 | nasale Basis-Sollisoastigmatismuslinie, |
| 14 | nasale zusätzliche Sollisoastigmatismuslinie; |
| 16 | erster Steuerpunkt der nasalen Basis-Sollisoastigmatismuslinie im Fernbereich |
| 18 | zweiter Steuerpunkt der nasalen Basis-Sollisoastigmatismuslinie im Fernbereich; |
| 20 | erster Steuerpunkt der zusätzlichen nasalen Sollisoastigmatismuslinie im Fernbereich |
| 22 | zweiter Steuerpunkt der zusätzlichen nasalen Sollisoastigmatismuslinie im Fernbereich, |
| 24 | erster Steuerpunkt der Basis-Sollisoastigmatismuslinie im Nahbereich. |
| 26 bis 34 | Geraden, entlang welcher sich der jeweilige Steuerpunkt bewegen kann; |
| 36 | grafische Benutzerschnittstelle |
| 38 bis 46 | Abschnitte der grafischen Benutzerschnittstelle 36 |
| 48 | grafische Benutzerschnittstelle zur Eingabe bzw. Darstellung der lokalen Gewichtungen |
| 50 bis 54 | Abschnitte der grafischen Benutzerschnittstelle 48 |
| 56, 58 | graphische Benutzerschnittstellen zur Eingabe der Parameter der Basis-Sollisoastigmatismuslinie |

| 60 | Abschnitt der grafischen Benutzerschnittstelle 58 |
| 62,64 | Geraden |
| 66 bis 76 | graphische Benutzerschnittstellen zur Eingabe und Änderung der Steuerpunkte |
| 78 | graphische Benutzerschnittstelle zum Erfassen von Kundenpräferenzen |
| 80 | Startdesign |
| 90 | Computersystem |
| 100, 10q | Computer |
| 110 | Prozessor |
| 120 | Speicher |
| 130 | Bus |
| 140 | Eingabevorrichtung |
| 150 | Ausgabevorrichtung |
| 160 | Benutzerschnittstelle |
| 170 | Speichermedium bzw. Träger |
| 180 | Programmsignal |
| 200 | Computerprogrammerzeugnis bzw. -produkt |
| 300 | Netzwerk |

**Patentansprüche**

1. Computerimplementiertes Verfahren zum Erzeugen bzw. Berechnen eines progressiven Brillenglasdesigns mittels einer Transformation eines Startdesigns, umfassend:

   - Festlegen eines Startdesigns, umfassend:

     - Vorgaben für den Verlauf einer Hauptlinie $HL$ (10); und
     - Vorgabe zumindest einer Basis-Soll-isoastigmatismuslinie $I_G$ (12, 14) mit einem konstanten Basis-Sollastigmatismus $A_G = const$, wobei die Basis-Sollisoastigmatismuslinie $I_G$ durch zumindest einen ersten vorgegebenen Steuerpunkt $\vec{r}_1 = (u_1, y_1)$ (16 - 24) verläuft;

   - Transformieren des Startdesigns, umfassend die Schritte:

     - Verschieben des ersten Steuerpunkts $\vec{r}_1 (u_1, y_1) \to \vec{r}'_1 (u'_1, y'_1)$ entlang einer vorgegebenen bzw. vorgebbaren Kurve, wobei die Verschiebung des ersten Steuerpunkts $\vec{r}_1 = (u_1, y_1)$ unter Berücksichtigung von design- und/oder brillenglasträgerspezifischen Daten erfolgt;
     - Abändern $I_G \to I'_G$ des Verlaufs der Basis-Sollisoastigmatismuslinie $I_G$ (12, 14) derart, daß diese durch den verschobenen ersten Steuerpunkt $\vec{r}_1 (u'_1, y'_1)$ verläuft, und
     - Erzeugen bzw. Berechnen einer Sollastigmatismusverteilung $A(u, y)$, welche die abgeänderte Basis-Sollisoastigmatismuslinie $I'_G$ aufweist,

   wobei:

     $x$ die horizontale Koordinate:
     $y$ die vertikale Koordinate;
     $u$ den horizontalen Abstand eines Punktes $(x, y)$ von der Hauptlinie; und
     $A(u, y)$ die Sollastigmatismusverteilung des transformierten Startdesigns bezeichnen.

2. Verfahren gemäß Anspruch 1, wobei die design- und/oder brillenglasträgerspezifischen Daten, welche bei der Verschiebung des zumindest einen Steuerpunkts $\vec{r}_1 = (u_1, y_1)$ berücksichtigt werden, Daten bezüglich

   - der Gewichtung des Fern- und Nahbereichs und/oder
   - der Anwendungsschwerpunkte des Brillenglases und/oder
   - Fassungs- und Zentrierdaten

   umfassen.

3. Verfahren gemäß einem der vorangegangenen Ansprüche, wobei die Kurve, entlang welcher der zumindest eine

Steuerpunkt $\vec{r}_1 = (u_1, y_1)$ verschoben wird, eine Gerade (26 - 34) ist, so daß

$$\vec{r}\,'_1 = \vec{r}_1 + t\vec{v}_{a,i}$$

gilt, wobei

$\vec{v}_a$ den Richtungsvektor nach außen der Geraden (26 - 34), entlang welcher sich der Steuerpunkt bewegt bzw. bewegen kann;

$\vec{v}_i$ den Richtungsvektor nach innen der Geraden (26 - 34), entlang welcher sich der Steuerpunkt bewegt bzw. bewegen kann; und

$t$ die Verschiebung entlang der Gerade (26 - 34) mit dem Richtungsvektor $\vec{v}_{a,i}$

bezeichnen.

4. Verfahren gemäß Anspruch 3, wobei der Parameter $t$ mittels der Formel:

$$t = mt_{a,i} = (\frac{g_{F,N}}{50} - 1)t_{a,i}\,,$$

berechnet wird, wobei

$0 \leq g_{F,N} \leq 100$ gilt,
für $50 < g_{F,N} \leq 100$ $\vec{r}\,'_1 = \vec{r}_1 + mt_a\vec{v}_a$ gilt; und
für $0 \leq g_{F,N} < 50$ $\vec{r}\,'_1 = \vec{r}_1 + mt_i\vec{v}_i$ gilt,

und wobei

$g_F$ Gewichtung des Fernbereichs in Prozent;
$g_N$ Gewichtung des Nahbereichs in Prozent,
$t_a$ maximale zulässige Verschiebung nach außen;
$t_i$ maximale zulässige Verschiebung nach innen

bezeichnen.

5. Verfahren gemäß einem der vorangegangenen Ansprüche, umfassend ferner eine Anpassung $A_{max} \rightarrow A'_{max}$ des maximalen Soll-Astigmatismuswerts $A_{max}$ in Abhängigkeit von der Gewichtung des Fern- und/oder des Nahbereichs.

6. Verfahren gemäß Anspruch 5, wobei:

$$A'_{max} = n(g_F, g_N)A_{max}\,,$$

wobei

$$n(g_F, g_N) = 1 + \frac{P_{Ast\,max}}{100}\frac{(g_F + g_N - 100)}{100}$$ ein Skalierungsfaktor ist;

$g_F$ die Gewichtung des Fernbereichs in Prozent ist, wobei $0 \leq g_F \leq 100$ gilt;
$g_N$ die Gewichtung des Nahbereichs in Prozent ist, wobei $0 \leq g_N \leq 100$ gilt;
$P_{Ast\,max}$ die maximal zulässige Anpassung in Prozent ist, wobei $0 \leq P_{Ast\,max} \leq 50$ gilt.

7. Verfahren gemäß Anspruch 4 und Anspruch 6, wobei die Gewichtung des Fernbereichs $g_F$ und die Gewichtung des Nahbereichs $g_N$ in Abhängigkeit von den Kundenpräferenzen und/oder Fassungsdaten festgelegt werden.

8. Verfahren gemäß einem der vorangegangenen Ansprüche, wobei die Sollastigmatismuswerte $A(u, y = const)$ in den Punkten eines jeden Horizontalschnitts, für welche die Bedingungen $u \geq u_1$ oder $u \leq -u_1$ erfüllt sind, mit einem Skalierungsfaktor $s(u, y)$ multipliziert werden..

9. Verfahren gemäß Anspruch 8, wobei $f_2(Y)$ eine Doppelasymptotenfunktion mit den Parametern $a,b,c,d,m$ ist, wobei gilt:

$$f_2(y) = b + \frac{a}{(1 + e^{c(y+d)})^m}$$

und

$$s(u, y) = f_0\left(1 + \frac{f_2(y) - 1}{u_2 - u_1}(u - u_1)\right).$$

wobei $|u_2| > |u_1|$.

10. Verfahren gemäß einem der vorangegangenen Ansprüche, wobei der Verlauf der Basis-Sollisoastigmatismuslinie $l_G$ durch eine eindimensionale Funktion $u_G(y)$ beschrieben wird und der Verlauf der abgeänderten Basis-Sollisoastigmatismuslinie $l'_G$ durch eine eindimensionale Funktion $u'_G(y)$ beschrieben wird; und wobei die Basis-Sollisoastigmatismuslinie durch zumindest einen Angel- bzw. Fixpunkt $r_0 = (u_0, y_0)$ verläuft, wobei im Angel- bzw. Fixpunkt die Bedingungen

$$u_G(y_0) = u'_G(y_0)$$

$$\frac{du_G(y_0)}{dy} = \frac{du'_G(y_0)}{dy}$$

erfüllt sind.

11. Verfahren gemäß einem der vorangegangenen Ansprüche, wobei das Startdesign Vorgaben für die Sollastigmatismuswerte $A_0(u = 0, y)$ entlang der Hauptlinie umfaßt, und
wobei das Erzeugen bzw. Berechnen einer Sollastigmatismusverteilung $A(u, y)$, welche die abgeänderte Sollisoastigmatismuslinie (12, 14) aufweist, eine Interpolation zwischen den Sollastigmatismuswerten $A(u = 0, y)$ auf der Hauptlinie (10) und den Sollastigmatismuswerten auf der abgeänderten Basis-Sollisoastigmatismuslinie (12, 14) umfaßt, wobei $A(u = 0, y) = A_0(u = 0, y)$ gilt.

12. Verfahren gemäß Anspruch 12, wobei die Interpolation eine lineare, quadratische oder kubische Interpolation ist.

13. Verfahren gemäß einem der vorangegangenen Ansprüche umfassend ferner einen Schritt des Erfassens von individuellen Parametern des Brillenträgers.

14. Vorrichtung zum Erzeugen bzw. Berechnen eines progressives Brillenglasdesigns umfassend Designtransformationsmittel, welche ausgelegt sind, eine Transformation eines vorgegebenen Startdesigns durchzuführen, wobei das Startdesign umfaßt:

   - Vorgaben für den Verlauf einer Hauptlinie $HL$ (10); und
   - Vorgaben für den Verlauf zumindest einer Basis-Sollisoastigmatismuslinie $l_G$ (12, 14) mit einem konstanten Basis-Sollastigmatismus $A_G = const$, wobei die Basis-Sollisoastigmatismuslinie $l_G$ durch zumindest einen ersten vorgegebenen Steuerpunkt $r_1 = (u_1', y_1)$ (16 - 24) verläuft; und

wobei die Designtransformationsmittel umfassen:

- Steuerpunktsänderungsmittel, welche ausgelegt sind, eine Verschiebung $\vec{r}_1\,(u_1,\,y_1) \rightarrow \vec{r'}_1(u'_1,\,y'_1)$ der Position des ersten Steuerpunkts $\vec{r}_1 = (u_1,\,y_1)$ entlang einer vorgegebenen bzw. vorgebbaren Kurve durchzuführen, wobei die Verschiebung des ersten Steuerpunkts $\vec{r}_1 = (u_1,\,y_1)$ unter Berücksichtigung von design- und/oder brillenglasträgerspezifischen Daten ;

- Basis-Sollisoastigmatismuslinien-Berechnungsmittel, welche ausgelegt sind, eine abgeänderte Basis-Sollisoastigmatismuslinie $l'_G$ derart zu berechnen, daß diese durch den verschobenen ersten Steuerpunkt $\vec{r}_i$ $(u'_1,\,y'_1)$ verläuft,

- Berechnungsmittel welche ausgelegt sind, ein Erzeugen bzw. Berechnen einer Sollastigmatismusverteilung $A(u,\,y)$, welche die abgeänderte Sollisoastigmatismuslinie $l'_G$ aufweist, durchzuführen,

wobei

$x$ die horizontale Koordinate;
$y$ die vertikale Koordinate;
$u$ den horizontalen Abstand eines Punktes $(x,\,y)$ von der Hauptlinie; und
$A(u,\,y)$ die Sollastigmatismuswerte des transformierten Startdesigns bezeichnen.

15. Computerprogrammerzeugnis, welches ausgelegt ist, wenn geladen und ausgeführt auf einem Computers, ein Verfahren zum Erzeugen bzw. Berechnen eines progressiven Brillenglasdesigns gemäß einem der Ansprüche 1 bis 13 durchzuführen.

16. Verfahren zum Herstellen eines progressiven Brillenglases umfassend:

- Berechnen eines Designs für das progressive Brillenglas nach dem Verfahren zum Erzeugen bzw. Berechnen eines progressiven Brillenglasdesigns gemäß einem der Ansprüche 1 bis 13; und
- Berechnen bzw. Optimieren des Brillenglases nach dem berechneten Brillenglasdesign.

17. Verfahren gemäß Anspruch 16, wobei das Berechnen bzw. Optimieren des Brillenglases eine Minimierung der Zielfunktion:

$$F(\dot{\bar{x}}) = \sum_{i=1}^{m} \left[ g_{i,Ast}\left(Ast_i - Ast_{i,Soll}\right)^2 + \ldots \right]$$

umfaßt, wobei

$Ast_{i,soll}$ den Sollwert der lokalen astigmatischen Abweichung bzw. des lokalen astigmatischen Fehlers an der $i$-ten Bewertungsstelle;
$Ast_i$ den tatsächlichen Wert der lokalen astigmatischen Abweichung bzw. des lokalen astigmatischen Fehlers an der $i$-ten Bewertungsstelle;
$g_{i,Ast}$ die lokale Gewichtung der astigmatischen Abweichung bzw. des lokalen astigmatischen Fehlers an der $i$-ten Bewertungsstelle

bezeichnen.

18. Verfahren gemäß Anspruch 17, wobei für die lokale Gewichtung $g_{i,Ast}$

$$g_{i,Ast} = \frac{1}{Ast_{i,soll}^{p}}$$

gilt.

19. Verfahren gemäß einem der Ansprüche 16 bis 18, wobei die Berechnung bzw. Optimierung des Brillenglases ferner unter Berücksichtigung von individuellen Daten des Brillenträgers erfolgt.

**20.** Vorrichtung zum Herstellen eines progressiven Brillenglases, umfassend:

- Designberechnungsmittel, welche ausgelegt sind, ein Design für das progressive Brillenglas nach dem Verfahren zum Erzeugen bzw. Berechnen eines progressiven Brillenglasdesigns gemäß einem der Ansprüche 1 bis 13 zu berechnen; und
- Optimierungs- bzw. Berechnungsmittel, welche ausgelegt sind, ein Berechnen bzw. Optimieren des Brillenglases nach dem berechneten Design durchzuführen.

**21.** Computerprogrammerzeugnis, welches ausgelegt ist, wenn geladen und ausgeführt auf einem Computer, ein Verfahren zum Berechnen und Optimieren eines progressiven Brillenglases durchzuführen, wobei das Verfahren folgende Schritte umfaßt:

- Berechnen eines Designs für das progressive Brillenglas nach dem Verfahren zum Erzeugen bzw. Berechnen eines progressiven Brillenglasdesigns gemäß einem der Ansprüche 1 bis 13;
- Berechnen bzw. Optimieren des progressiven Brillenglases nach dem berechneten individuellen Design.

**Claims**

**1.** Computer-implemented method for generating or calculating a progressive spectacle lens design by means of a transformation of a starting design comprising:

• defining a starting design comprising:

○ specifications for the course of a principal line *HL* (10); and
○ specification of at least one base target isoastigmatism line $I_G$ (12, 14) with a constant base target astigmatism $A_G$ = *const,* wherein the base target isoastigmatism line $I_G$ runs through at least one first predetermined control point $\vec{r}_1 = (u_1, y_1)$ (16-24);

• transforming the starting design comprising the steps:

○ shifting the first control point $\vec{r}_1 = (u_1, y_1) \rightarrow \vec{r'}_1 = (u'_1, y'_1)$ along a predetermined or predeterminable curve, wherein the shift of the first control point $\vec{r}_1 = (u_1, y_1)$ is performed with consideration of design-and/or spectacle lens wearer-specific data;
○ modifying $I_G \rightarrow I'_G$ the course of the base target isoastigmatism line $I_G$ (12, 14) in such a manner that this runs through the shifted first control point $\vec{r'}_1 = (u'_1, y'_1)$, and
○ generating or calculating a target astigmatism distribution *A(u, y),* which exhibits the modified base target isoastigmatism line $I'_G$,

wherein

*x* denotes the horizontal coordinate;
*y* the vertical coordinate;
*u* the horizontal distance of a point (*x*, *y*) from the principal line, and
*A*(*u*, *y*) the target astigmatism distribution of the transformed starting design.

**2.** Method according to claim 1, wherein the design- and/or spectacle lens wearer-specific data that are to be taken into consideration during the shifting of the at least one control point $\vec{r}_1 = (u_1, y_1)$ comprise data relating to

• the weighting of the far and near zone and/or
• the application focuses of the spectacle lens and/or
• frame and centration data.

**3.** Method according to one of the preceding claims, wherein the curve, along which the at least one control point $\vec{r}_1 = (u_1, y_1)$ is shifted, is a straight line (26-34) so that

$$\bar{r}\,'_1 = \bar{r}_1 + t\bar{v}_{a,i}$$

applies, wherein

$\vec{v}_a$ denotes the outward direction vector of the straight line (26-34), along which the control point moves or can move;
$\vec{v}_i$ denotes the inward direction vector of the straight line (26-34), along which the control point moves or can move; and
t denotes the shift along the straight line (26-34) with the direction vector $t\vec{v}_{a,i}$.

4.  Method according to claim 3, wherein the parameter $t$ is calculated by means of the formula:

$$t = mt_{a,i} = \left(\frac{g_{F,N}}{50} - 1\right) t_{a,i}$$

wherein

$0 \le g_{F,N} \le 100$ applies,
$\vec{r}'_1 = \vec{r}_1 + mt_a\vec{v}_a$ applies for $50 < g_F, N \le 100$; and
$\vec{r}'_1 = \vec{r}_1 + mt_i\vec{v}_i$ applies for $0 \le g_F, N \le 50$,

and wherein

$g_F$ denotes the weighting of the far zone in per cent;
$g_N$ the weighting of the near zone in per cent;
$t_a$ denotes the maximum permissible shift outwards;
$t_i$ the maximum permissible shift inwards.

5.  Method according to one of the preceding claims, additionally comprising an adaptation $A_{max} \rightarrow A'_{max}$ of the maximum target astigmatism value $A_{max}$ as a function of the weighting of the far and/or the near zone.

6.  Method according to claim 5, wherein

$$A'_{max} = n(g_F,\ g_N)A_{max}$$

wherein

$n(g_F, g_N) = 1 + \dfrac{P_{Ast\,max}}{100}\dfrac{(g_F + g_N - 100)}{100}$ is a scale factor;
$g_F$ is the weighting of the far zone in per cent, wherein $0 \le g_F \le 100$;
$g_N$ is the weighting of the near zone in per cent, wherein $0 \le g_N \le 100$;
$P_{Ast\,max}$ is the maximum permissible adaptation in per cent, wherein $0 \le P_{Ast\,max} \le 50$.

7.  Method according to claim 4 and claim 6, wherein the weighting of the far zone $g_F$ and the weighting of the near zone $g_N$ are defined as a function of the customer's preferences and/or frame data.

8.  Method according to one of the preceding claims, wherein the target astigmatism values $A(u, y = const)$ are multiplied by a scale factor $s(u, y)$ in the points of each horizontal section, for which the conditions $u \ge u_1$ or $u \le -u_1$ are met.

9.  Method according to claim 8, wherein $f_2(y)$ is a double asymptote function with the parameters $a, b, c, d, m$, wherein

$$f_2(y) = b + \frac{a}{(1 + e^{c(y+d)})^m}$$

and

$$s(u,y) = f_0\left(1 + \frac{f_2(y)-1}{u_2-u_1}(u - u_1)\right)$$

apply,
wherein $|u_2| > |u_1|$.

10. Method according to one of the preceding claims, wherein the course of the base target isoastigmatism line $l_G$ is described by a one-dimensional function $u_G(y)$ and the course of the modified base target isoastigmatism line $l'_G$ is described by a one-dimensional function $u'_G(y)$; and wherein the base target isoastigmatism line runs through at least one polar or fixed point $\vec{r}_0 = (u_0, y_0)$, wherein at the polar or fixed point the conditions

$$u_G(y_0)=u'_G(y_0)$$

$$\frac{du_G(y_0)}{dy} = \frac{du'_G(y_0)}{dy}$$

are met.

11. Method according to one of the preceding claims, wherein the starting design comprises specifications for the target astigmatism values $A_0(u=0,y)$ along the principal line, and
wherein the generation or calculation of a target astigmatism distribution $A(u, y)$, which has the modified target isoastigmatism line (12, 14), comprises an interpolation between the target astigmatism values $A(u = 0, y)$ on the principal line (10) and the target astigmatism values on the modified base target isoastigmatism line (12, 14), wherein $A(u = 0, y) = A_0(u = 0, y)$ applies.

12. Method according to claim 12, wherein the interpolation is a linear, quadratic or cubic interpolation.

13. Method according to one of the preceding claims, additionally comprising a step of acquiring individual parameters of the spectacle wearer.

14. Device for generating or calculating a progressive spectacle lens design comprising design transformation elements, which are designed to perform a transformation of a predetermined starting design, wherein the starting design comprises:

- specifications for the course of a principal line $HL$ (10); and
- specifications for the course of at least one base target isoastigmatism line $l_G$ (12, 14) with a constant base target astigmatism $A_G = const$, wherein the base target isoastigmatism line $l_G$ runs through at least a first predetermined control point $\vec{r}_1= (u_1, y_1)$ (16-24); and

wherein the design transformation elements comprise:

- elements for changing the control point, which are designed to perform a shift $\vec{r}_1 = (u_1, y_1) \rightarrow \vec{r}'_1 = (u'_1, y'_1)$ of the position of the first control point $\vec{r}_1 = (u_1, y_1)$ along a predetermined or predeterminable curve, wherein the shift of the first control point $\vec{r}_1 = (u_1, y_1)$ is performed with consideration of design- and/or spectacle lens wearer-specific data;
- elements for calculating base target isoastigmatism lines, which are designed to calculate a modified base target isoastigmatism line $l'_G$ in such a manner that this runs through the shifted first control point $\vec{r}'_1 = (u'_1, y'_1)$,
- calculation elements, which are designed to perform a generation or calculation of a target astigmatism distribution $A(u, y)$, which exhibits the modified base target isoastigmatism line $l'_G$,

wherein

*x* denotes the horizontal coordinate;

*y* the vertical coordinate;

*u* the horizontal distance of a point (*x, y*) from the principal line, and

*A*(*u, y*) the target astigmatism distribution of the transformed starting design.

**15.** Computer program product, which when loaded and executed on a computer is designed to perform a method for generating or calculating a progressive spectacle lens design according to one of claims 1 to 13.

**16.** Method for producing a progressive spectacle lens comprising:

• calculating a design for the progressive spectacle lens using the method for generating or calculating a progressive spectacle lens design according to one of claims 1 to 13; and

• calculating or optimising the spectacle lens according to the calculated spectacle lens design.

**17.** Method according to claim 16, wherein the calculation or optimisation of the spectacle lens comprises a minimisation of the target function:

$$F(\bar{x}) = \sum_{i=1}^{m}\left[g_{i,Ast}(Ast_i - Ast_{i,target})^2 + ..\right]$$

wherein

$Ast_{i,\,target}$ denotes the target value of the local astigmatic deviation or the local astigmatic error at the i-th evaluation point;

$Ast_i$ denotes the actual value of the local astigmatic deviation or the local astigmatic error at the i-th evaluation point;

$g_{i,Ast}$ denotes the local weighting of the astigmatic deviation or the local astigmatic error at the i-th evaluation point.

**18.** Method according to claim 17, wherein the following applies for the local weighting $g_{i,Ast}$ :

$$g_{i,Ast} = \frac{1}{Ast_{i,target}^{p}} \cdot$$

**19.** Method according to one of claims 16 to 18, wherein the calculation or optimisation of the spectacle lens is additionally performed with consideration of individual data of the spectacle wearer.

**20.** Device for producing a progressive spectacle lens comprising:

• design calculation elements, which are designed to calculate a design for the progressive spectacle lens using the method for generating or calculating a progressive spectacle lens design according to one of claims 1 to 13; and

• optimisation or calculation elements, which are designed to perform a calculation or optimisation of the spectacle lens according to the calculated design.

**21.** Computer program product, which when loaded and executed on a computer is designed to perform a method for calculating and optimising a progressive spectacle lens design, wherein the method comprises the following steps:

• calculating a design for the progressive spectacle lens using the method for generating or calculating a progressive spectacle lens design according to one of claims 1 to 13;

• calculating or optimising the progressive spectacle lens according to the calculated individual design.

**Revendications**

**1.** Procédé implémenté d'un ordinateur pour la conception, respectivement le calcul, du design d'un verre de lunettes progressif au moyen d'une transformation d'un design de départ, comprenant :

- l'établissement d'un design de départ, comprenant :

- des directives pour la trajectoire d'une ligne principale *HL* (10) ; et
- la directive d'au moins une ligne de base d'iso-astigmatisme théorique $I_G$ (12, 14) comprenant une constante $A_G = const$ d'astigmatisme de base théorique, la ligne $I_G$ d'iso-astigmatisme de base passant par au moins par un premier point d'origine prédéterminé

$$r_1 = (u_1, y_1) \quad (16\text{-}24) \ ;$$

- la transformation du design de départ comprenant les étapes de :

- déplacement du premier point d'origine

$$r_1(u_1, y_1) \rightarrow r'_1(u'_1, y'_1)$$

le long d'une courbe prédéterminée, respectivement pouvant être prédéterminée, le déplacement du premier point d'origine

$$r_1 = (u_1, y_1)$$

étant réalisé en tenant compte de données de design et/ou de données spécifiques du porteur de lunettes ;
- modification $I_G \rightarrow I'_G$ de la trajectoire de la ligne de base d'iso-astigmatisme théorique $I_G$ (12, 14) de telle manière que celle-ci passe par le premier point d'origine déplacé $\vec{r}'_1(u'_1, y'_1)$, et
- conception, respectivement calcul, d'une distribution $A(u,y)$ d'astigmatisme de base théorique qui présente la ligne d'astigmatisme de base théorique modifiées $I'_G$.

où :

*x* est la coordonnée horizontale ;
*y* est la coordonnée verticale ;
*u* est la distance horizontale entre un point (*x,y*) et la ligne principale ; et
*A(u,y)* désigne la distribution de l'astigmatisme théorique du design de départ transformé.

2. Procédé selon la revendication 1 où les données de design et/ou les données spécifiques du porteur de lunettes, dont il est tenu compte lors du déplacement d'au moins un point d'origine

$$r_1 = (u_1, y_1),$$

comprennent des données concernant

- la pondération du domaine de la vue de loin et du domaine de la vue de près et/ou
- les points principaux d'utilisation du verre de lunettes et/ou
- les données de la monture et les données de centrage.

3. Procédé selon l'une des revendications précédentes où la courbe le long de laquelle au moins un point d'origine

$$r_1 = (u_1, y_1) \text{ est déplacé, est une droite (26-34) de}$$

sorte qu'on ait la relation

$$\vec{r}'_1 = \vec{r}_1 + t\vec{v}_{a,i},$$

où

$\vec{v}_a$ désigne le vecteur de direction vers l'extérieur des droites (26-34) le long duquel le point d'origine se déplace, respectivement peut se déplacer ; désigne le vecteur de direction vers l'intérieur $\vec{v}_i$ des droites (26-34) le long duquel le point de départ se déplace, respectivement peut se déplacer ;

$t$ désigne le déplacement le long de la droite (26-34) avec le vecteur de direction $\vec{v}_{a,i}$.

4. Procédé selon la revendication 3 où le paramètre t est calculé au moyen de la formule :

$$t = mt_{a,i} = (g_{F,N}/50 - 1)t_{a,i},$$

où on a

$$0 \leq g_{F,N} \leq 100$$

pour $50 < g_{F,N} \leq 100$, $\qquad \vec{r}'_1 = \vec{r}_1 + mt_a\vec{v}_a$ ; et

pour $0 < g_{F,N} \leq 50$ $\qquad \vec{r}'_1 = \vec{r}_1 + mt_i\vec{v}_i$ ,

et où

$g_F$ désigne la pondération du domaine de vue de loin en pourcentage ;
$g_N$ désigne la pondération du domaine de vue de près en pourcentage ;
$t_a$ désigne le déplacement maximal permissible vers l'extérieur ;
$t_i$ désigne le déplacement maximal permissible vers l'intérieur.

5. Procédé selon l'une des revendications précédentes comprenant en outre une adaptation $A_{max} \to A'_{max}$ de la valeur de l'astigmatisme théorique maximale en fonction de la pondération du domaine de vue de loin et/ou du domaine de vue de près.

6. Procédé selon la revendication 5 où :

$$A'_{max} = n(g_F, g_N)A_{max},$$

où

$$n(g_F, g_N) = 1 + \frac{P_{Ast\,max}}{100}\ \frac{(g_F + g_N - 100)}{100}$$

est un facteur d'échelle ;

$g_F$ est la pondération du domaine de vue de loin en pourcentage, où on a $0 \leq g_F \leq 100$
$g_N$ est la pondération du domaine de vue de près en pourcentage, où on a $0 \leq g_N \leq 100$
$P_{AST\,max}$ est l'accommodation maximale permissible en pourcentage, où on a $0 \leq P_{Ast\,max} \leq 50$.

7. Procédé selon la revendication 4 et la revendication 6 où la pondération du domaine de vue de loin $g_F$ et la pondération du domaine de vue de près $g_N$ sont fixées en fonction des préférences du client et/ou de données de la monture.

8.  Procédé selon l'une des revendications précédentes où les valeurs de l'astigmatisme théorique $A(u, y = const)$ sont multipliées par un facteur d'échelle $s(u,y)$ pour les points de chaque portion horizontale dans laquelle les conditions $u \geq u_1$ ou $u \leq -u_1$ sont réalisées.

9.  Procédé selon la revendication 8 où $f_2(y)$ est une fonction doublement asymptotique avec les paramètres $a, b, c, d, m,$ où on a :

$$f_2(y) \;=\; b \;+\; \frac{a}{(1 \;+\; e^{c\,(y+d)})^m}$$

et

$$s(u,y) \;=\; f_0\!\left(1 \;+\; \frac{f_2(y)\;-\;1}{u_2\;-\;u_1}(u\;-\;u_1)\right)$$

où $|u_2| > |u_1|$.

10. Procédé selon l'une des revendications précédentes où la trajectoire de la ligne d'astigmatisme théorique de base $l_G$ est décrite par une fonction unidimensionnelle $u_G(y)$ et où la trajectoire de la ligne d'astigmatisme théorique de base modifiée $l'_G$ est décrite par une fonction unidimensionnelle $u'_G(y)$ ; et où la ligne d'iso-astigmatisme théorique de base passe par au moins un point d'ancrage, respectivement un point fixe,

$$r_0 \;=\; (u_0, y_0) \;\; \text{où les relations}$$

$$u_G(y_0) \;=\; u'_G(y_0)$$

$$\frac{du_G(y_0)}{dy} \;=\; \frac{du'_G(y_0)}{dy}$$

sont réalisées pour le point d'ancrage, respectivement pour le point fixe.

11. Procédé selon l'une des revendications précédentes où le design de départ comprend des directives pour les valeurs de l'astigmatisme théorique $A_0(u = 0, y)$ le long de la ligne principale (10), et
où la conception, respectivement le calcul, d'une distribution de l'astigmatisme théorique $A(u,y)$, qui présente la courbe de l'astigmatisme théorique modifiée (12, 14), comprend une interpolation entre les valeurs de l'astigmatisme théorique $A(u = 0, y)$ sur la ligne principale (10) et les valeurs de l'astigmatisme théorique sur la ligne d'iso-astigmatisme théorique modifiée (12, 14), où on a $A(u = 0, y) - A_0(u = 0, y)$.

12. Procédé selon la revendication 12 où l'interpolation est une interpolation linéaire, quadratique ou cubique.

13. Procédé selon l'une des revendications précédentes comprenant en outre une étape de saisie de paramètres individuels du porteur de lunettes.

14. Dispositif pour la conception, respectivement le calcul, du design d'un verre de lunettes progressif comprenant des moyens de transformation du design qui sont prévus pour réaliser une transformation d'un design de départ prédéterminé, où le design de départ comprend :

 - des directives pour la trajectoire de la ligne principale $HL$ (10) ; et
 - des directives pour la trajectoire d'au moins une ligne d'iso-astigmatisme théorique de base $l_G$ (12, 14) avec un astigmatisme théorique de base constant $A_G = const$, où la ligne d'iso-astigmatisme théorique de base $l_G$

passe par au moins un premier point d'origine

$$r_1 = (u_1, y_1) \ (16\text{-}24) \ \text{prédéterminé ; et}$$

et

où les moyens de transformation du design comprennent :
- des moyens de modification de point d'origine qui sont prévus pour réaliser un déplacement

$$r_1(u_1, y_1) \rightarrow r'_1(u'_1, y'_1) \ \text{de la position du premier}$$

$$\text{point de départ}$$

$$r_1 = (u_1, y_1) \ \text{le long d'une courbe prédéterminée,}$$

respectivement d'une courbe pouvant être prédéterminée, où le déplacement du premier point de départ

$$r_1 = (u_1, y_1) \ \text{est fonction de données de design}$$

et/ou de données spécifiques au porteur du verre de lunette ;
- des moyens de calcul des lignes de base d'iso-astigmatisme théorique qui sont prévus pour calculer une ligne de base d'iso-astigmatisme modifiée $l'_G$ de telle sorte que celle-ci passe par le premier point de départ

$$r'_1(u'_1, y'_1) \ \text{déplacé ,}$$

- des moyens de calcul qui sont prévus pour réaliser une conception, respectivement un calcul, d'une distribution d'astigmatisme théorique $A(u,y)$ qui présente la ligne d'iso-astigmatisme théorique modifiée $l'_G$,

où

$x$ désigne la coordonnées horizontale ;
$y$ désigne la coordonnée verticale ;
$u$ désigne la distance horizontale entre un point $(x,y)$ et la ligne principale ; et
$A(u,y)$ désigne les valeurs de l'astigmatisme théorique du design de départ modifié.

**15.** Résultat un programme d'ordinateur qui est prévu, lorsqu'il est chargé et exécuté sur un ordinateur, réalise un procédé pour concevoir, respectivement calculer, un design de verre de lunettes progressif selon l'une des revendications de 1 à 13.

**16.** Procédé pour la fabrication d'un verre de lunettes progressif comprenant :

- le calcul d'un design pour le verre progressif selon le procédé pour la conception, respectivement le calcul, du design d'un verre de lunettes progressif selon l'une des revendications de 1 à 13 ; et
- le calcul, respectivement l'optimisation, du verre de lunettes d'après le design du verre de lunettes calculé.

**17.** Procédé selon la revendication 16 où le calcul ; le calcul, respectivement l'optimisation du verre de lunette désigne une minimisation de la fonction cible :

$$\vec{F(x)} = \sum_{i=0}^{m} [g_{i,Ast}(Ast_i - Ast_{i,théorique})^2 + \dots]$$

où

$Ast_{i,théorique}$ désigne la valeur théorique de la déviation astigmatique locale, respectivement l'erreur astigmatique locale, à la i$^{ème}$ position de détermination ;

$Ast_i$ désigne la valeur réelle de la déviation astigmatique locale, respectivement l'erreur astigmatique locale, à la i$^{ème}$ position de détermination ;

$g_{i,Ast}$ désigne la pondération locale de la déviation astigmatique, respectivement de l'erreur astigmatique locale, à la i$^{ème}$ position de détermination.

**18.** Procédé selon la revendication 17 où la pondération locale $g_{i,Ast}$ est telle que

$$g_{i,Ast} = \frac{1}{ASt^{P}_{i,\,théorique}}.$$

**19.** Procédé selon l'une des revendications de 16 à 18 où le calcul, respectivement l'optimisation, du verre de lunette s'effectue en tenant compte de données individuelles du porteur de lunettes.

**20.** Dispositif pour la fabrication d'un verre de lunette progressif comprenant :

- des moyens de calcul de design qui sont prévus pour concevoir un design pour le verre de lunette progressif d'après le procédé, respectivement pour calculer un design de verre de lunettes progressif selon l'une des revendications de 1 à 13 ; et
- des moyens d'optimisation, respectivement de calcul, qui sont prévus pour réaliser un calcul, respectivement une optimisation, du verre de lunette d'après le design calculé.

**21.** Résultat d'un programme d'ordinateur qui est prévu, lorsqu'il est chargé et exécuté sur un ordinateur, pour calculer un procédé et optimiser un verre de lunette progressif, où le procédé comporte les étapes suivantes :

- le calcul d'un design pour le verre de lunette progressif d'après le procédé pour la conception, respectivement pour le calcul, d'un design de verre de lunettes progressif selon l'une des revendications de 1 à 13 ;
- le calcul, respectivement l'optimisation, d'un verre de lunettes progressif d'après le design individuel calculé.

Fig.1

Fig. 2a

Fig. 2b

Fig. 3

Fig. 4a

Fig. 4b

Fig. 5a

Fig. 5b

Fig. 6a

Fig. 6b

Fig. 7a

Fig. 7b

Faktor für Sollasti(u,y)

**Fig. 7c**

Fig. 8a

Fig. 8b

Faktor für Sollasti (u,y)

Fig. 8c

EP 2 389 609 B1

36

¿ Grenzen zur Variation der Astlinien

Grenzen der Astlvariation

FreeSign — zeichnen

Grenzlnien zeichnen — Sollasti belegen

0.25 dpt-Vorgaben zeichnen — Grenzbereich

0.50 dpt-Vorgaben zeichnen — Grenzbereich — Steig. Asti

Simulation Minkwitz in PZ — 0.4790  0.0000

u05 = u + k*g(dA/du)*(uMink - u)   k = 1.00

Gewichtungen   Prozent   Extrem

| Fernteil | 50.0 | | |
| A1-Gauss Maxim | | | |
| Nahteil | 50.0 | | |
| FaktorAsi(Dynamik) | | | |

auto. Design   0   45   90   135   180

Designzahl

|A1|

Koeffiziente

44

46

48

Grenzen für die Steuerpunkte — Defaultwerte

| Fernbereich | uP1 | yP1 | uP | yP | uP2 | yF2 |
|---|---|---|---|---|---|---|
| 0.25 - Innen | -2.00 | 3.00 | -2.50 | 4.50 | -3.00 | 6.00 |
| 0.25 - Aussen | 0.00 | -3.00 | 1.50 | -4.00 | 3.00 | -5.00 |
| 0.5 - Inner | -1.00 | 2.86 | -1.75 | 5.43 | -2.50 | 10.00 |
| 0.5 - Aussen | 2.29 | -2.00 | 4.00 | -3.00 | 5.71 | -4.00 |

Nehbereich

delta(u) für 0.5 dpt Astilinie:   Fakt.innen 0.67   Fakt.aussen 1.50

FreeSign

ILT Raum-Office A1F= -0.8

ILT Raum-Office A1F= -0.4

ILT Schlauch

ILT 40-Losen

A1(OF) 0.00   A1(ON) -2.50

Addition 2.50   Add.efi 2.50

Y0_Vergl 0.00   y0_Mink 0.00

y0_Vergl = y0_Mink

Add engleichen   Iso-Astiwert 0.50

38

40

42

Asti us auf der VorderFlaeche

Objektabstandsmodell   AutoDesign.cfg einlesen

FitA1_freieOE   A1 autom. an freie OE anpasse

0.000000e+00   ResetDicEO

Uebernehmen   Abbrechen

**Fig. 9**

## lokales Gewicht = 1/Ast^p

Fig. 10

<u>48</u>

| Anpassen lokales Gewicht | |
|---|---|
| GW=1/SollAst**P, Potenz = | 0.05000000 |
| GW=1/SollAst**P, AstMin = | 0.05000000 |
| GW=1/SollAst**P, AstMax = | 1.00000000 |
| zus. GewichtHL = | 0.00000000 |
| zus. GewichtBN = | 0.00000000 |
| zus. Gewicht Fernteil | 0.00000000 |
| Änderung Halbwertsbreite FT | 0.00000000 |
| zus. Gewicht Nahtteil | 0.00000000 |
| Änderung Halbwertsbreite NT | 0.00000000 |

50

52

54

O.K.   Abbrechen

## Fig. 11

mittl. Brechwert S0

Fig. 12a-1

Fig. 12a-2

Fig. 12a-3

**mittl. Brechwert S0**

Fig. 12b-1

Fig. 12b-2

Fig. 12b-3

Fig. 13a

Fig. 13b

Spline der Asti=0.50-Isolinie um den Prog.-Kanal:

|  | temporal | nasal |
|---|---|---|
| ymax-Fernteil | -4.00000 | -4.00000 |
| ymin-Nahteil | -10.00000 | -10.00000 |
| y-Schrittweite | 1.00000 | 1.00000 |
| delta (u-Versch.) | 0.10000 | 0.10000 |

Vorgaben für Spline eingeben

Vorgaben aus Istwerten

56

⌐

○ GST - Werte

○ Pseudo-Minkwitz

○ Minkwitz dS0(y)/d\

◉ Minkwitz d(A1-Akk

## Fig. 14a

┌ Fernteil-Isolinien (0.25/0.50 dpt) sind: ─────┐

◉ Polyn.    ○ Arctan    ○ "beides"

Symmetrie der Asti-Vorga

○ Nas =! Temp ○ Tem

58

┌ Darstellung im Äußeren Bereich: ─────────

◉ Standard    ○ Kegelstumpf ○

Übergang er

◉ linear

u05 zentral nach Minkwitz sonst Modell: u05 = u + k * g(dA/du) * (uMink - u)

☑ aktiv    min Steigung dA/du:    0.0100    k=    1.00

60

Allgemeine Vorgaben:    temporal    nas

Maximaler Astigmatismus:    1.21000    dpt    1.2

## Fig. 14b

Fig. 15

Fädelpunkte     temporal          Nahteil          nasal

| u | y | | a | Reihe 0.50 dpt | u | y | | a |
|---|---|---|---|---|---|---|---|---|
| 5.00000 | -20.00000 | mm | 3.50000 | | -5.00000 | -20.00000 | mm | -3.50000 |

      temporal       Fernteil     nasal

| u | y | arctan 0.25 dpt | u | y | | Lösung mit |
|---|---|---|---|---|---|---|
| 10.00000 | 9.00000 | mm | -10.00000 | 9.00000 | | ⊙ Least Squares |
| 17.00000 | 14.00000 | mm | -17.00000 | 14.00000 | | ○ Newton-Schema |
| y-Grenze23: | 1.00000 | | y-Grenze23: | 1.00000 | | |

arctan 0.50 dpt

| 10.00000 | 6.00000 | mm | -10.00000 | 6.00000 |
|---|---|---|---|---|
| 22.00000 | 9.00000 | mm | -22.00000 | 9.00000 |

66

## Fig. 16a

| Designzahl | Designdreieck | Steuerpunkte | | | | | |
|---|---|---|---|---|---|---|---|
| Fernbereich | uP1 | yP1 | | uP | yP | uP2 | yP2 |
| 0.25 - Innen | -2.00 | 3.00 | | -2.50 | 5.00 | -3.00 | 7.00 |
| 0.25 - Ausser | 0.00 | -3.00 | | 1.50 | -4.00 | 3.00 | -5.00 |
| 0.5 - Innen | -1.00 | 2.00 | | -1.75 | 4.50 | -2.50 | 7.00 |
| 0.5 - Aussen | 1.00 | -2.00 | | 1.75 | -3.00 | 2.50 | -4.00 |

Nahbereich

    delta(u) für 0.5 dpt Astilinie:     Fakt innen   0.67   Fakt aussen 1.50

68

## Fig. 16b

Fig. 17a

Fig. 17b

Fig. 17c

| Fädelpunkte | temporal | | | Nahteil | | nasal | |
|---|---|---|---|---|---|---|---|
| u | y | a | Reihe 0.50 dpt | u | y | a | |
| 12.50000 | -20.00000 | mm 3.50000 | | -12.50000 | -20.00000 | mm -3.50000 | |

| | temporal | Fernteil | nasal | | | |
|---|---|---|---|---|---|---|
| u | y | arctan 0.25 dpt | u | y | Lösung mit | |
| 8.00000 | 12.00000 | mm -8.00000 | 12.00000 | | ⦿ Least Squares | |
| 14.00000 | 21.00000 | mm -14.00000 | 21.00000 | | ○ Newton-Schema | |
| y-Grenze23: 1.00000 | | y-Grenze23: 1.00000 | | | | |

arctan 0.50 dpt

| 9.00000 | 8.00000 | mm -9.00000 | 8.00000 |
|---|---|---|---|
| 19.50000 | 16.00000 | mm -19.50000 | 16.00000 |

70

## Fig. 18

Fig. 19a

Fig. 19b

Fig. 19c

| Fädelpunkte | temporal | | | Nahteil | | nasal | | |
|---|---|---|---|---|---|---|---|---|
| u | y | | a | Reihe 0.50 dpt | u | y | | a |
| 2.99900 | -20.00000 | mm | 3.50000 | | -2.99900 | -20.00000 | mm | -3.50000 |

| | temporal | | Fernteil | nasal | | | Lösung mit |
|---|---|---|---|---|---|---|---|
| | u | y | arctan 0.25 dpt | u | y | | |
| | 10.00000 | 7.80000 | mm | -10.00000 | 7.80000 | | ⊙ Least Squares |
| | 18.20000 | 12.00000 | mm | -18.20000 | 12.00000 | | ○ Newton-Schema |
| | y-Grenze23: | 1.00000 | | y-Grenze23: | 1.00000 | | |

| | | arctan 0.50 dpt | | | | | |
|---|---|---|---|---|---|
| 10.40000 | 5.20000 | mm | -10.40000 | 5.20000 | |
| 23.00000 | 7.40000 | mm | -23.00000 | 7.40000 | |

72

## Fig. 20

Fig. 21a

Fig. 21b

Fig. 21c

| Fädelpunkte | temporal | | | Nahteil | | nasal | | |
|---|---|---|---|---|---|---|---|---|
| u | y | | a | Reihe 0.50 dpt | u | y | | a |
| 2.99900 | -20.00000 | mm | 3.50000 | | -2.99900 | -20.00000 | mm | -3.50000 |

| | temporal | | | Femteil | | nasal | | |
|---|---|---|---|---|---|---|---|---|
| u | y | | exp | Polynom 0.25 dpt | u | y | | exp |
| 15.00000 | 7.50000 | mm | 2.00000 | | -15.00000 | 7.50000 | mm | 2.00000 |
| y-Grenze23: | 1.00000 | mm | | | y-Grenze23: | 1.00000 | mm | |

| | temporal | | | | | nasal | | |
|---|---|---|---|---|---|---|---|---|
| u | y | | exp | Polynom 0.50 dpt | u | y | | exp |
| 17.75000 | 4.50000 | | 2.00000 | | -17.75000 | 4.50000 | | 2.00000 |

74

# Fig. 22

Fig. 23a

Fig. 23b

Fig. 23c

| Fädelpunkte | temporal | | | Nahteil | | nasal | |
|---|---|---|---|---|---|---|---|
| u | y | | a | Reihe 0.50 dpt  u | y | | a |
| 2.33200 | -20.00000 | mm 3.50000 | | -2.33200 | -20.00000 | mm | -3.50000 |

| | temporal | | | Fernteil | | nasal | |
|---|---|---|---|---|---|---|---|
| u | y | | exp | Polynom 0.25 dpt  u | y | | exp |
| 15.00000 | 7.50000 | mm 2.00000 | | -15.00000 | 7.50000 | mm | 2.00000 |
| y-Grenze23: | 1.00000 | mm | | y-Grenze23: | 1.00000 | mm | |

| | temporal | | | | | nasal | |
|---|---|---|---|---|---|---|---|
| u | y | | exp | Polynom 0.50 dpt  u | y | | exp |
| 17.75000 | 4.50000 | | 2.00000 | -17.75000 | 4.50000 | | 2.00000 |

76

## Fig. 24

Fig. 25a

Fig. 25b

Fig. 25c

Elngabe  Ausgabe

Manfred Mustermann  Kunde / Bestellwerte / aktuelle Brille / Design Profiler

78

Für welche Tätigkeiten bzw. Sehanforderungen nutzen Sie Ihre Brille ?
Die Anzahl der Punkte pro Bereich bestimmt dessen Wichtigkeit beim Sehen.

Bitte verteilen Sie maximal 9 Punkte auf die vier unten angegebenen Bereiche.

① ② ③ ④ ⑤ ⑥ ⑦ ⑧ ⑨

● ● ● ○ ○    Ferne

● ○ ○ ○ ○    mittlere Entfernungen

● ○ ○ ○ ○    Nähe

● ● ● ○ ○    Aktivverhalten

/ Drucken / zurück / weiter ▶

Fig. 26

Fig. 27

Fig. 28

EP 2 389 609 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2001057584 A
- EP 1277079 A
- WO 200808995 A
- WO 2008089996 A
- DE 102008015189